(19) Europäisches Patentamt
European Patent Office
Office européen des brevets

(11) **EP 3 248 702 B1**

(12) **EUROPEAN PATENT SPECIFICATION**

(45) Date of publication and mention
of the grant of the patent:
**28.07.2021 Bulletin 2021/30**

(51) Int Cl.:
***B21C 51/00*** *(2006.01)*

(21) Application number: **17176649.6**

(22) Date of filing: **26.03.2009**

(54) **STEEL PLATE QUALITY ASSURANCE SYSTEM AND EQUIPMENT THEREOF**

STAHLPLATTENQUALITÄTSSICHERUNGSSYSTEM UND SEINE VERWENDUNG

SYSTÈME D´ASSURANCE QUALITÉ DE PLAQUE D'ACIER ET SON UTILISATION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **31.03.2008 JP 2008089922
27.10.2008 JP 2008275037
28.10.2008 JP 2008276236
06.11.2008 JP 2008284940
03.02.2009 JP 2009022083
03.02.2009 JP 2009022084**

(43) Date of publication of application:
**29.11.2017 Bulletin 2017/48**

(62) Document number(s) of the earlier application(s) in
accordance with Art. 76 EPC:
**09728306.3 / 2 286 935**

(73) Proprietor: **JFE STEEL CORPORATION
Tokyo
100-0011 (JP)**

(72) Inventors:
• **NARIHARA, Koji
Tokyo 100-0011 (JP)**
• **AKITA, Toshikazu
Tokyo 100-0011 (JP)**
• **OKADA, Yukihiro
Tokyo 100-0011 (JP)**
• **WADA, Yutaka
Tokyo 100-0011 (JP)**
• **OBARA, Kouhei
Tokyo 100-0011 (JP)**
• **TAKAHASHI, Toru
Tokyo 100-0011 (JP)**

(74) Representative: **Haseltine Lake Kempner LLP
Bürkleinstrasse 10
80538 München (DE)**

(56) References cited:
**JP-A- H02 179 827**

EP 3 248 702 B1

**Description**

Technical Field

The present invention relates to a steel plate quality assurance system and equipment thereof, and specifically relates to an arrangement suitable as a quality assurance system of the whole area of a steel plate to be subjected to controlled rolling and accelerated cooling, and equipment thereof.

Background Art

In order to manufacture a steel plate having little deformation such as curvature deformation by controlling TMCP (Thermo Mechanical Control Process) or internal stress for improving strength and toughness of a steel plate with microstructure as a fine structure of which the crystal grain diameter is 1 $\mu$m or so, the start temperature of controlled rolling, finishing temperature, cooling start temperature of accelerated cooling, and cooling stop temperature need to be strictly managed, and accordingly, a measurement method for measuring the temperature of a steel plate with high precision, or cooling equipment of which an innovative placement of a thermometer has been made, has been employed as a manufacturing technique or equipment.

For example, with Japanese Examined Patent Application Publication No. 7-41303, description is made wherein, with regard to cooling control equipment of hot-rolled steel plate, in order to prevent defective shape due to curvature deformation in the plate-width direction at the time of cooling, steel plate temperature is measured, cooling water flow rate from each nozzle disposed above and below of the cooling equipment, cooling start, and cooling end are strictly controlled, and an optical fiber thermometer is disposed on the downstream side of a finishing mill, and on the upstream side and downstream side and the inside of the cooling equipment. Note that hereafter, unless otherwise stated, the upstream side and the downstream side mean that as to the advancing direction (also referred to as threading direction) of a steel plate manufacturing line placement is made on the upstream side and downstream side, respectively.

With Japanese Unexamined Patent Application Publication No. 10-5868, description is made wherein, with regard to a shape control method of a steel plate subjected to controlled cooling, a shape after cooling to normal temperature of a steel plate subjected to accelerated cooling is estimated from a shape immediately after cooling, and the temperature history of a steel plate, a thermometer for ensuring the shape of the following plate and measuring temperature of the upper and lower surfaces of a steel plate is disposed within the accelerated cooling equipment, and a temperature distribution meter (thermo-tracer) on the upper surface of the steel plate, and a thermometer on the upper surface of the steel plate are disposed immediately after the accelerated cooling equipment.

With Japanese Unexamined Patent Application Publication No. 2001-300627, description is made wherein, with regard to a steel plate cooling method, in order to realize improvement in the flatness of a steel plate shape, and uniformity of quality, controlled cooling is performed by suppressing scale thickness variance to 10 $\mu$m or less by descaling or application of a surface coating film after finishing rolling, and a radiation thermometer is disposed on the upstream side of the controlled cooling equipment as a surface thermometer.

Also, with Japanese Unexamined Patent Application Publication No. 52-117857, a method is described wherein temperature distributions in the rolling direction and the plate width direction only on the downstream side of the final finishing rolling are measured, temperature difference as to a request value is obtained, and with this as an index, and a portion deviating from this temperature difference index is discarded.

Incidentally, recently, with regard to heat-treated material (particularly, high nickel steel of which the quality sensitivity as to deviation of manufacturing conditions is high), manufacturing has been made by the direct quenching method, and there are more applications of TMCP for streamlining. Also, heretofore, the quality of a steel plate has passed by assuring a part thereof such as a central portion in the width direction, but the number of user requests for quality assurance of the whole area of a product plate has increased. Also, the strictness of requests thereof has been increased year by year.

Also, with a line pipe base plate, a shipbuilding material, and so forth, a nonconventional request for assuring strength variation within a steel plate to be a particular value or less has also emerged.

On the other hand, with regard to a steel plate, with manufacturing process thereof, the steel plate is passed through a continuous reheating furnace, a roughing mill, a finishing mill, a descaling device, an accelerated cooling equipment, and so forth, and accordingly, a temperature distribution on the plate surface or in the plate thickness direction readily becomes uneven, and as a result thereof, the quality also readily becomes uneven. Accordingly, in many conventional cases, for example, quality determination has been made wherein according to a radiation thermometer attached above a transportation line, temperature of the central portion in the plate-width direction of the steel plate is continuously measured in the rolling direction, and in the event that the measurement temperature only on the central portion thereof is included in a allowable temperature range, the quality determination of the whole of a steel plate is passed, and in the event of deviating from the allowable temperature range, the quality determination fails.

However, with quality determination using temperature measurement results by the above radiation thermometer, a particular portion (e.g., temperature of the central portion in the width direction of a steel plate) is measured by a radiation thermometer attached on the upper surface of the steel plate of the center in the transportation line width direction, the measurement temperature thereof and each of the management temperature ranges are compared, the quality determination is carried out only with the particular portion, and accordingly, the quality assurance of full-length full-width (whole area) is insufficient.

However, the quality of a steel plate is changed by the structure thereof being changed depending on conditions such as controlled rolling, accelerated cooling, and so forth, and particularly, it has been known that of the conditions, the temperature of a steel plate has a great impact on the quality thereof, and with a conventional method described in the above Japanese Unexamined Patent Application Publication No. 52-117857, even when a temperature history that a steel plate during rolling receives is changed, temperature only on the downstream side of the final finishing rolling is evaluated, and accordingly, if determination is made with temperature difference on the downstream side of this finishing rolling, there are many cases deviating from quality to be originally assured regarding partially collected products from the large plate of a steel plate, and sufficient quality assurance cannot be realized, which causes major concerns. Also, such as described in an embodiment of Japanese Examined Patent Application Publication No. 7-41303, the temperature of any one surface of the upper surface of a steel plate, or the lower surface of a steel plate is measured, and accordingly, with regard to an extremely-thick steel plate having great plate thickness, there is a case where evaluation cannot be performed regarding difference between the temperature of the upper surface of a steel plate, and the temperature of the lower surface of the steel plate, demand has also been strong regarding quality assurance in the plate thickness direction.

Also, a steel plate such as a pipe plate is manufactured in large quantities by the same manufacturing conditions, and accordingly, with a conventional method for determining various types of quality with test specimens collected from each position of the tip, middle, and tall tip, in the rolling direction, there are cases where it takes several days after the test specimens of a steel plate are collected, and if determination were to become impossible, all steel plates manufactured during the period thereof might fail, resulting in massive defective plates.

Also, quality variance equivalent to temperature variance is taken into consideration, and with a quality design, in order to provide a margin as to the lower limit specifications of material property (e.g., mechanical property), extra alloying elements need to be added, and manufacturing cost becomes expensive. Further, the target temperature range of acceptance/rejection is narrowed, and accordingly, there is a problem such that a material having strict quality specifications cannot be manufactured at accelerated cooling process after rolling.

JP H02 179827A discloses steel plate quality assurance equipment in accordance with the preamble of each of independent claims 1 and 3. The temperature distribution in the thickness direction of a steel sheet is calculated by a temperature distribution arithmetic means from the heat transfer rate at an actual cooling water amount, calculated from the relation between the cooling water amount obtained by the actual temperature of the sheet at the inlet of a cooler detected by a temperature detecting means and the first arithmetic means and the heat transfer rate of the sheet. As a result, the temperature distribution of the sheet being cooled is kept at a predetermined distribution at all times.

The present invention has been made in the light of the problem on quality assurance such as described above, to solve the problem thereof, and it is an object thereof to provide a steel plate online quality assurance system capable of rapidly determining the quality of a steel plate subjected to finishing rolling and accelerated cooling to assure the quality thereof.

Also, it is an object of the present invention to provide a steel plate quality assurance system for accurately measuring steel plate temperature on a manufacturing line to evaluate uniformity of quality by predicting quality within the plate surface of a steel plate from the obtained temperature distribution.

Also, it is an object of the present invention to provide steel plate quality assurance equipment capable of operating control for improving quality uniformity in the plate thickness direction of a steel plate and within the steel plate surface by suitably disposing a thermometer form measuring steel plate temperature at a steel plate manufacturing line.

Also, in the light of these problems of conventional techniques, it is an object of the present invention to provide a steel plate quality assurance method wherein steel plate temperature is measured at the manufacturing line, the temperature of the whole area of the upper and lower surfaces of a steel plate is calculated from the measured steel plate temperature, and based on the temperature of the calculated whole area, quality within the plate surface of a steel plate is evaluated, and the quality thereof is determined and assured.

Disclosure of Invention

The issue of the present invention may be achieved by the following means.

  1. Steel plate quality assurance equipment comprising, together with a steel plate manufacturing line including a finishing mill, and accelerated cooling equipment installed on the downstream side of the finishing mill as to the advancing direction of the steel plate manufacturing line: temperature measurement means configured to measure steel plate temperature; and measured temperature analyzing means configured to analyze the measured steel plate temperature; characterized in that a scanning radiation thermometer and a spot type radiation thermometer each of which is made up of a plurality of high-temperature thermometers and low-temperature thermometers are disposed on the downstream side in the advancing direction of the steel plate manufacturing line of said accelerated cooling equipment.

2. The steel plate quality assurance equipment according to the above 1, wherein a spot type radiation thermometer and a scanning radiation thermometer installed on the downstream side in the advancing direction of the steel plate manufacturing line of said accelerated cooling equipment are each made up of a plurality of high-temperature thermometers, which measure a temperature range between 200 °C and 700 °C, and low-temperature thermometers, which measure a temperature range between 50 °C and 300 °C.

3. Steel plate quality assurance equipment comprising, together with a steel plate manufacturing line including a finishing mill and accelerated cooling equipment disposed above a transportation line on the downstream side of said finishing mill as to the advancing direction of the steel plate manufacturing line: temperature measurement means configured to measure steel plate temperature at least on the upstream side or downstream side of said finishing mill, and at least on the upstream side or downstream side of said accelerated cooling equipment; and measured temperature analyzing means configured to analyze the steel plate temperature measured by said temperature measurement means; characterized in that said temperature measurement means includes a plurality of optical fiber radiation thermometers installed at least on the upstream side or downstream side of said finishing mill, and at least on the upstream side or downstream side of said accelerated cooling equipment, and installed at least on the lower surface side of said transportation line in the line width direction with an arbitrary interval; and in that said measured temperature analyzing means obtains steel plate temperature from the temperatures measured at said temperature measurement means.

4. The steel plate quality assurance equipment according to any one of the above 1 through 3, wherein, with said temperature measurement means, as to the advancing direction of the steel plate manufacturing line, a spot type radiation thermometer is disposed on the upstream side of said finishing mill, a spot type radiation thermometer and a scanning radiation thermometer are disposed on the downstream side of said finishing mill, and on the upstream side and downstream side of said accelerated cooling equipment above the transportation line of said steel plate manufacturing line, a spot-type optical fiber thermometer is disposed below said transportation line at a position where the spot type radiation thermometer and scanning radiation thermometer face sandwiching said transportation line, a plurality of said spot-type optical fiber thermometers disposed at a position facing said scanning radiation thermometer are disposed in the scanning direction of said scanning radiation thermometer with an appropriate interval, and said measured temperature analyzing means obtains a temperature distribution of the whole of a steel plate from temperatures measured at said temperature measurement means.

5. The steel plate quality assurance equipment according to the above 1 or 2, wherein as to the advancing direction of the steel plate manufacturing line, said temperature measurement means is made up of a spot type radiation thermometer installed above the upper surface side of a steel plate of a steel plate manufacturing line, and installed on the upstream side of the finishing mill, and a spot type radiation thermometer and a scanning radiation thermometer installed on the downstream side of the finishing mill, and the upstream side and downstream side of the accelerated cooling equipment, and said measured temperature analyzing means is made up of means for obtaining a temperature distribution of the whole of the steel plate from steel plate temperatures measured by each of said temperature measurement means.

6. The steel plate quality assurance equipment according to the above 1 or 2, wherein said temperature measurement means includes a plurality of optical fiber radiation thermometers installed on the lower surface side of a transportation line of said steel plate manufacturing line on the downstream side of said finishing mill, and the upstream side and downstream side of said accelerated cooling equipment in the line width direction with an arbitrary interval, and said measured temperature analyzing means is made up of means for obtaining a temperature distribution of the whole of a steel plate from steel plate temperatures measured by said plurality of optical fiber radiation thermometers.

7. The steel plate quality assurance equipment according to any one of the above 1 through 3, wherein said temperature measurement means is made up of a spot type radiation thermometer and a scanning radiation thermometer installed at respective positions on the downstream side of the finishing mill and on the upstream side and downstream side of the accelerated cooling equipment above the upper surface side of a steel plate of the steel plate manufacturing line, an optical fiber radiation thermometer installed on the lower surface side of the steel plate of the steel plate manufacturing line at a position corresponding to the spot type radiation thermometer on the upper surface side of said steel plate, and a plurality of optical fiber radiation thermometers installed at a position corresponding to said scanning radiation thermometer in the line width direction with an arbitrary interval, and said measured temperature analyzing means is made up of means for obtaining a temperature distribution of the whole of the steel plate from steel plate temperatures measured by each of said temperature measurement means.

8. The steel plate quality assurance equipment according to any one of the above 1 through 3, wherein said temperature measurement means is made up of a spot type radiation thermometer installed on the upstream side of the finishing mill above the upper surface side of a steel plate of the steel plate manufacturing line, a spot type radiation thermometer and a scanning radiation thermometer installed at respective positions on the downstream side of the finishing mill and the downstream side of the accelerated cooling equipment, an optical fiber radiation thermometer installed at respective positions on the lower side of the steel plate of said steel plate manufacturing line, corresponding to the spot type radiation thermometer on the upper surface side of said steel plate, and a plurality of optical fiber radiation thermometers installed on the lower surface side of the steel plate of the steel plate manufacturing line at respective positions corresponding to said scanning radiation thermometer in the line width direction with an arbitrary interval, and said measured temperature analyzing means is made up of means for obtaining a temperature distribution of the whole of the steel plate from steel plate temperatures measured by each of said temperature measurement means.

9. The steel plate quality assurance equipment according to the above 1 or 2, wherein said temperature measurement means is made up of a spot type radiation thermometer and a scanning radiation thermometer installed on the downstream side of said accelerated cooling equipment above the upper surface side of a steel plate of the steel plate manufacturing line, an optical fiber radiation thermometer installed on the lower surface side of the steel plate of said steel plate manufacturing line at a position corresponding to the spot type radiation thermometer on the upper surface side of said steel plate, and a plurality of optical fiber radiation thermometers installed at positions corresponding to said scanning radiation thermometer in the line width direction with an arbitrary interval, and said measured temperature analyzing means is made up of means for obtaining a temperature distribution of the whole of the steel plate from steel plate temperatures measured by each of said temperature measurement means.

10. The steel plate quality assurance equipment according to the above 1 or 2, wherein said temperature measurement means is made up of a spot type radiation thermometer and a scanning radiation thermometer installed at respective positions on the upstream side and downstream side of said accelerated cooling equipment above the upper surface side of a steel plate of the steel plate manufacturing line, an optical fiber radiation thermometer installed at a position corresponding to the spot type radiation thermometer on the upper surface side of said steel plate, on the lower surface side of the steel plate of said steel plate manufacturing line, and a plurality of optical fiber radiation thermometers installed at a position corresponding to said scanning radiation thermometer in the line width direction with an arbitrary interval, and said measured temperature analyzing means is made up of means for obtaining a temperature distribution of the whole of the steel plate from steel plate temperatures measured by each of said temperature measurement means.

11. The steel plate quality assurance equipment according to any one of the above 1 through 3, wherein said temperature measurement means is made up of a spot type radiation thermometer and a scanning radiation thermometer installed at respective positions on the downstream side of the finishing mill, and on the downstream side of the accelerated cooling equipment above the upper surface side of a steel plate of a steel plate manufacturing line, an optical fiber radiation thermometer installed on the lower surface side of the steel plate of said steel plate manufacturing line at a position corresponding to a spot type radiation thermometer on the upper surface side of said steel plate, and a plurality of optical fiber radiation thermometers installed at a position corresponding to said scanning radiation thermometer in the line width direction with an arbitrary interval, and said measured temperature analyzing means is made up of means for obtaining a temperature distribution of the whole of the steel plate from steel plate temperatures measured by each of said temperature measurement means.

12. The steel plate quality assurance equipment according to any one of the above 1 through 3, wherein said temperature measurement means is made up of a spot type radiation thermometer installed on the upstream side of the finishing mill, above the upper surface side of a steel plate of the steel plate manufacturing line, a spot type radiation thermometer and a scanning radiation thermometer installed at respective positions on the upstream side and downstream side of the accelerated cooling equipment, an optical fiber radiation thermometer installed on the lower surface side of the steel plate of said steel plate manufacturing line at a position corresponding to the spot type radiation thermometer on the upstream side of said finishing mill and on the upstream side and downstream side of said accelerated cooling equipment, and a plurality of optical fiber radiation thermometers installed at a position corresponding to said scanning radiation thermometer in the line width direction with an arbitrary interval, and said measured temperature analyzing means is made up of means for obtaining a temperature distribution of the whole of the steel plate from steel plate temperatures measured by each of said temperature measurement means.

13. The steel plate quality assurance equipment according to any one of the above 1 through 3, wherein said temperature measurement means is made up of a spot type radiation thermometer installed on the upstream side of the finishing mill, above the upper surface side of a steel plate of the steel plate manufacturing line, a spot type radiation thermometer and a scanning radiation thermometer installed on the downstream side of the accelerated cooling equipment, an optical fiber radiation thermometer installed on the lower surface side of the steel plate of said steel plate manufacturing line at a position corresponding to a spot type radiation thermometer on the upstream side of said finishing mill and on the downstream side of said accelerated cooling equipment, and a plurality of optical fiber radiation thermometers installed on a position corresponding to said scanning radiation thermometer in the line width direction with an arbitrary interval, and said measured temperature analyzing means is made up of means for obtaining a temperature distribution of the whole of the steel plate from steel plate temperatures measured by each of said temperature measurement means.

14. The steel plate quality assurance equipment according to any one of the above 1 through 13, said measured temperature analyzing means comprising: first temperature measurement means configured to measure a surface temperature distribution of one surface side of the upper surface of a steel plate, and the lower surface of the steel plate;

second temperature measurement means configured to measure surface temperature of measurement points of which the number of measurement points is smaller than measurement points to be measured by said first temperature measurement means, on a surface different from a surface to be measured by said first temperature measurement means; and means configured to calculate the surface temperature of a measurement location of said second temperature measurement means from measurement temperature by said first temperature measurement means, to obtain calculation error from the difference between the calculated temperature and the temperature measured by said second temperature measurement means, and to calculate surface temperature other than the measurement locations of said second temperature measurement means using this calculation error.

15. A steel plate manufacturing method employing the steel plate quality assurance equipment according to any one of the above 1 through 13, wherein, with manufacturing of a following steel plate, the running condition of at least one of a heating furnace, a finishing mill, and accelerated cooling equipment is controlled to prevent defective shape based on a steel plate temperature distribution measured by the steel plate quality assurance equipment.

16. The steel plate manufacturing method according to the above 15, wherein in order to prevent defective shape, in the event of a heating furnace, temperature of upper and lower surface of a steel plate and/or gas flow rate of upper and lower surface of the steel plate within the heating furnace is controlled, and in the event of a finishing mill, peripheral-speed of upper and lower surface of the steel plate and/or descaling water flow rate of upper and lower surfaces of the steel plate is controlled, and in the event of cooling equipment, at least one of water flow rate in the plate width direction, plate length direction or water flow rate of upper and lower surfaces of the steel plate is controlled.

According to the present invention, after finishing rolling, the quality and shape of a steel plate to be subjected to accelerated cooling or direct quenching may be improved across the whole area. Also, temperature acceptance of the whole area may be determined immediately after rolling, and accordingly, occurrence of extensive nonconformance may be prevented by controlling the temperature of the following steel plate thereafter, which is very effective industrially.

Also, according to the present invention, the quality of a steel plate subjected to finishing rolling and accelerated cooling may be determined and assured in a sure and rapid manner. That is to say, with the present invention, the quality of a steel plate is determined based on a temperature distribution on the whole area of the upper surface of the steel plate, and accordingly, the quality may be assured across the whole area of the steel plate. In addition, it may be determined immediately after finishing rolling and accelerated cooling whether or not the temperature of the whole area of a steel plate is included in an allowable range, and accordingly, there is provided a secondary effect wherein the temperature of a steel plate of the following plate and thereafter may be controlled with reference to this temperature, occurrence of extensive nonconformance plate may be prevented, the steel plate may effectively be manufactured with good yield, which is very effective industrially.

Also, according to the present invention, quality determination may be performed by online across the whole area of the upper surface and the lower surface of a steel plate. As a result thereof, with a quality design, alloying elements to be added may be reduced by reducing the margin cost of material property, and consequently, manufacturing cost may be reduced. Also, the target temperature range may be extended, and accordingly, a material having strict quality specifications can be manufactured at accelerated cooling process after rolling.

Further, temperature at cooling process of test specimens to be collected from a steel plate may be managed, and accordingly, improvement in precision of a quality design, and optimization of a component design may be realized.

Brief Description of Drawings

[Fig. 1] Fig. 1 is a diagram illustrating a flowchart of a quality assurance system of the present invention.
[Fig. 2] Fig. 2 is a diagram illustrating the procedure of temperature determination of the present invention.
[Fig. 3] Fig. 3 is a diagram illustrating an example of a PC display screen (display screen image) supporting temperature determination operation of the present invention.

[Fig. 4] Fig. 4 is a diagram illustrating a flowchart of processing in the event that a temperature determination NG portion occurs.

[Fig. 5] Fig. 5 is a diagram illustrating an example of a PC display screen in the event that a NG portion is passed at the flowchart illustrated in Fig. 4.

[Fig. 6] Fig. 6 is a diagram illustrating the outline of a temperature measurement system according to the present invention.

[Fig. 7] Fig. 7 is a diagram for describing the configuration of the temperature measurement system illustrated in Fig. 6.

[Fig. 8] Fig. 8 is a diagram illustrating a processing flow of an embodiment of the present invention.

[Fig. 9] Fig. 9 is a diagram illustrating an example of a processing flow of an embodiment of the present invention.

[Fig. 10] Fig. 10 is a diagram illustrating another example of a processing flow of an embodiment of the present invention.

[Fig. 11] Fig. 11 is a diagram illustrating another example of a processing flow of an embodiment of the present invention.

[Fig. 12] Fig. 12 is a diagram illustrating an example of a processing flow of an embodiment of the present invention.

[Fig. 13] Fig. 13 is a diagram illustrating another example of a processing flow of an embodiment of the present invention.

[Fig. 14] Fig. 14 is a diagram illustrating another example of a processing flow of an embodiment of the present invention.

[Fig. 15] Fig. 15 is a flowchart illustrating a procedure for measuring and calculating temperature at the whole area of the upper and lower surfaces of a steel plate.

[Fig. 16] Fig. 16 is a flowchart illustrating a processing procedure of a steel plate quality determination method according to the present invention.

[Fig. 17] Fig. 17 is a flowchart illustrating a processing procedure of temperature calculation of the whole area of the upper and lower surfaces of a steel plate.

[Fig. 18] Fig. 18 is a diagram for describing a calculation method of the temperature calculation value of the lower surface of a steel plate.

[Fig. 19] Fig. 19 is a diagram illustrating a positional relation between the temperature measurement value and the temperature calculation value of the lower surface of a steel plate in the plate-width direction.

[Fig. 20] Fig. 20 is a diagram illustrating a procedure example for calculating the correction value of a temperature calculation value between adjacent temperature measurement positions $w_i$, $w_{i+1}$ (i = 1, 2, ...) on the lower surface side of a steel plate.

[Fig. 21] Fig. 21 is a diagram for describing how to cut mesh on a steel plate.

[Fig. 22] Fig. 22 is a diagram for describing how to determine a temperature representative value on the upper surface side of a steel plate within mesh including a temperature measurement position of the lower surface of the steel plate.

[Fig. 23] Fig. 23 is a diagram illustrating the outline of a temperature measurement system according to the present invention.

[Fig. 24] Fig. 24 is a diagram for describing a method for manufacturing a steel plate which excels in a dimensional shape using the temperature measurement means illustrated in Fig. 23.

[Fig. 25] Fig. 25 is a diagram illustrating an embodiment of the outline of steel plate quality assurance equipment according to the present invention.

[Fig. 26] Fig. 26 is a diagram for describing a propagation step of temperature information according to the present invention.

[Fig. 27] Fig. 27 is a diagram illustrating an embodiment of the outline of steel plate quality assurance equipment according to the present invention.

[Fig. 28] Fig. 28 is a diagram for describing a propagation step of temperature information according to the present invention.

[Fig. 29] Fig. 29 is a diagram illustrating an embodiment of the outline of steel plate quality assurance equipment according to the present invention.

[Fig. 30] Fig. 30 is a diagram for describing a propagation flow of temperature information according to the present invention.

[Fig. 31] Fig. 31 is a diagram for describing a propagation flow of temperature information of the upper and lower surfaces of a steel plate according to the present invention.

[Fig. 32] Fig. 32 is a diagram illustrating an embodiment of the outline of steel plate quality assurance equipment according to the present invention.

[Fig. 33] Fig. 33 is a diagram for describing a propagation flow of temperature information according to the present invention.

[Fig. 34] Fig. 34 is a diagram for describing a propagation flow of temperature information of the upper and lower surfaces of a steel plate according to the present invention.

[Fig. 35] Fig. 35 is a diagram illustrating an embodiment of the outline of steel plate quality assurance equipment according to the present invention.

[Fig. 36] Fig. 36 is a diagram for describing a propagation flow of temperature information according to the present invention.

[Fig. 37] Fig. 37 is a diagram for describing a propagation flow of temperature information of the upper and lower surfaces of a steel plate according to the present invention.

[Fig. 38] Fig. 38 is a diagram illustrating an embodiment of the outline of steel plate quality assurance equipment according to the present invention.

[Fig. 39] Fig. 39 is a diagram for describing a propagation flow of temperature information according to the present invention.

[Fig. 40] Fig. 40 is a diagram for describing a propagation flow of temperature information of the upper and lower surfaces of a steel plate according to the present invention.

[Fig. 41] Fig. 41 is a diagram illustrating an embodiment of the outline of steel plate quality assurance equipment according to the present invention.

[Fig. 42] Fig. 42 is a diagram for describing a propagation flow of temperature information according to the present invention.

[Fig. 43] Fig. 43 is a diagram for describing a propagation flow of temperature information of the upper and lower surfaces of a steel plate according to the present invention.

[Fig. 44] Fig. 44 is a diagram illustrating an embodiment of the outline of steel plate quality assurance equipment according to the present invention.

[Fig. 45] Fig. 45 is a diagram for describing a propagation flow of temperature information according to the present invention.

[Fig. 46] Fig. 46 is a diagram for describing a propagation flow of temperature information of the upper and lower surfaces of a steel plate according to the present invention.

[Fig. 47] Fig. 47 is a diagram illustrating an embodiment of the outline of steel plate quality assurance equipment according to the present invention.

[Fig. 48] Fig. 48 is a diagram for describing a propagation flow of temperature Information according to the present invention.

[Fig. 49] Fig. 49 is a diagram for describing a propagation flow of temperature information of the upper and lower surfaces of a steel plate according to the present invention.

(Reference Numerals)

1: heating furnace
2: finishing mill
3: steel plate
4: CR cooling shower (Controlled Rolling Cooling Shower)
5: accelerated cooling equipment
6: scanning radiation thermometer disposed on the upstream side of finishing mill
6a, 6b, 6c, 6d: scanning radiation thermometer
7: spot type radiation thermometer disposed on the upstream side of finishing mill
7a, 7b, 7c, 7d: spot type radiation thermometer
8: optical fiber radiation thermometer disposed on the lower surface of a steel plate of the upstream side of finishing mill
8a, 8b, 8c, 8d: two or more optical fiber radiation thermometers disposed in the width direction
11: controlled rolling start temperature + finishing temperature collecting PC
12: cooling start temperature collecting PC
13: cooling stop temperature collecting PC
14, 14a: temperature experience analyzing PC
15, 15a, 15b, 15c: temperature collecting PC on the upper surface of a steel plate
16, 16a, 16b, 16c: temperature collecting PC on the lower surface of a steel plate
17: defective shape prevention control
18: acceptance/rejection determining device
24: large plate
25, 26, 27: test plate

28, 29, 30, 31: small plate
32, 33: heavy frame

Best Modes for Carrying Out the Invention

A quality assurance system according to the present invention includes temperature measurement means, temperature analysis means, and mechanical property determining means, a temperature MAP of the whole area of a steel plate is created by the temperature analysis means from steel plate temperature measured at the temperature measurement means, and based on the temperature MAP of the whole area of this steel plate, the quality of the whole area of the steel plate is evaluated by the mechanical property determining means.

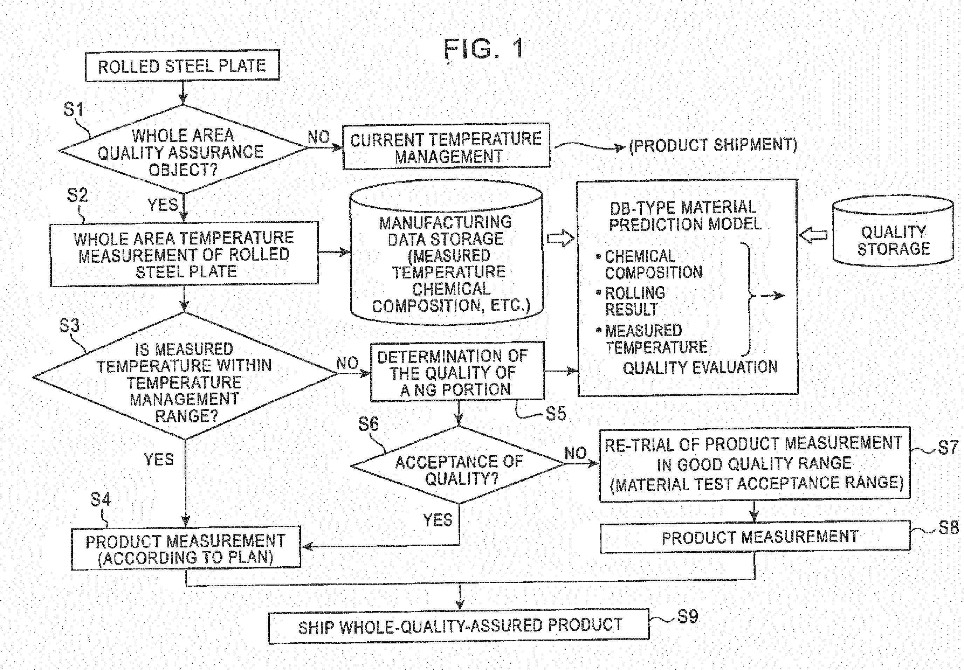

Fig. 1 is a flowchart illustrating the outline of the quality assurance system according to the present invention, and first, determination is made whether or not rolled steel plate to be manufactured is a whole-area quality assurance object plate (S1). Examples of the whole-area quality assurance object plate include a steel product of which the material is a DQ material such as line pipe base plate, shipbuilding 50K steel, DQ-type 9% Ni steel, or the like having high manufacturing conditions sensitivity of a material.

In the case of the whole-area quality assurance plate, the temperature measurement of the whole area of a rolled steel plate is executed using the temperature measurement means and the temperature analysis means (S2). With the quality assurance system according to the present invention, the temperature measurement means and the temperature analysis means are not restricted to particular one, but means having the following configuration are suitable.

(Temperature measurement means and temperature collecting means)

It is technically difficult to measure the temperature of the whole area of a steel plate at a manufacturing line, and accordingly, with the temperature measurement means, as thermometers, a spot type radiation thermometer and a scanning radiation thermometer are employed above a transportation line, a spot type radiation thermometer using an optical fiber (hereafter, optical fiber radiation thermometer) is employed below the transportation line, and accordingly, temperature measured at the multiple thermometers is collected, and accordingly, a process computer (hereafter, referred to as PC) is employed as temperature collecting means.

(Suitable temperature measurement means)

With the temperature measurement means, the above thermometers are combined as appropriate, and in order to assure the temperature history of the whole area on the manufacturing line, indispensable temperature measurement positions are disposed on (1) at least the upstream side or downstream side of a finishing mill, and (2) at least the upstream side or downstream side of cooling equipment.

Note that, with regard to the temperature of a steel plate, at least one of the upper and lower surfaces of a steel plate is measured, but In the event that temperature difference between the upper and lower surfaces of the steel plate is significant (e.g., the plate thickness of the steel plate is great), it can be conceived that the material properties of the upper and lower surfaces of the steel plate differ, and accordingly, the temperature of the steel plate is measured at the upper and lower surfaces of the steel plate. In this case, a spot type radiation thermometer and a scanning radiation thermometer are disposed above the transportation line, and a spot type radiation thermometer using an optical fiber (hereafter, referred to as optical fiber radiation thermometer) is disposed below the transportation line. Accordingly, with the steel plate manufacturing line, various thicknesses of steel plate are manufactured, but in order to perform quality assurance of these steel plates, it is desirable to dispose thermometers so as to measure temperature at the upper and lower surfaces of the steel plate.

Note that installing a thermometer on the upstream side of a finishing mill means that a thermometer is disposed in a position nearer the finishing mill than other devices, just proximal to the upstream side of the finishing mill as to the advancing direction (threading direction) of the steel plate manufacturing line. Also, installing a thermometer on the downstream side of the finishing mill means that a thermometer is disposed in a position nearer the finishing mill than other devices, just proximal to the downstream side of the finishing mill. This is true in the event of the accelerated cooling equipment. Hereafter, unless otherwise stated, the upstream side and the downstream side mean that as to the advancing direction (also referred to as threading direction) of a steel plate manufacturing line placement is made on the upstream side and downstream side, respectively.

(Installation of a high-temperature thermometer and a low-temperature thermometer)

One feature of the quality assurance system equipment according to the present invention is that the number of spot type radiation thermometers and the number of scanning radiation thermometers for measuring a width-direction temperature distribution to be disposed on the upstream side or downstream side of the accelerated cooling equipment are a single on the upstream side, and two or more of two specifications of for measurement of high-temperature and for measurement of low-temperature on the downstream side.

The steel plate temperature on the downstream side of the accelerated cooling equipment fluctuates from before and after 600 °C in a room temperature level, and in a wide range from low-temperature to high-temperature, and accordingly, temperature measurement needs to be performed in a wide range. However, only with a single existing thermometer, temperature measurement in a wide range from low-temperature to high-temperature (room temperature through 700 °C or so) cannot be performed with accurate resolution (preferably, $\pm 5$ °C). Therefore, it is desirable to install at least two types of thermometers for measurement of high-temperature and for measurement of low-temperature.

(Spot type radiation thermometer)

It is desirable to dispose a spot type radiation thermometer at least on the upstream side or downstream side of the finishing mill, above the transportation line, and at least on the upstream side or downstream side of the accelerated cooling equipment.

The number of spot type radiation thermometers to be disposed on the upstream side and downstream side of the finishing mill is suitably two or more, respectively. This is because in the event that the number of thermometers is one, rolling has to be stopped when the thermometer causes abnormalities, and accordingly, if the number of thermometers is two or more, one normal thermometer may still be utilized, and accordingly, with manufacturing of steel plates to be massively produced, trouble can be prevented so as not to massively produce defective plates. The installation positions of two or more thermometers thereof are not restricted to particular positions, but it is desirable to array these in the transportation direction of a steel plate.

(Scanning radiation thermometer)

It is desirable to dispose a scanning radiation thermometer for measuring a width-direction temperature distribution to dispose on the upper surface of the transportation line, and also on the downstream side of the finishing mill, and/or at least on the upstream side or downstream side of the accelerated cooling equipment. Note that preferably, if the scanning radiation thermometer is disposed approximate to a spot type radiation thermometer, mutual thermometer values can be comparatively referred, and accurate measurement can be performed. Note that the finishing mill subjects a steel plate to reverse rolling, even in the event that a scanning radiation thermometer is installed on the upstream side of the finishing mill instead of the downstream side of the finishing mill, the advantage of the present invention is not changed. Accordingly, it is desirable to provide a scanning radiation thermometer on at least the upstream side or downstream side of the finishing mill.

The reason why a width-direction thermometer is installed on the downstream side of the filling mill, and/or at least on the upstream side or downstream side of the accelerated cooling equipment is that these regions a temperature region where the quality is greatly changed, and also a temperature distribution readily occurs in the width direction, controlled rolling start temperature + rolling finishing temperature, and steel plate temperature to be measured on at least the upstream side or downstream side of the accelerated cooling equipment have great influence on the quality, and accordingly, quality uniformity needs to be assured by also performing temperature measurement in the steel plate width direction, according to uniformity of the temperature of the whole of a steel plate.

Therefore, in order to realize quality uniformity across the whole area of a steel plate, temperature needs to be measured in the width direction as well.

Accordingly, a scanning radiation thermometer is installed on the downstream side (6a) of the finishing mill, and at least on the upstream side or downstream side (6b, 6c, 6d) of the accelerated cooling equipment, above the upper surface side of the steel plate of the transportation line so as to scan the width direction of the steel plate. This is because according a scanning radiation thermometer being installed in the width direction, the temperature measurement of the whole area may be performed by the steel plate being moved in the longitudinal direction. Also, preferably, it is desirable to install a scanning radiation thermometer approximate to a spot type radiation thermometer. Thus, mutual check of thermometer malfunction detection may be performed, the reliability of measured temperature can be improved.

Note that as a scanning thermometer an existing thermometer such as a spin mirror type, linear array type, or the like should be selected as appropriate in accordance with a temperature measurement place.

Note that an infrared thermography device which can capture luminance to perform temperature measurement as a surface may be employed as a substitution of a scanning radiation thermometer which can measure temperature in the width direction.

(Optical fiber radiation thermometer)

One feature of the quality assurance system equipment according to the present invention is that an optical fiber radiation thermometer is installed at least on the upstream side or downstream side of the finishing mill, and at least on the upstream side or downstream side of the cooling equipment, and is installed on the lower surface side of the transportation line. Hereafter, the present invention will be described in detail.

It is desirable to dispose an optical fiber radiation thermometer below the manufacturing line. Below the manufacturing line has a poor temperature measurement environment particularly due to water, water vapor, or the like, it is markedly difficult to install a scanning type radiation thermometer for measuring the temperature of the whole area of the lower surface of a steel plate. Particularly, with just proximal to the finishing mill, cooling water is supplied massively, and accordingly, the environment of temperature measurement markedly deteriorates. Also, a great number of transportation rollers are installed on the manufacturing line, and accordingly, space where a thermometer is inserted is narrow, which is a reason for applying an optical fiber radiation thermometer.

Accordingly, it is desirable to dispose an optical fiber radiation thermometer at least on the upstream side or downstream side of the finishing mill, and at least on the upstream side or downstream side of the accelerated cooling equipment, and also below the transportation line, a position facing a spot type radiation thermometer disposed on the upper surface of the steel plate sandwiching the transportation line. This is because difference between the temperature on the upper surface of the steel plate and the temperature on the lower surface of the steel plate can be realized on the same place in the width direction, and accordingly, the quality in the plate thickness direction can be estimated, which is useful for quality assurance.

Alternatively, it is desirable to dispose two or more optical fiber radiation thermometers in a position facing a scanning radiation thermometer to be disposed on the downstream side of the finishing mill or at least on the upstream side or downstream side of the accelerated cooling equipment below the transportation line sandwiching the transportation line, in the scanning direction of the scanning radiation thermometer. Thus, the temperature distribution in the plate thickness direction can be realized two-dimensionally, temperature measurement and analysis can be performed from the whole area of the upper surface of a steel plate to the whole area of the lower surface of a steel plate.

Note that in order to measure temperature in the width direction of the lower surface of a steel plate, the greater the number of optical fiber radiation thermometers is, the more the details can be realized quantitatively, but it is desirable from the aspect of cost and maintenance to provide optical fiber radiation thermometers with an interval of one location /m or so in the width direction.

The measured temperature data measured by these thermometers is input to a process computer (PC), temperature distributions of the whole area of the upper surface of a steel plate, and the whole area of the lower surface of the steel plate are mapped by the measured temperature data, and analyzed temperature data analyzed and calculated based on the measured temperature data. Thus, the temperature of the whole area of a steel plate on the upstream side and downstream side of each device (finishing mill and accelerated cooling equipment) can be realized with half an eye.

(Quality assurance system)

Hereafter, with regard to the quality assurance system according to the present invention, the outline of the system thereof will be described with reference to the drawings.

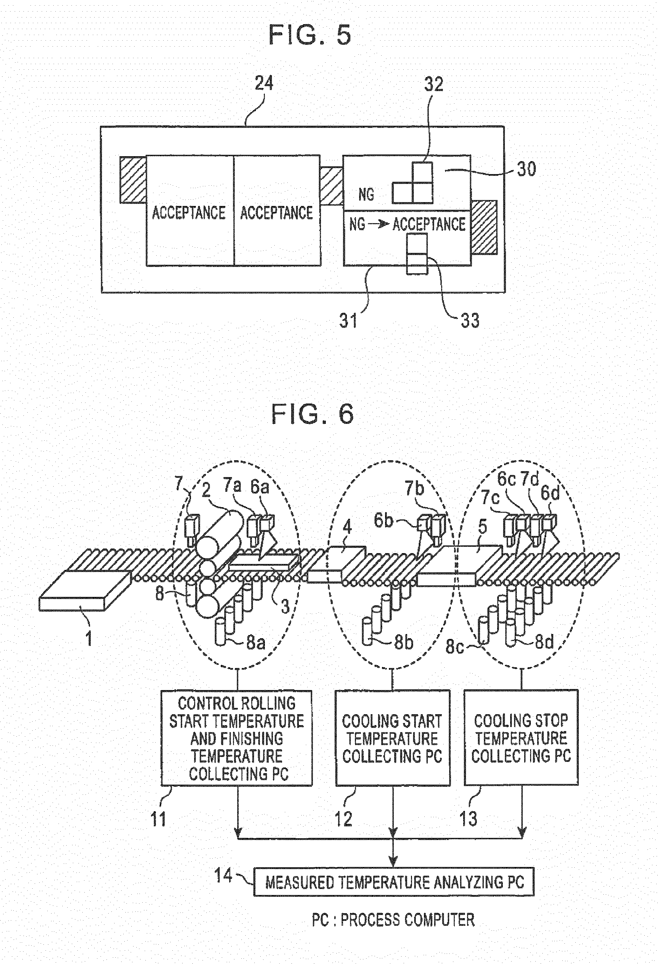

Fig. 6 illustrates, with this embodiment, the outline of the quality assurance system including the temperature measurement means (thermometer and temperature collecting means) and the temperature analysis means of a steel plate, and Fig. 6 illustrates a portion of the configuration of the temperature measurement means thereof. In this Fig. 6, 1 denotes a heating furnace, 2 denotes a finishing mill, 3 denotes a steel plate, 4 denotes cooling equipment between rolling passes (cooling equipment for controlled rolling, hereafter, referred to as CR cooling shower), 5 denotes an accelerated cooling equipment, 6a, 6b, 6c, and 6d denote scanning radiation thermometers, 6c is for measurement of high-temperature, 6d is for measurement of low-temperature, 8, 8a, 8b, 8c, and 8d denote optical fiber radiation thermometers, 8c is for measurement of high-temperature, 8d is for measurement of low-temperature, 7, 7a, 7b, 7c, and 7d denote spot type radiation thermometers, 11 denotes a controlled rolling start temperature + finishing temperature collecting process computer, 12 denotes a cooling start temperature collecting process computer, 13 denotes a cooling stop temperature collecting process computer, 14 denotes a temperature experience analysis process computer, 15 denotes a temperature collecting process computer of the upper surface of a steel plate, and 16 denotes a temperature collecting process computer of the lower surface of a steel plate. However, in the drawing, a roughing mill is omitted.

A steel plate manufacturing line includes the heating furnace 1, finishing mill 2, CR cooling shower 4, and cooling equipment 5, and Fig. 6 illustrates a state in which the steel plate 3 is positioned between the finishing mill 2 and the CR cooling shower 4.

The temperature measured at the steel plate temperature measurement means made up of the spot type radiation thermometers 7 and 7a disposed at least on the upstream side and the downstream side of the finishing mill 2, the scanning radiation thermometer 6a disposed on the downstream side, and the optical fiber radiation thermometers 8 and 8a is input to the controlled rolling start temperature + finishing temperature collecting process computer 11.

The temperature measured at the spot type radiation thermometer 7b, scanning radiation thermometer 6b, and optical fiber radiation thermometer 8b disposed on the upstream side of the accelerated cooling equipment 5 is input to the cooling start temperature collecting process computer 12.

The temperature measured at the temperature measurement means made up of the spot type radiation thermometers 7c and 7d, scanning radiation thermometers 6c and 6d, and optical fiber radiation thermometers 8c and 8d disposed on the downstream side of the accelerated cooling equipment 5 is input to the cooling stop temperature collecting process computer 13.

The temperature collecting means are made up of the controlled rolling start temperature + finishing temperature collecting process computer 11, cooling start temperature collecting process computer 12, and cooling stop temperature collecting process computer 13, each of which is made up of the temperature collecting process computer 15 of the upper surface of a steel plate, and the temperature collecting process computer 16 of the lower surface of the steel plate, and each of the collected temperature of the upper surface of the steel plate, and the collected temperature of the lower surface of the steel plate is input to the temperature experience analysis process computer 14 which is the temperature analysis means.

With the temperature experience analysis process computer 14, according to the measured temperature data input to the controlled rolling start temperature + finishing temperature collecting process computer 11, cooling start temperature collecting process computer 12, and cooling stop temperature collecting process computer 13, and analyzed temperature data analyzed and calculated based on the measured temperature data, temperature distributions of the whole area of the upper surface of the steel plate, and the whole area of the lower surface of the steel plate are mapped, and also in the event that desired quality is obtained through the temperature by quality prediction of a calculation model of mechanical property as to the temperature MAP thereof, determination is made whether or not the temperature is included in a temperature range (allowable temperature range), and in the event that the temperature is included in the allowable temperature range, product measurement is performed from a large plate of the steel plate thereof.

Note that, with finishing rolling, even in the event that a thermometer is disposed on either the upstream side or the downstream side of the mill, the measured temperature can be utilized as the controlled rolling start temperature and rolling finishing temperature.

That is to say, controlled rolling is not necessarily started from the first pass of finishing rolling, and may frequently be executed after rolling of multiple passes. In this case, determination is made using a thermometer disposed on one of the upstream side and the downstream side of the finishing mill whether or not temperature suitable for controlled rolling has been obtained, and thus, temperature at the time of starting controlled rolling can be determined, and also rolled finishing temperature at the time of end of rolling can be measured.

Further, there is a case of passing through the finishing mill without passes, the pass at the time of starting controlled rolling is not restricted to the threading direction of the manufacturing line, even in the event that a thermometer is disposed on either the upstream side or the downstream side of the mill, if the original rolling pass of controlled rolling is started from a thermometer installing direction, the start temperature of controlled rolling can be measured, and also, if the final pass is ended in the thermometer installing position, rolled finishing temperature can be measured.

Hereafter, specific embodiments of the steel plate quality assurance system and the equipment thereof will be described with reference to the drawings.

(First Embodiment)

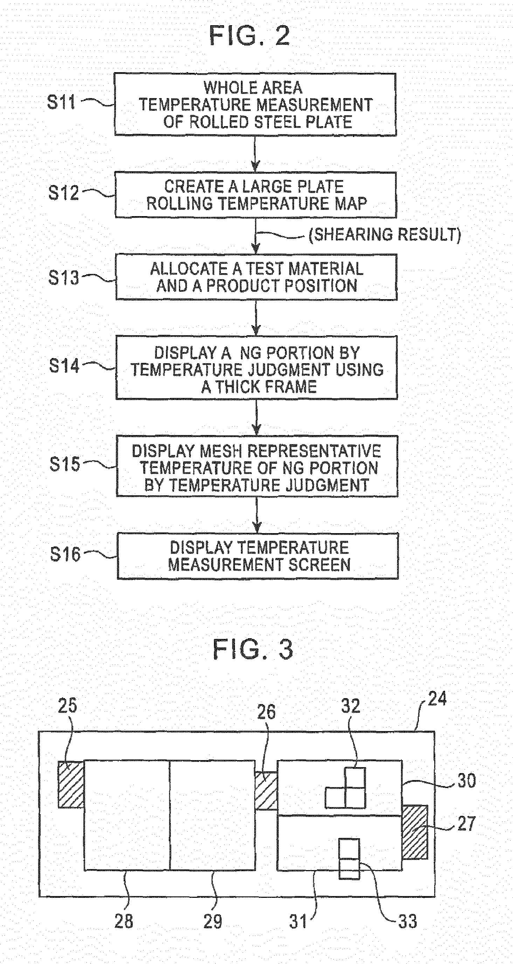

Figs. 2 and 3 describe temperature determining operation for performing determination of product shipment by comparing operating control temperature, and temperature measurement experience input to the temperature experience analyzing PC 14a as the creation procedure (Fig. 2) of a PC display screen (Fig. 3) for supporting this operation.

First, the temperature of the whole area is measured by the temperature measurement means described above (S11), and a temperature MAP of the whole area of a steel plate, the large plate 14 by the temperature analysis means (S12).

Subsequently, based on shearing experience, such as illustrated in Fig. 3, blank layout of a trial material 25 from the top of this large plate 24, a trial material 26 from the middle, a trial material 27 from the bottom, and products (small plates 28, 29, 30, and 31) is performed (S13).

Also, the temperature of a material position is calculated from the temperature MAP, material trial experience is correlated thereto, whereby the precision of a quality design, and a calculation model of mechanical property can be improved.

A region where experience temperature deviates from the operating control temperature, and a temperature determination NG (no-good) portion are surrounded with a heavy frame 32 or 33 (S14), mesh representative temperature is obtained (S15), and these are displayed on the screen (S16). Average temperature within mesh is taken as the mesh representative temperature, and the mesh is selected depending on applications as appropriate, but the size of the mesh is preferably 50 through 1000 mm.

Now, the mesh mentioned here indicates one small region at the time of dividing the whole area of a steel plate into small regions to create a temperature MAP of the whole area of the steel plate.

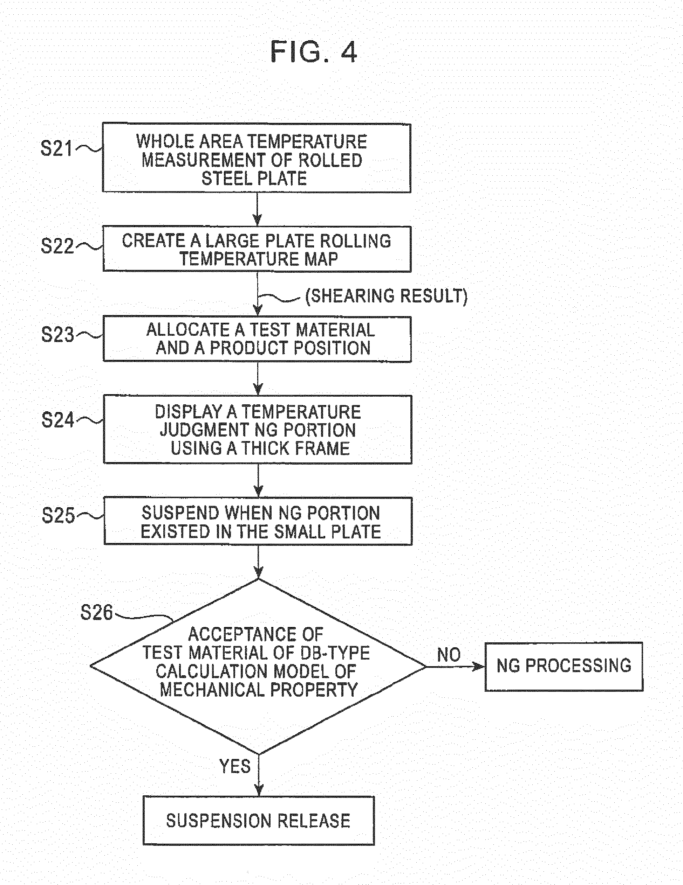

Fig. 4 is a flowchart for describing, in the event that a temperature determination NG portion has occurred on a small plate, a processing method of this portion, steps S21 through S24 conform to steps S11 through S14 in Fig. 2. In the event that a temperature determination NG portion is included in a small plate, NG is suspended (S25), and quality acceptance/rejection determination is performed at a DB type (database type) calculation model of mechanical property (S26), and in the case of acceptance, suspension is released to perform blank layout.

Fig. 5 illustrates an example of a PC display screen in the event that in accordance with the flowchart in Fig. 4, NG portions 32 and 33 within small plates 30 and 31 have been determined, and the NG portion 33 has passed.

On the other hand, in the event that a temperature determination NG portion is included in a large plate, this processing is taken as NG processing, and blank layout is corrected so as to perform product measurement within a good quality range (S7), and product measurement is performed (S8).

Such as described above, the quality assurance system according to the present invention performs quality prediction based on the accurately measured temperature distribution of the whole area of a steel plate, and an experience value, and a DB (database) type calculation model of mechanical property having high prediction precision is employed, and accordingly, a product of which the whole area has been subjected to quality assurance can be shipped (S9). Also, the shape may be improved across the whole area.

Note that Fig. 3 and Fig. 5 are an example of a PC display screen to be obtained from one procedure of the quality assurance system according to the present invention, and have an object for supporting an engineer to intervene in the present system, but all of the procedures may be performed by automatic control to realize a system in which no engineer intervenes.

According to the present invention, advantages are obtained such that the reject ratio of a material test decreases from 0.08% to 0.06%, curvature deformation correction time is reduced 20%, the defective shape of a steel plate is suppressed 1 0%, and so forth.


(Second Embodiment)

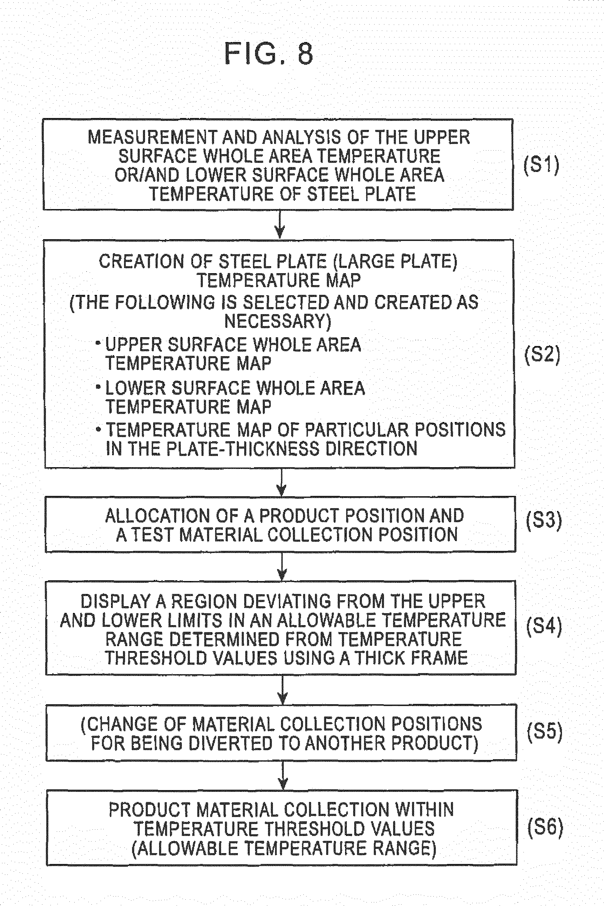

The processing flow of the steel plate quality assurance system according to this embodiment is illustrated in Fig. 8. Here, temperature measurement input to and analyzed at the temperature experience analysis process computer 14, analysis results (temperature MAP), and temperature threshold values set thereto are compared to perform acceptance/rejection determination of product shipment. Note that Fig. 3 is a process computer screen for visually displaying this processing.

First, the temperature of the whole area of the upper surface of a steel plate or the temperature of the whole area of the lower surface of a steel plate are measured and analyzed by the above temperature measurement means and temperature analysis means (S1), and the temperature MAP of the whole area of the upper surface of the steel plate (large plate 14) or the temperature MAP of the whole area of the steel plate are created by the temperature analysis means (S2). Here, the size of the mesh of the temperature MAP is selected depending on applications as appropriate, but the size is preferably 50 through 1000 mm. Incidentally, the mesh of the temperature MAP means one small region at the time of dividing the whole area of a steel plate into small regions to create the temperature MAP of the whole area of the steel plate.

Note that, in the event that the temperature distribution in the plate thickness direction is necessary, such as an extremely-steel plate having great plate thickness, in the above (S2) the temperature MAP of the whole area of the upper surface of a steel plate, the temperature MAP of the whole area of the lower surface of the steel plate, and the temperature MAP of a particular position in the plate thickness direction are created. At this time, in the above (S1), the temperature of the whole area of the upper surface of the steel plate, and the temperature of the whole area of the lower surface of the steel plate are measured and analyzed.

Next, such as illustrated in Fig. 3, allocation of blank layout of a tip collecting material for material test 25, a central portion collecting material for material test 26, a tail tip collecting material for material test 27, and products (small plates 28, 29, 30, and 31) is performed as to this large plate 24 (S3).

Note that the temperature of a collecting position for material test is calculated from the temperature MAP, and the material test results and the temperature MAP are correlated, whereby the precision of the quality design and quality prediction of a steel plate can be improved.

Next, temperature upper and lower limit values (temperature threshold values) indicating a particular allowable temperature range are set for each device upstream side or downstream side so as to correspond to the created temperature MAP, and a region of which the temperature deviates from the temperature threshold values is surrounded with a heavy frame 32 or 33 (S4).

Note that in the event that a heavy frame portion deviating from the allowable temperature range may be diverted to another product having an unexacting request, reallocation may be made by changing a collecting position according to a product (S5).

Subsequently, a plate of which the temperature is included in the temperature threshold values is collected as a product (S6).

Thus, with the steel plate quality assurance system according to this embodiment, the temperature distribution of the whole area of a steel plate accurately measured and analyzed is mapped and used to perform quality prediction based on a temperature experience value (temperature measured value), and accordingly, a whole-area-quality-assured product can be shipped. Also, the shape (flatness or the like) may also be improved across the whole area. With a conventional quality determination and assurance method, a product needs to be recreated from a large plate when a quality defective portion is mixed into a product collected from the large plate to some extent (e.g., 0.8% or so), recollecting of a product takes a great deal of trouble, recollected remaining material needs to be scrapped, and accordingly, yield is markedly deteriorated, but according to this embodiment, a quality defective portion at quality determination is markedly reduced to almost zero, and also a collected product can become a quality-assured product in a sure manner, efficiency is improved, yield is also good, and further, secondarily, an advantage is obtained such that the defective shape of a steel plate is prevented, and the advantage thereof is markedly great.

(Third Embodiment)

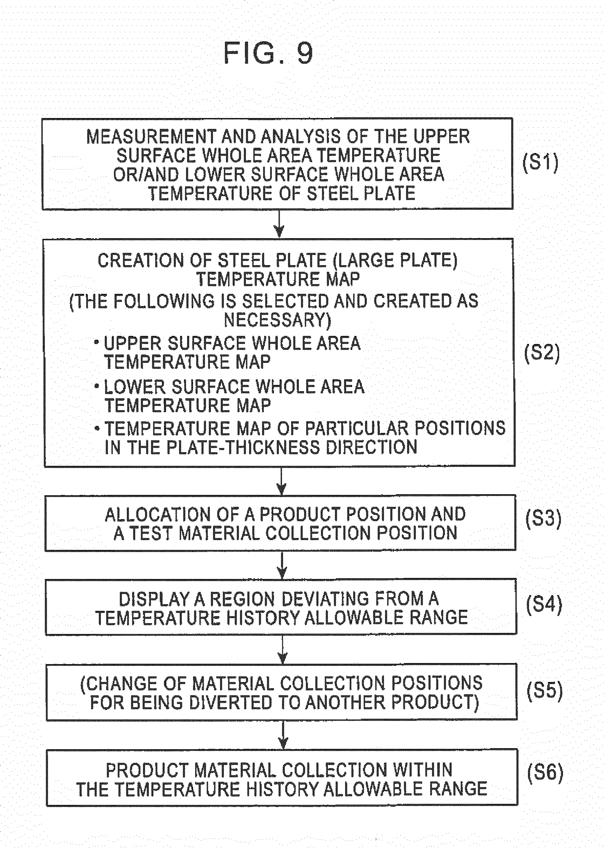

Fig. 9 illustrates an example of the processing flow of the steel plate quality assurance system according to this embodiment. Here, based on the temperature measurement input to and analyzed at the temperature experience analysis process computer 14, analysis results (temperature MAP), the temperature history obtained with creation of the temperature MAP, and an allowable range set to the temperature history thereof, acceptance/rejection of product shipment is performed. Note that Fig. 3 is a process computer screen for visually displaying this processing.

First, the temperature of the whole area of the upper surface of a steel plate or the temperature of the whole area of the lower surface of a steel plate are measured and analyzed by the above temperature measurement means and temperature analysis means (S1), and the temperature MAP of the whole area of the upper surface of the steel plate (large plate 24) or/and the temperature MAP of the whole area of the steel plate are created by the temperature analysis means (S2). Here, the size of the mesh of the temperature MAP is selected depending on applications as appropriate, but the size is preferably 50 through 1000 mm. Incidentally, the mesh of the temperature MAP means one small region at the time of dividing the whole area of a steel plate into small regions to create the temperature MAP of the whole area of the steel plate.

Note that, in the event that a temperature distribution in the plate thickness direction is necessary, such as an extremely-steel plate having great plate thickness, in the above (S2) the temperature MAP of the whole area of the upper surface of a steel plate, the temperature MAP of the whole area of the lower surface of the steel plate, and the temperature MAP of a particular position in the plate thickness direction are created. At this time, in the above (S1), the temperature of the whole area of the upper surface of the steel plate, and the temperature of the whole area of the lower surface of the steel plate are measured and analyzed.

Next, such as illustrated in Fig. 3, allocation of blank layout of a tip collecting material for material test 25, a central portion collecting material for material test 26, a tall tip collecting material for material test 27, and products (small plates 28, 29, 30, and 31) is performed as to this large plate 24 (S3).

Next, the temperature history of a steel plate is obtained from the temperature data of the steel plate passing through the upstream side or/and downstream side of each device used for creation of the temperature MAP, and also the allowable range of the temperature history is set by combining the allowable temperature range at the upstream side or/and downstream side of each device, and a region of which the temperature history deviates from the allowable range is surrounded with a heavy frame 32 or 33 (S4).

Note that in the event that a heavy frame portion deviating from the allowable range of the temperature history may be diverted to another product having an unexacting request, reallocation may be made by changing a collecting position according to a product (S5).

Subsequently, a small plate of which the temperature is included in the allowable temperature range is collected as a product (S6).

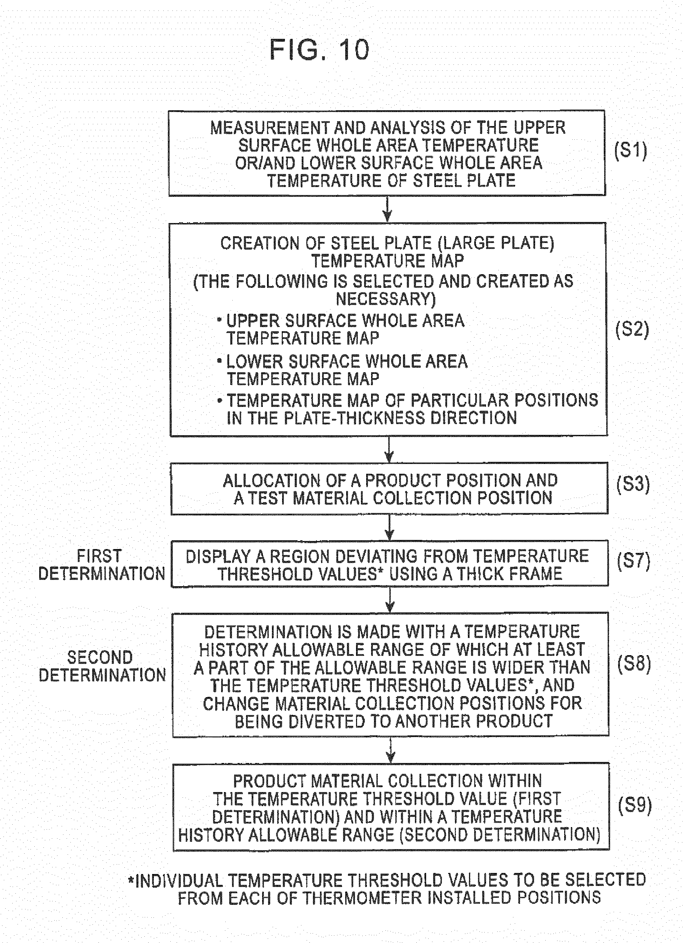

Fig. 10 illustrates another example of the processing flow of the steel plate quality assurance system according to this embodiment.

Here, such as illustrated in Fig. 10, temperature measurement and analysis of the whole area (S1), creation of a temperature MAP (S2), allocation of a product position and a test specimen position (S3) are performed in the same way as with Fig. 9, and subsequently, as first determination, temperature threshold values are set to perform quality determination regarding temperature of a particular position of the upstream side or downstream side of each device, and a region deviating from the temperature threshold values is displayed with a heavy frame (S7). Subsequently, as second determination, with regard to this heavy frame portion, the allowable range of a temperature history at least partially having a wider allowable range than the above temperature threshold values is employed, the temperature history at two or more positions on the upstream side or downstream side of each device is obtained, and based on the above temperature history allowable range, a product collecting position is determined (S8), and may also be diverted to another product having an unexacting request.

Subsequently, a small plate of which the temperature is included in the temperature threshold values at the first determination, and a small plate of which the temperature history is included in the temperature history allowable range are collected as products (S9).

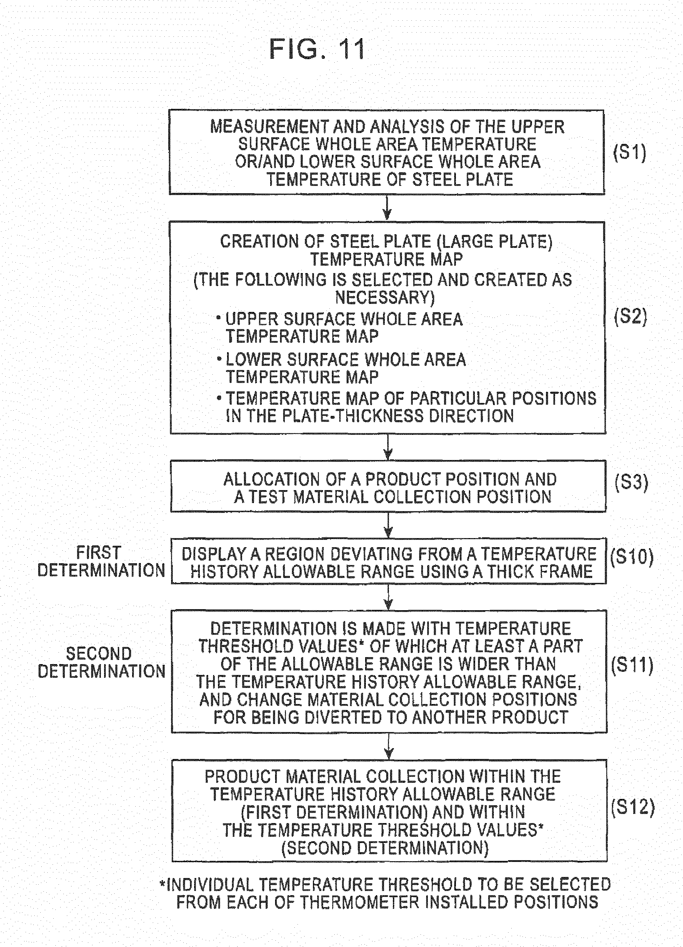

Fig. 11 illustrates another example of the processing flow of the steel plate quality assurance system according to this embodiment.

Here, such as illustrated in Fig. 11, temperature measurement and analysis of the whole area (S1), creation of a temperature MAP (S2), allocation of a product position and a test specimen position (S3) are performed in the same way as with Fig. 9, and subsequently, as first determination, a temperature history to be passed through the upstream side or downstream side of each device is obtained, a temperature history allowable range is set by combining the allowable temperature range of the upstream side or downstream side of each device to perform quality determination, and a region of which the temperature history deviates from the temperature history allowable range is displayed with a heavy frame (S10). Subsequently, as second determination, with regard to this heavy frame portion, temperature threshold values at least partially having a wider allowable range than the above temperature history allowable range is newly employed, and based on the temperature at a particular position on the upstream side or downstream side of each device, and the above temperature threshold values, a product collecting position is determined (S11), and may also be diverted to another product having an unexacting request.

Subsequently, a small plate of which the temperature history is included in the temperature history allowable range at the first determination, and a small plate of which the temperature is included in the temperature threshold values are collected as products (S12).

Thus, with the steel plate quality assurance system according to this embodiment, the temperature distribution of the whole area of a steel plate accurately measured and analyzed is mapped and used to perform quality prediction based on a temperature experience value (temperature measured value), and accordingly, a whole-area-quality-assured product can be shipped. Also, the shape (flatness or the like) may also be improved across the whole area.

With a conventional quality determination and assurance method, a product needs to be recreated from a large plate when a quality defective portion is mixed into a product collected from the large plate to some extent (e.g., 0.8% or so), recollecting of a product takes a great deal of trouble, recollected remaining material needs to be scrapped, and accordingly, yield is markedly deteriorated, but according to this embodiment, a quality defective portion at quality determination is markedly reduced to almost zero, and also a collected product can become a quality-assured product in a sure manner.

(Fourth Embodiment)

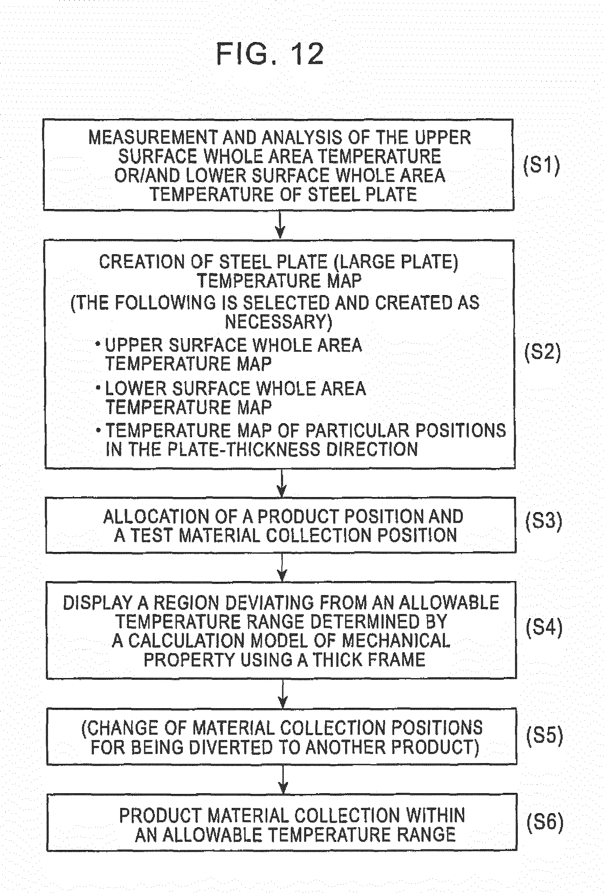

Fig. 12 illustrates an example of the processing flow of the steel plate quality assurance system according to this embodiment. Here, based on the temperature measurement input to and analyzed at the temperature experience analysis process computer 11, analysis results (temperature MAP), and quality prediction by a calculation model of mechanical property as thereto, acceptance/rejection of product shipment is performed. Note that Fig. 3 is a process computer screen for visually displaying this processing.

First, the temperature of the whole area of the upper surface of a steel plate or the temperature of the whole area of the lower surface of a steel plate are measured and analyzed by the above temperature measurement means and temperature analysis means (S1), and the temperature MAP of the whole area of the upper surface of the steel plate (large plate 24) or the temperature MAP of the whole area of the steel plate are created by the temperature analysis means (S2). Here, the size of the mesh of the temperature MAP is selected depending on applications as appropriate, but the size is preferably 50 through 1000 mm. Incidentally, the mesh of the temperature MAP means one small region at the time of dividing the whole area of a steel plate into small regions to create the temperature MAP of the whole area of the steel plate.

Note that, in the event that a temperature distribution in the plate thickness direction is necessary, such as an extremely-steel plate having great plate thickness, in the above (S2) the temperature MAP of the whole area of the upper surface of a steel plate, the temperature MAP of the whole area of the lower surface of the steel plate, and the temperature MAP of a particular position in the plate thickness direction are created. At this time, in the above (S1), the temperature of the whole area of the upper surface of the steel plate, and the temperature of the whole area of the lower surface of the steel plate are measured and analyzed.

Next, such as illustrated in Fig. 3, allocation of blank layout of a tip collecting material for material test 25, a central portion collecting material for material test 26, a tail tip collecting material for material test 27, and products (small plates 28, 29, 30, and 31) is performed as to this large plate 24 (S3).

Next, as to the created temperature MAP, the calculation model of mechanical property is used to determine whether or not the temperature is included in a temperature range (allowable temperature range) whereby the desired quality can be predicted to be obtained, and a region of which the temperature deviates from the allowable temperature range is surrounded with a heavy frame 32 or 33 (S4).

Note that in the event that a heavy frame portion deviating from the allowable temperature range may be diverted to another product having an unexacting request, reallocation may be made by changing a collecting position according to a product (S5).

Subsequently, a plate of which the temperature is included in the allowable temperature range is collected as a product (S6).

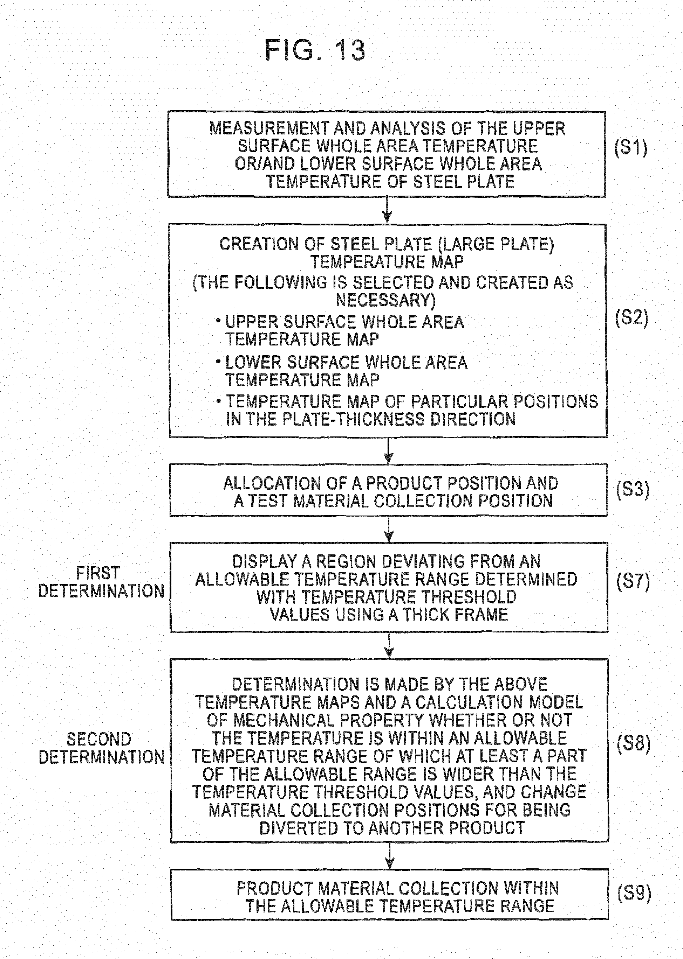

Fig. 13 illustrates another example of the processing flow of the steel plate quality assurance system according to this embodiment.

Here, such as illustrated in Fig. 13, temperature measurement and analysis of the whole area (S1), creation of a temperature MAP (S2), allocation of a product position and a test specimen position (S3) are performed in the same way as with Fig. 12, and subsequently, as first determination, temperature threshold values (first allowable temperature range) are set to perform quality determination regarding temperature of a particular position of the upstream side or downstream side of each device, and a region deviating from the first temperature allowable range determined by the temperature threshold values is displayed with a heavy frame (S7). Subsequently, with regard to this heavy frame portion, as second determination, a second allowable temperature range at least partially having a wider allowable range than the first allowable temperature range is set, the above temperature MAP and the calculation model of mechanical property are utilized to perform acceptance/rejection determination with the second allowable temperature range, and a product collecting position is determined (S8), and may also be diverted to another product having an unexacting request.

Subsequently, a small plate of which the temperature is included in the allowable temperature ranges (within the first allowable temperature range and within the second allowable temperature range) is collected as a product (S9).

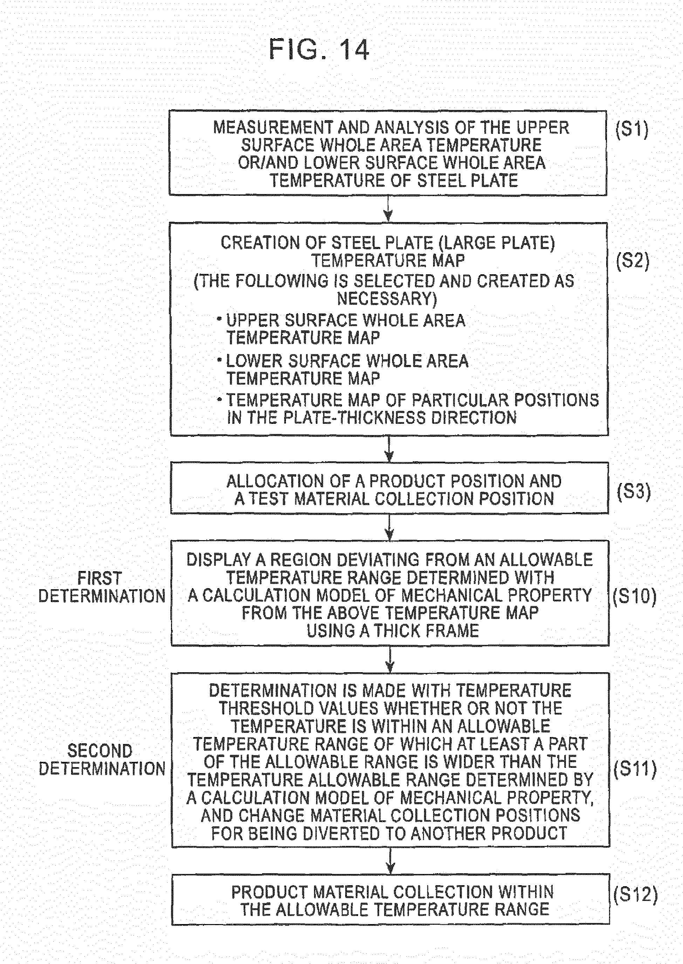

Fig. 14 illustrates another example of the processing flow of the steel plate quality assurance system according to this embodiment.

Here, such as illustrated in Fig. 14, temperature measurement and analysis of the whole area (S1), creation of a temperature MAP (S2), allocation of a product position and a test specimen position (S3) are performed in the same way as with Fig. 12, and subsequently, as first determination, regarding the temperature of a particular position on the upstream side or downstream side of each device, the above temperature MAP and the calculation model of mechanical property are utilized to perform acceptance/rejection determination, and a region deviating from the allowable temperature range (first allowable temperature range) is displayed with a heavy frame (S10). Subsequently, regarding this heavy frame portion, as second determination, a second allowable temperature range (temperature threshold values) having a wider allowable range than the first allowable temperature range is set to perform acceptance/rejection determination, a product collecting position is determined (S11), and may also be diverted to another product having an unexacting request.

Subsequently, a small plate of which the temperature is included in the allowable temperature ranges (within the first allowable temperature range and within the second allowable temperature range) is collected as a product (S12).

Thus, with the steel plate quality assurance system according to this embodiment, the temperature distribution of the whole area of a steel plate accurately measured and analyzed is mapped and used to perform quality prediction based on a temperature experience value (temperature measured value), and accordingly, a whole-area-quality-assured product can be shipped. Also, the shape (flatness or the like) may also be improved across the whole area.

With a conventional quality determination and assurance method, a product needs to be recreated from a large plate when a quality defective portion is mixed into a product collected from the large plate to some extent (e.g., 0.8% or so), recollecting of a product takes a great deal of trouble, recollected remaining material needs to be scrapped, and accordingly, yield is markedly deteriorated, but according to this embodiment, a quality defective portion at quality determination is markedly reduced to almost zero, and also a collected product can become a quality-assured product in a sure manner.

(Fifth Embodiment)

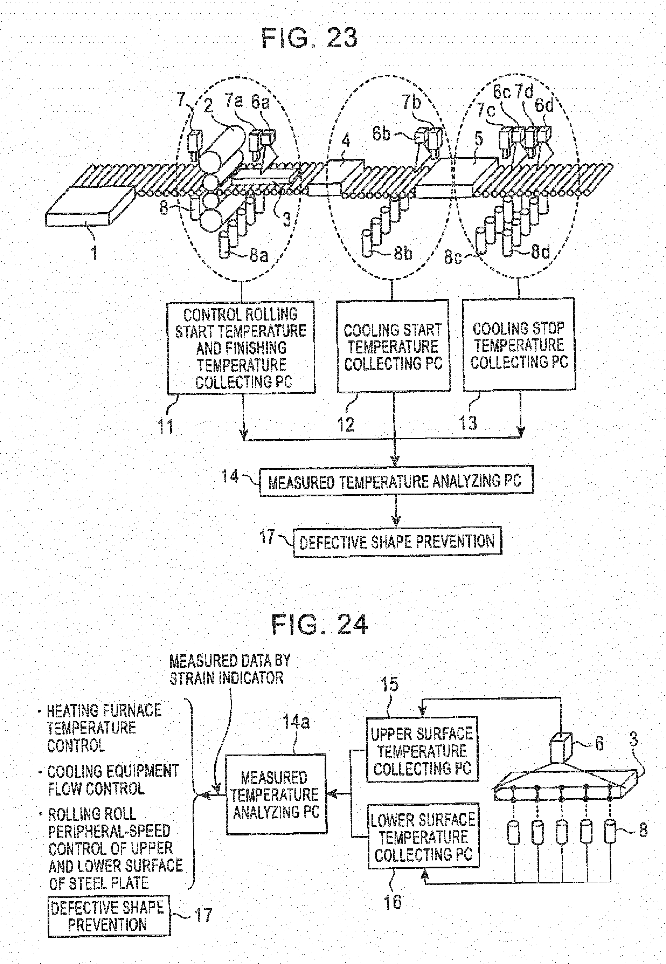

Fig. 23 illustrates the outline of a temperature measurement system according to the present invention including the above steel plate measurement means. In Fig. 23, 1 denotes a heating furnace, 2 denotes a finishing mill, 3 denotes a steel plate, 4 denotes a CR cooling shower, 5 denotes a cooling equipment, 6a, 6b, 6c, and 6d denote scanning radiation thermometers, 6c is for measurement of high-temperature, 6d is for measurement of low-temperature, 8, 8a, 8b, 8c, and 8d denote optical fiber radiation thermometers, 8c is for measurement of high-temperature, 8d is for measurement of low-temperature, 7, 7a, 7b, 7c, and 7d denote spot type radiation thermometers, 11 denotes a controlled rolling start temperature + finishing temperature collecting PC, 12 denotes a cooling start temperature collecting PC, 13 denotes a cooling stop temperature collecting PC, 14 and 14a denote temperature experience analyzing PCs, and 17 denotes defective shape prevention control.

A steel plate manufacturing line includes the heating furnace 1, finishing mill 2, CR cooling shower 4, and cooling equipment 5, and the drawing illustrates a state in which the steel plate 3 is positioned between the finishing mill 2 and the CR cooling shower 4.

The temperature measured at the steel plate temperature measurement means made up of the spot type radiation thermometers (7 and 7a) disposed on the upstream side and the downstream side of the finishing mill, the scanning radiation thermometer 6a disposed on the downstream side, and the optical fiber radiation thermometer 8a is input to the controlled rolling start temperature + finishing temperature collecting PC 11.

The temperature measured at the spot type radiation thermometer (7b), scanning radiation thermometer 6b, and optical fiber radiation thermometer 8b disposed on the upstream side of the cooling equipment 5 is input to the cooling start temperature collecting PC 12.

The temperature measured at the steel plate temperature measurement means made up of the spot type radiation thermometers (7c and 7d), scanning radiation thermometers 6c and 6d, and optical fiber radiation thermometers 8c and 8d disposed on the downstream side of the cooling equipment 5 is input to the cooling stop temperature collecting PC 13.

The controlled rolling start temperature + finishing temperature collecting PC 11, cooling start temperature collecting PC 12, and cooling stop temperature collecting PC 13 are each made up of the temperature collecting PC 15 of the upper surface of a steel plate, and the temperature collecting PC 16 of the lower surface of the steel plate, and each of the temperature of the upper surface of the steel plate, and the temperature of the lower surface of the steel plate are each input to the temperature experience analyzing PC 14a.

With actual equipment production, an operating control temperature (controlled rolling start temperature, steel plate finishing temperature, cooling start temperature, cooling stop temperature) range, and the temperature measurement experience input to the temperature experience analyzing PC 14a are compared, and quality determination is performed, thereby assuring the quality of the whole area.

Fig. 24 is a diagram for describing a method for manufacturing a steel plate which excels in a dimensional shape using the temperature measurement means illustrated in Fig. 23, and illustrates an example wherein the temperature of the upper surface of a steel plate, and the temperature of the lower surface of the steel plate, on the downstream side just approximate to the mill 2 and the accelerated cooling equipment 5 are measured by the scanning surface temperature 6 and the optical fiber radiation thermometer 8.

The temperature collecting PC 16 of the lower surface of the steel plate, the temperature collecting PC of the upper surface of the steel plate, and the temperature experience analyzing PC 14a obtain a temperature distribution of the upper surface of the steel plate, and of the lower surface of the steel plate from the measured temperature.

A strain indicator (steel plate dimensional shape measurement device) is installed on the downstream side just approximate to the mill 2 and the accelerated cooling equipment 5 to measure the steel plate dimensional shape, and a temperature distribution whereby a suitable dimensional shape is obtained is obtained beforehand.

With actual manufacturing, in 17, first, a temperature distribution on the downstream side of the mill 2 and the cooling equipment 5 is obtained. In the event that this temperature distribution differs from the temperature distribution whereby a suitable dimensional shape is obtained, with manufacturing of the following plate, the operating conditions of the heat furnace, mill 2, CR cooling shower 4, and accelerated cooling equipment 5 are adjusted. With the heating furnace, up-and-down temperature and/or up-and-down gas flow rate within the heating furnace is controlled, and with the mill 2, up-and-down peripheral-speed and/or descaling water flow rate is controlled, and with the CR cooling shower 4 and the cooling equipment 5, at least one of water flow rate in the plate width direction, plate length direction or up-and-down water flow rate is controlled.

According to the present invention, advantages are obtained such that the reject ratio of a material test decreases from 0.08% to 0.06%, curvature deformation correction time is reduced 20%, the defective shape of a steel plate is suppressed 10%, and so forth.

(Sixth Embodiment)

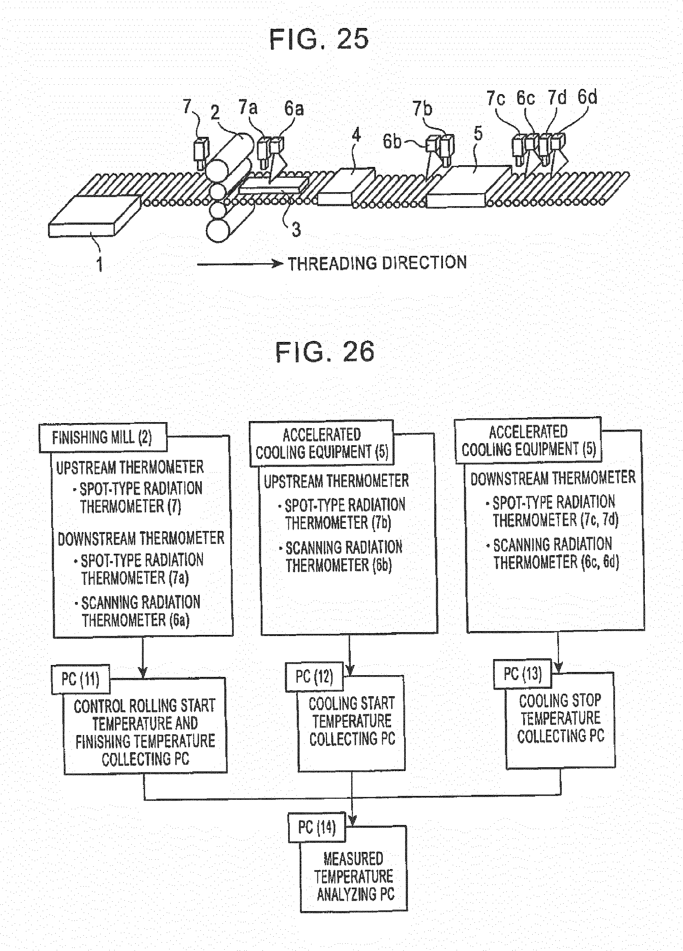

Fig. 25 illustrates the outline of a temperature measurement system according to the present invention including the above steel plate measurement means.

A steel plate manufacturing line includes the heating furnace 1, finishing mill 2, CR cooling shower 4, and accelerated cooling equipment 5, and Fig. 25 illustrates a state in which the steel plate 3 is positioned between the finishing mill 2 and the CR cooling shower 4.

6a, 6b, 6c, and 6d denote scanning radiation thermometers, 6a measures a temperature distribution in the width direction and the length direction of a steel plate immediately after finishing rolling, and the data thereof is, such as illustrated in Fig. 26, transmitted to the controlled rolling start temperature + finishing temperature collecting PC (process computer) 11. 6b is installed on the upstream side of the accelerated cooling equipment, and measures a temperature distribution in the width direction and in the length direction of the upper surface of the steel plate immediately before accelerated cooling, and the data thereof is transmitted to the cooling start temperature collecting PC 12, 6c and 6d are installed on the downstream side of the accelerated cooling equipment, 6c denotes a high-temperature thermometer, 6d denotes a low-temperature thermometer, both of which measure a temperature distribution in the width direction and in the length direction of the upper surface of the steel plate immediately after accelerated cooling, and the data thereof is transmitted to the cooling stop temperature collecting PC 13. 6c is used for the temperature management of an accelerated cooling material, and 6d is used for the temperature management of a direct quenching material.

Next, a step wherein the steel plate temperature information measured at each thermometer is transmitted to a PC will be described with reference to Fig. 26. 11 denotes a controlled rolling start temperature + finishing temperature collecting PC, 12 denotes a cooling start temperature collecting PC, 13 denotes a cooling stop temperature collecting PC, and 14 denotes a temperature experience analyzing PC.

The steel plate temperature information measured at the spot type radiation thermometers 7 and 7a installed on the upstream side and the downstream side of the finishing mill, and the scanning radiation thermometer 6a installed on the downstream side of the finishing mill is transmitted to the controlled rolling start temperature + finishing temperature collecting PC 11, where rolling temperature management such as controlled rolling start temperature, rolled finishing temperature, and so forth, and management of the temperature distribution of the upper surface of the steel plate in the width direction and in the length direction of the steel plate immediately after rolling measured at the scanning radiation thermometer 6a are performed.

The steel plate temperature information measured at the spot type radiation thermometer 7b and the scanning radiation thermometer 6b, installed on the upstream side of the accelerated cooling equipment 5 is transmitted to the cooling start temperature collecting PC 12, where the steel plate temperature management before starting accelerated cooling, and management of a temperature distribution in the width direction and in the length direction of the steel plate are performed.

The steel plate temperature information measured at the spot type radiation thermometers 7c and 7d and the scanning radiation thermometers 6c and 6d, installed on the downstream side of the accelerated cooling equipment 5 is transmitted to the cooling stop temperature collecting PC 13, where accelerated cooling stop temperature management, and management of a temperature distribution in the width direction and in the length direction of the steel plate are performed. Note that 7c denotes a high-temperature thermometer, and 7d denotes a low-temperature thermometer.

Subsequently, the steel plate temperature information collected at the controlled rolling start temperature + finishing temperature collecting PC 11, the cooling start temperature collecting PC 12, and the cooling stop temperature collecting PC 13 is transmitted to the temperature experience analyzing PC 14.

With actual equipment production, an operating control temperature (controlled rolling start temperature, steel plate finishing temperature, cooling start temperature, cooling stop temperature transmitted from the spot type radiation thermometers 7, 7a, 7b, 7c, and 7d) range, and the temperature measurement experience input to the temperature experience analyzing PC 14 are compared, and quality determination is performed, thereby assuring the quality of the whole of a steel plate.

Note that the temperature experience analyzing PC 14 recognizes the whole of temperature on the upstream side and downstream side of the finishing mill, and on the upstream side and downstream side of the accelerated cooling equipment, determines the quality from a particular threshold value, a temperature allowable range, a calculation model of mechanical property, or the like, and outputs information of a trimmed portion whereby desired quality can be secured from a large plate, or the like.

Also, the water flow rate of the accelerated cooling equipment is controlled in the steel-plate-width direction and in the steel-plate-longitudinal direction from the temperature distribution in the steel-plate-width direction and in the steel-plate-longitudinal direction, whereby defective shape and defective quality due to cooling unevenness can be reduced.

According to the present invention, advantages are obtained such that the reject ratio of a material test decreases around 30% as compared to that according to the related art, curvature deformation correction time Is reduced around 20%, the defective shape of a steel plate is suppressed around 10%, and so forth.

(Seventh Embodiment)

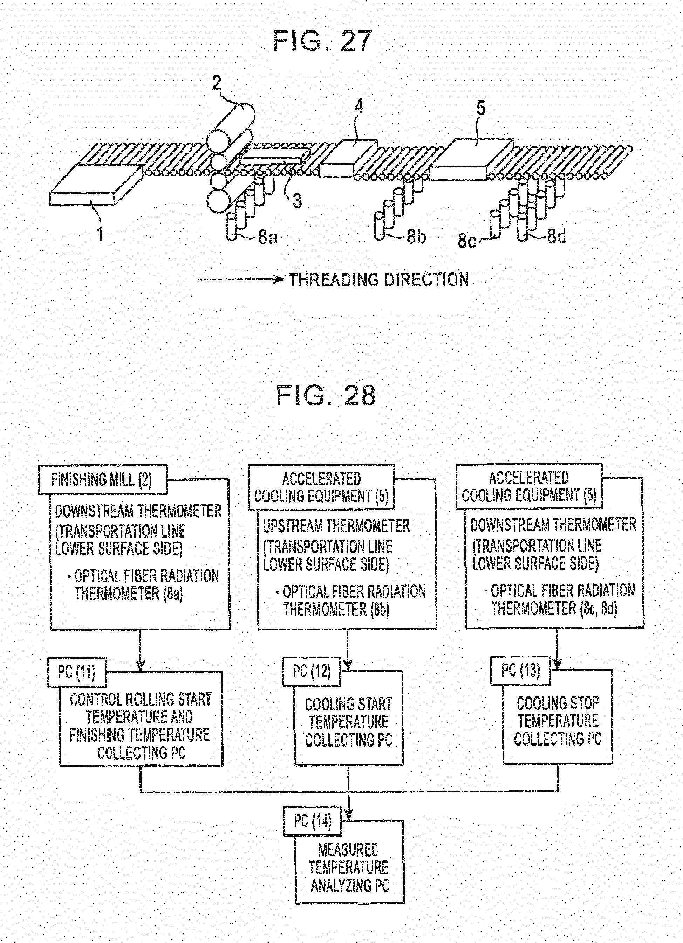

Fig. 27 illustrates the outline of a steel plate quality assurance system according to the present invention including the above steel plate measurement means.

A steel plate manufacturing line includes the heating furnace 1, finishing mill 2, CR cooling shower 4, and accelerated cooling equipment 5, and Fig. 27 illustrates a state in which the steel plate 3 is positioned between the finishing mill 2 and the CR cooling shower 4. 8a, 8b, 8c, and 8d denote optical fiber radiation thermometers, 8a measures a temperature distribution in the width direction and the length direction of the lower surface of a steel plate immediately after finishing rolling, and the data thereof is, such as illustrated in Fig. 28, transmitted to the controlled rolling start temperature + finishing temperature collecting PC 11. 8b is installed on the upstream side of the accelerated cooling equipment, and measures a temperature distribution in the width direction and in the length direction of the upper surface of the steel plate immediately before accelerated cooling, and the data thereof is transmitted to the cooling start temperature collecting PC 12. 8c and 8d are installed on the downstream side of the accelerated cooling equipment, 8c denotes a high-temperature thermometer, 8d denotes a low-temperature thermometer, both of which measure a temperature distribution in the width direction and in the length direction of the upper surface of the steel plate immediately after accelerated cooling, and the data thereof is transmitted to the cooling stop temperature collecting PC 13. 8c is used for the temperature management of an accelerated cooling material, and 8d is used for the temperature management of a direct quenching material.

Next, a step wherein the temperature information of the lower surface of the steel plate measured at each thermometer is transmitted to a PC will be described with reference to Fig. 28. 11 denotes a controlled rolling start temperature + finishing temperature collecting PC, 12 denotes a cooling start temperature collecting PC, 13 denotes a cooling stop temperature collecting PC, and 14 denotes a temperature experience analyzing PC. The temperature information of the lower surface of the steel plate measured at the optical fiber radiation thermometer 8a installed on the lower surface side of the transportation line and on the downstream side of the finishing mill is transmitted to the finishing temperature collecting PC 11, where rolling temperature management such as rolling temperature, rolling end temperature, and so forth, and management of the temperature distribution in the width direction and in the length direction of the lower surface of the steel plate immediately after rolling measured at the optical fiber radiation thermometer 8a are performed.

The temperature information of the lower surface of the steel plate measured at the optical fiber radiation thermometer 8b is transmitted to the cooling start temperature collecting PC 12, where the temperature management of the lower surface of the steel plate before starting accelerated cooling, and management of a temperature distribution in the width direction and in the length direction of the lower surface of the steel plate are performed.

The temperature information of the lower surface of the steel plate measured at the optical fiber radiation thermometers 8c and 8d installed on the downstream side of the accelerated cooling equipment 5 is transmitted to the cooling stop temperature collecting PC 13, where accelerated cooling stop temperature management, and management of a temperature distribution in the width direction and in the length direction of the lower surface of the steel plate are performed. Note that 8c denotes a high-temperature thermometer, and 8d denotes a low-temperature thermometer.

Subsequently, the temperature information of the lower surface of the steel plate collected at the controlled rolling start temperature + finishing temperature collecting PC 11, the cooling start temperature collecting PC 12, and the cooling stop temperature collecting PC 13 is transmitted to the temperature experience analyzing PC 14.

With actual equipment production, an operating control temperature (steel plate finishing temperature, cooling start temperature, cooling stop temperature obtained from the spot type radiation thermometers) range, and the temperature measurement experience input to the temperature experience analyzing PC 14 are compared, and quality determination is performed, thereby assuring the quality of the whole of the steel plate. Note that the temperature experience analyzing PC 14 recognizes the whole of temperature on the downstream side of the finishing mill (downstream side), and on the downstream side of the accelerated cooling equipment (upstream side and downstream side), determines the quality from a particular threshold value, a temperature allowable range, a calculation model of mechanical property, or the like, and outputs information of a trimmed portion whereby desired quality can be secured from a large plate, or the like.

Also, the water flow rate of the lower surface side of the steel plate of the accelerated cooling equipment is controlled In the width direction of the surface of the steel plate from the temperature distribution in the width direction and in the longitudinal direction of the lower surface of the steel plate, or the water flow rate of the accelerated cooling equipment is controlled in the steel-plate-width direction and in the steel-plate-longitudinal direction from the temperature distribution in the steel-plate-width direction and In the steel-plate-longitudinal direction, whereby defective shape and defective quality due to cooling unevenness can be reduced.

According to the present invention, advantages are obtained such that the reject ratio of a material test decreases around 30% as compared to that according to the related art, curvature deformation correction time is reduced around 20%, the defective shape of a steel plate is suppressed around 10%, and so forth.

(Eighth Embodiment)

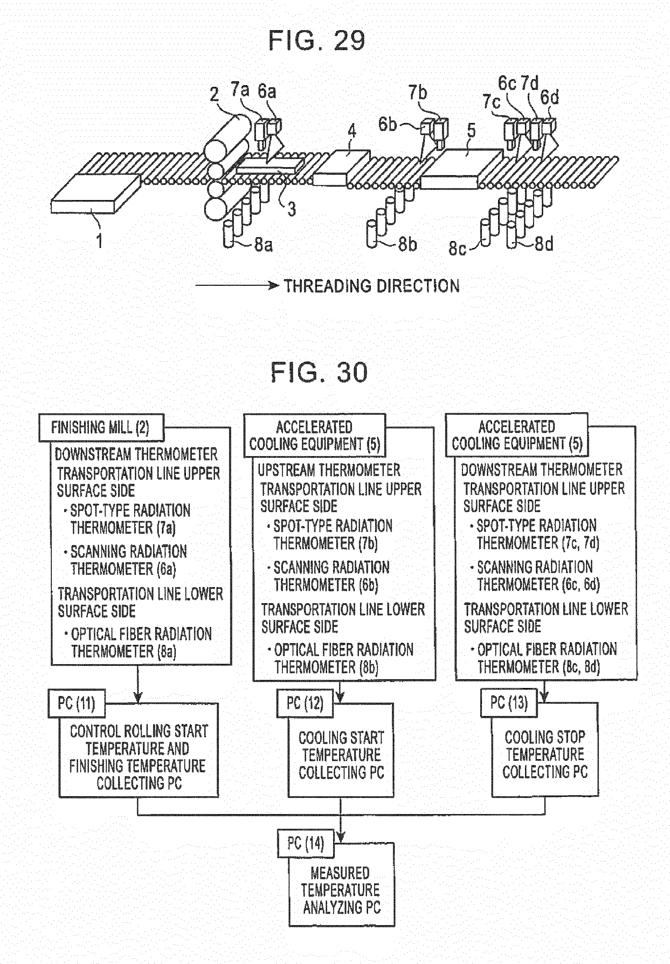

Fig. 29 illustrates an embodiment of the outline of a steel plate quality assurance system according to the present invention including the above steel plate temperature measurement means, and Fig. 30 illustrates a portion of the configuration of the temperature measurement means according to the present invention.

A steel plate manufacturing line includes the heating furnace 1, finishing mill 2, CR cooling shower 4, and accelerated cooling equipment 5, and Fig. 29 illustrates a state in which the steel plate 3 is positioned between the finishing mill 2 and the CR cooling shower 4.

7a through 7d denote spot type radiation thermometers, 6a through 6d denote scanning radiation thermometers, 7a measures a temperature distribution in the steel-plate-length direction immediately after finishing rolling, 6a measures a temperature distribution in the width direction and in the length direction of the upper surface of the steel plate immediately after finishing rolling, and the data thereof is, such as illustrated in Fig. 30, transmitted to the controlled rolling start temperature + finishing temperature collecting PC 11. 7b and 6b are installed on the upstream side of the accelerated cooling equipment, 6b measures a temperature distribution in the width direction and in the length direction of the upper surface of the steel plate immediately before accelerated cooling, 7b measures a temperature distribution in the length direction, and the data thereof is transmitted to the cooling start temperature collecting PC 12. 7c, 7d, 6c, and 6d are installed on the downstream side of the accelerated cooling equipment, 7c and 6c are high-temperature thermometers, 7d and 6d are low-temperature thermometers, 6c and 6d measure a temperature distribution in the width direction and in the length direction of the upper surface of the steel plate immediately after accelerated cooling, 7c and 7d measure a temperature distribution in the length direction, and the data thereof is transmitted to the cooling stop temperature collecting PC 13. 7c and 6c are used for the temperature management of an accelerated cooling material, and 7d and 6d are used for the temperature management of a direct quenching material.

8a through 8d denote optical fiber radiation thermometers, 8a measures a temperature distribution in the width direction and in the length direction of the lower surface of the steel plate immediately after finishing rolling, and the data thereof is transmitted to the controlled rolling start temperature + finishing temperature collecting PC 11. 8b is installed on the upstream side of the accelerated cooling equipment, and measures a temperature distribution in the width direction and in the length direction of the lower surface of the steel plate immediately before accelerated cooling, and the data thereof is transmitted to the cooling start temperature collecting PC 12. 8c and 8d are installed on the downstream side of the accelerated cooling equipment, 8c is a high-temperature thermometer, 8d is a low-temperature thermometer, both measure a temperature distribution in the width direction and in the length direction of the lower surface of the steel plate immediately after accelerated cooling, and the data thereof is transmitted to the cooling stop temperature collecting PC 13. 8c is preferably used for the temperature management of an accelerated cooling material, and 8d is preferably used for the temperature management of a direct quenching material.

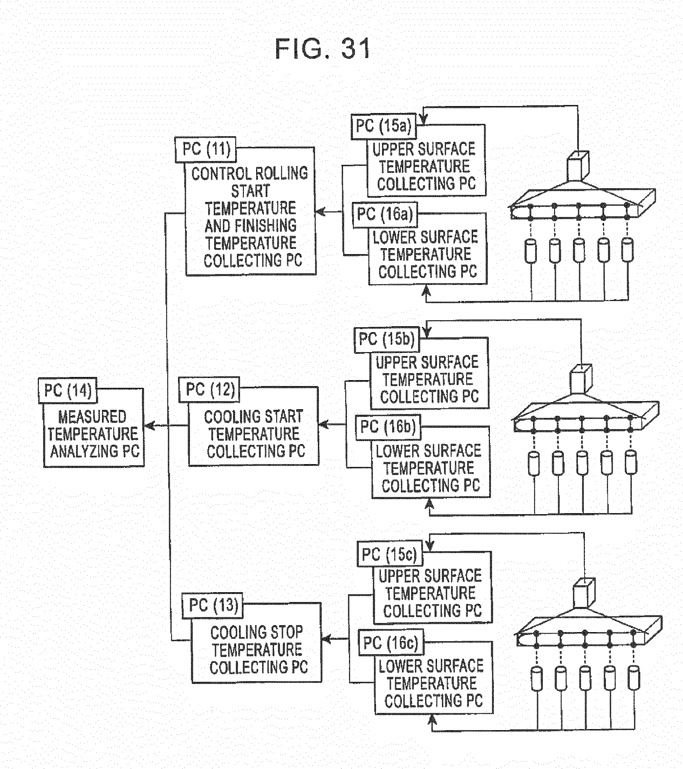

Next, a step wherein the steel plate temperature information measured at each thermometer is transmitted to each PC will be described with reference to Fig. 30 and Fig. 31. 11 denotes a controlled rolling start temperature + finishing temperature collecting PC, 12 denotes a cooling start temperature collecting PC, 13 denotes a cooling stop temperature collecting PC, and 14 denotes a temperature experience analyzing PC.

The temperature information of the upper surface of the steel plate measured at the spot type radiation thermometer 7a and the scanning radiation thermometer 6a installed on the downstream side of the finishing mill, and the temperature information of the lower surface of the steel plate measured at the optical fiber radiation thermometer 8a are transmitted to the finishing temperature collecting PC 11 via the temperature collecting PC 15a of the upper surface of the steel plate, and the temperature collecting PC 16a of the lower surface of the steel plate, where rolling temperature management such as rolling start temperature, rolling end temperature, and so forth, and management of the temperature distribution in the width direction and in the length direction of the lower surface of the steel plate are performed.

The temperature information of the upper surface of the steel plate measured at the spot type radiation thermometer 7b and the scanning radiation thermometer 6b, installed on the upstream side of the accelerated cooling equipment 5, and the temperature information of the lower surface of the steel plate measured at the optical fiber radiation thermometer 8b, are transmitted to the cooling start temperature collecting PC 12 via the temperature collecting PC 15b of the upper surface of the steel plate, and the temperature collecting PC 16b of the lower surface of the steel plate, where the steel plate temperature management before starting accelerated cooling, and management of a temperature distribution in the width direction and in the length direction of the steel plate are performed.

The temperature information of the upper surface of the steel plate measured at the spot type radiation thermometers 7c and 7d, and the scanning radiation thermometers 6c and 6d, installed on the downstream side of the accelerated cooling equipment 5, and the temperature information of the lower surface of the steel plate measured at the optical fiber radiation thermometers 8c and 8d, are transmitted to the cooling stop temperature collecting PC 13 via the temperature collecting PC 15c of the upper surface of the steel plate, and the temperature collecting PC 16c of the lower surface of the steel plate, where accelerated cooling stop temperature management, and management of a temperature distribution in the width direction and in the length direction of the steel plate are performed.

With regard to the controlled rolling start temperature + finishing temperature collecting PC 11, cooling start temperature collecting PC 12, and cooling stop temperature collecting PC 13, such as illustrated in Fig. 31, the controlled rolling start temperature + finishing temperature collecting PC 11 is made up of the temperature collecting PC 15a of the upper surface of the steel plate, and the temperature collecting PC 16a of the lower surface of the steel plate, the cooling start temperature collecting PC 12 is made up of the temperature collecting PC 15b of the upper surface of the steel plate, and the temperature collecting PC 16b of the lower surface of the steel plate, and the cooling stop temperature collecting PC 13 is made up of the temperature collecting PC 15c of the upper surface of the steel plate, and the temperature collecting PC 16c of the lower surface of the steel plate, the steel plate temperature collected at the temperature collecting PCs of each of the lower and upper surfaces is input to the temperature experience analyzing PC 14 via the controlled rolling start temperature + finishing temperature collecting PC 11, cooling start temperature collecting PC 12, and cooling stop temperature collecting PC 13.

With the actual equipment production, the operating control temperature (controlled rolling start temperature, steel plate finishing temperature, cooling start temperature, and cooling stop temperature) range, and the temperature measurement experience input to the temperature experience analyzing PC 14 are compared, and quality determination is carried out, whereby the quality of the whole area of a steel plate can be assured.

Note that the temperature experience analyzing PC 14 recognizes the whole of temperature on the downstream side of the finishing mill, and on the input downstream side of the accelerated cooling equipment, determines the quality from a particular threshold value, temperature allowable range, a calculation model of mechanical property, and outputs the information of a trimmed portion whereby desired quality can be secured from a large plate.

Also, the temperature of the upper and lower surfaces of stab at the heating furnace of the following plate and thereafter is adjusted from the temperature difference experience of the upper and lower surfaces, the water flow rate of the accelerated cooling equipment is controlled in the width direction and in the longitudinal direction from the temperature distribution in the width direction and in the longitudinal direction of a steel plate, whereby steel plate defective shape can be reduced.

According to the present invention, advantages have been obtained such that the reject ratio of a material test decreases around 30% as compared to that according to the related art, curvature deformation correction time is reduced around 20%, the defective shape of a steel plate is suppressed around 10%, and so forth.

(Ninth Embodiment)

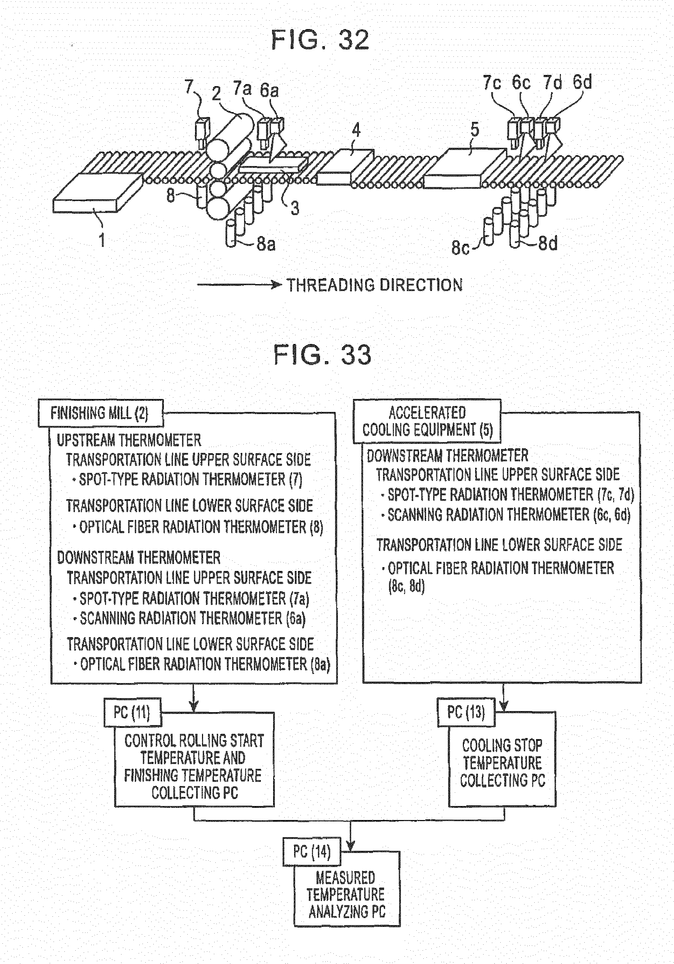

Fig. 32 illustrates an embodiment of the outline of a steel plate quality assurance system according to the present invention including the above steel plate temperature measurement means, and Fig. 33 illustrates a propagation flow of temperature information according to the present invention.

A steel plate manufacturing line includes the heating furnace 1, finishing mill 2, CR cooling shower 4, and accelerated cooling equipment 5, and Fig. 32 illustrates a state in which the steel plate 3 is positioned between the finishing mill 2 and the CR cooling shower 4.

7, 7a, 7c, and 7d denote spot type radiation thermometers, 6a, 6c, and 6d denote scanning radiation thermometers, 7 and 7a are installed just approximate to the finishing mill, and measures rolling end temperature during rolling, 6b measures a temperature distribution in the width direction, and in the length direction of the upper surface of a steel plate immediately after finishing rolling, and the data thereof is, such as illustrated in Fig. 33, transmitted to the controlled rolling start temperature + finishing temperature collecting PC 11. 7c, 7d, 6c, and 6d are installed on the downstream side of the accelerated cooling equipment, 7c and 6c are high-temperature thermometers, 7d and 6d are low-temperature thermometers, 6c and 6d measure a temperature distribution in the width direction and in the length direction of the upper surface of the steel plate immediately before accelerated cooling, 7c and 7d measure a temperature distribution in the length direction, and the data thereof is transmitted to the cooling stop temperature collecting PC 13. 7c and 6c are used for the temperature management of an accelerated cooling material, and 7d and 6d are used for the temperature management of a direct quenching material.

8, 8a, 8c, and 8d denote optical fiber radiation thermometers, 8a measures a temperature distribution in the width direction and in the length direction of the lower surface of the steel plate immediately after finishing rolling, and the data thereof is transmitted to the controlled rolling start temperature + finishing temperature collecting PC 11 along with 8. 8c and 8d are installed on the downstream side of the accelerated cooling equipment, 8c is a high-temperature thermometer, 8d is a low-temperature thermometer, both measure a temperature distribution in the width direction and in the length direction of the lower surface of the steel plate immediately after accelerated cooling, and the data thereof is transmitted to the cooling stop temperature collecting PC 13. 8c is preferably used for the temperature management of an accelerated cooling material, and 8d is preferably used for the temperature management of a direct quenching material.

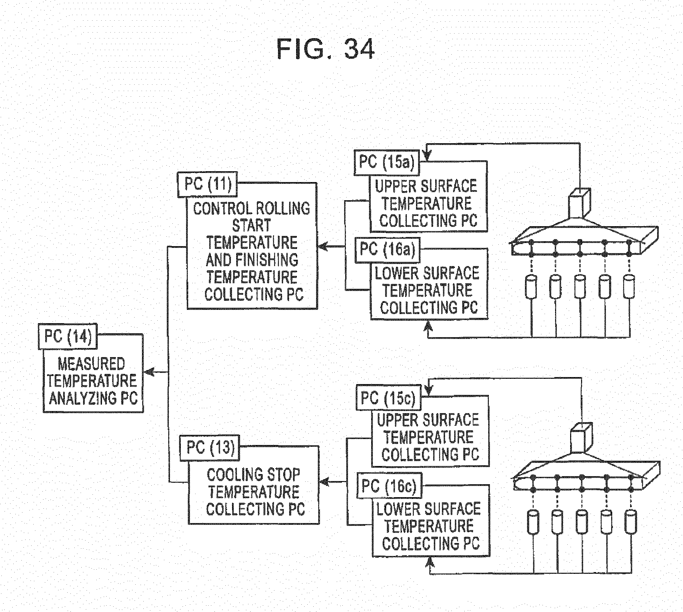

Next, a propagation flow wherein the steel plate temperature information measured at each thermometer is transmitted to each PC will be described with reference to Fig. 33 and Fig. 34. 11 denotes a controlled rolling start temperature + finishing temperature collecting PC, 13 denotes a cooling stop temperature collecting PC, and 14 denotes a temperature experience analyzing PC.

The temperature information of the upper surface of the steel plate measured at the spot type radiation thermometers 7 and 7a and the scanning radiation thermometer 6a installed on the upstream side and the downstream side of the finishing mill, and the temperature information of the lower surface of the steel plate measured at the optical fiber radiation thermometers 8 and 8a are transmitted to the finishing temperature collecting PC 11 via the temperature collecting PC 15a of the upper surface of the steel plate, and the temperature collecting PC 16a of the lower surface of the steel plate, where rolling temperature management such as rolling start temperature, rolling end temperature, and so forth, and management of the temperature distribution in the width direction and in the length direction of the steel plate are performed.

The temperature information of the upper surface of the steel plate measured at the spot type radiation thermometers 7c and 7d and the scanning radiation thermometers 6c and 6d, installed on the downstream side of the accelerated cooling equipment 5, and the temperature information of the lower surface of the steel plate measured at the optical fiber radiation thermometer 8c and 8d, are transmitted to the cooling stop temperature collecting PC 13 via the temperature collecting PC 15c of the upper surface of the steel plate, and the temperature collecting PC 16c of the lower surface of the steel plate, where accelerated cooling stop temperature management, and management of a temperature distribution in the width direction and in the length direction of the steel plate are performed.

The controlled rolling start temperature + finishing temperature collecting PC 11, and cooling stop temperature collecting PC 13 are, such as illustrated in Fig. 34, made up of the temperature collecting PCs 15a and 15c of the upper surface of the steel plate, and the temperature collecting PCs 16a and 16c of the lower surface of the steel plate respectively, and each of the temperature of the lower surface of the steel plate, and the temperature of the lower surface of the steel plate is input to the temperature experience analyzing PC 14.

With the actual equipment production, the operating control temperature (controlled rolling start temperature, rolling finishing temperature, cooling start temperature, and cooling stop temperature) range, and the temperature measurement experience input to the temperature experience analyzing PC 14 are compared, and quality determination is carried out, whereby the quality of the whole area of a steel plate can be assured.

Note that the temperature experience analyzing PC 14 recognizes the whole of temperature on the downstream side of the finishing mill, and on the downstream side of the accelerated cooling equipment, determines the quality from a particular threshold value, temperature allowable range, a calculation model of mechanical property, and so forth, and outputs the information of a trimmed portion whereby desired quality can be secured from a large plate.

Also, the temperature of the upper and lower surfaces of slab at the heating furnace of the following plate and thereafter is adjusted from the temperature difference experience of the upper and lower surfaces, the water flow rate of the accelerated cooling equipment is controlled in the width direction and in the longitudinal direction from the temperature distribution in the width direction and in the longitudinal direction of a steel plate, whereby steel plate defective shape can be reduced.

According to the present invention, advantages have been obtained such that the reject ratio of a material test decreases around 30% as compared to that according to the related art, curvature deformation correction time is reduced around 20%, the defective shape of a steel plate is suppressed around 10%, and so forth.

(Tenth Embodiment)

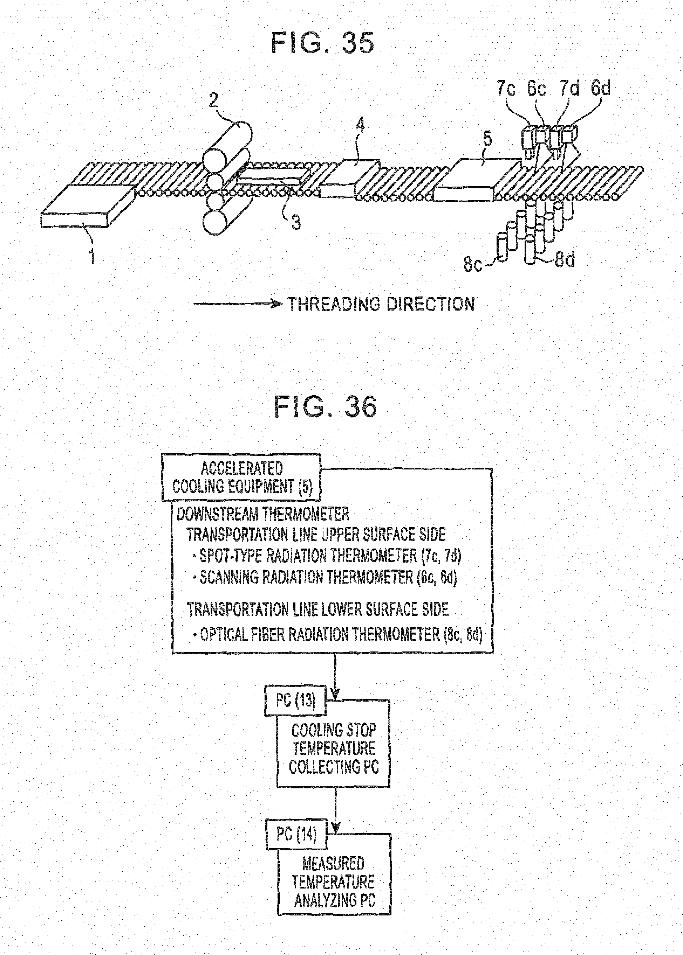

Fig. 35 illustrates an embodiment of the outline of steel plate quality assurance equipment according to the present invention including the above steel plate temperature measurement means, and Fig. 36 illustrates a propagation flow of temperature information according to the present invention.

A steel plate manufacturing line includes the heating furnace 1, finishing mill 2, CR cooling shower 4, and accelerated cooling equipment 5, and Fig. 35 illustrates a state in which the steel plate 3 is positioned between the finishing mill 2 and the CR cooling shower 4.

7c and 7d denote spot type radiation thermometers, 6c and 6d denote scanning radiation thermometers, 7c, 7d, 6c, and 6d are Installed on the downstream side of the accelerated cooling equipment, 7c and 6c are high-temperature thermometers, 7d and 6d are low-temperature thermometers, 6c and 6d measure a temperature distribution in the width direction and in the length direction of the upper surface of a steel plate immediately after accelerated cooling, 7c and 7d measure a temperature distribution in the length direction, and the data thereof is transmitted to the cooling stop temperature collecting PC 13. 7c and 6c are used for the temperature management of an accelerated cooling material, and 7d and 6d are used for the temperature management of a direct quenching material.

8c and 8d denote optical fiber radiation thermometers, which are Installed on the downstream side of the accelerated cooling equipment, 8c is a high-temperature thermometer, 8d is a low-temperature thermometer, both measure a temperature distribution in the width direction and in the length direction of the lower surface of a steel plate immediately after accelerated cooling, and the data thereof is transmitted to the cooling stop temperature collecting PC 13. 8c is preferably used for the temperature management of an accelerated cooling material, and 8d is preferably used for the temperature management of a direct quenching material.

Next, a propagation flow wherein the steel plate temperature information measured at each thermometer is transmitted to each PC will be described with reference to Fig. 36. 13 denotes a cooling stop temperature collecting PC, and 14 denotes a temperature experience analyzing PC.

The temperature information of the upper surface of the steel plate measured at the spot type radiation thermometers 7c and 7d and the scanning radiation thermometers 6c and 6d installed on the downstream side of the accelerated cooling equipment 5, and the temperature information of the lower surface of the steel plate measured at the optical fiber radiation thermometers 8c and 8d are transmitted to the cooling stop temperature collecting PC 13, where accelerated cooling stop temperature management, and management of the temperature distribution in the width direction and in the length direction of the steel plate are performed.

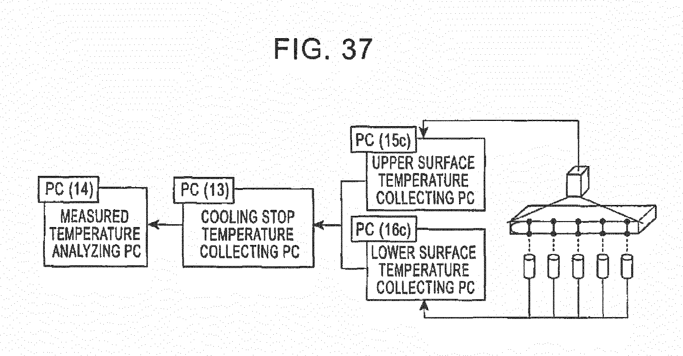

The cooling stop temperature collecting PC 13 is, such illustrated in Fig. 37, made up of the temperature collecting PC 15c of the upper surface of the steel plate, and the temperature collecting PC 16c of the lower surface of the steel plate, and each of the temperature of the upper surface of the steel plate, and the temperature of the lower surface of the steel plate is input to the temperature experience analyzing PC 14.

With the actual equipment production, the operating control temperature (cooling stop temperature) range, and the temperature measurement experience input to the temperature experience analyzing PC 14 are compared, and quality determination is carried out, whereby the quality of the whole area of a steel plate can be assured.

Note that the temperature experience analyzing PC 14 recognizes the whole of temperature on the downstream side of the accelerated cooling equipment, determines the quality from a particular threshold value, temperature allowable range, a calculation model of mechanical property, and so forth, and outputs the information of a trimmed portion whereby desired quality can be secured from a large plate.

Also, the temperature of the upper and lower surfaces of slab at the heating furnace of the following plate and thereafter is adjusted from the temperature difference experience of the upper and lower surfaces, the water flow rate of the accelerated cooling equipment is controlled in the width direction and in the longitudinal direction from the temperature distribution in the width direction and in the longitudinal direction of a steel plate, whereby steel plate defective shape can be reduced.

According to the present invention, advantages have been obtained such that the reject ratio of a material test decreases around 30% as compared to that according to the related art, curvature deformation correction time is reduced around 20%, the defective shape of a steel plate is suppressed around 10%, and so forth.

(Eleventh Embodiment)

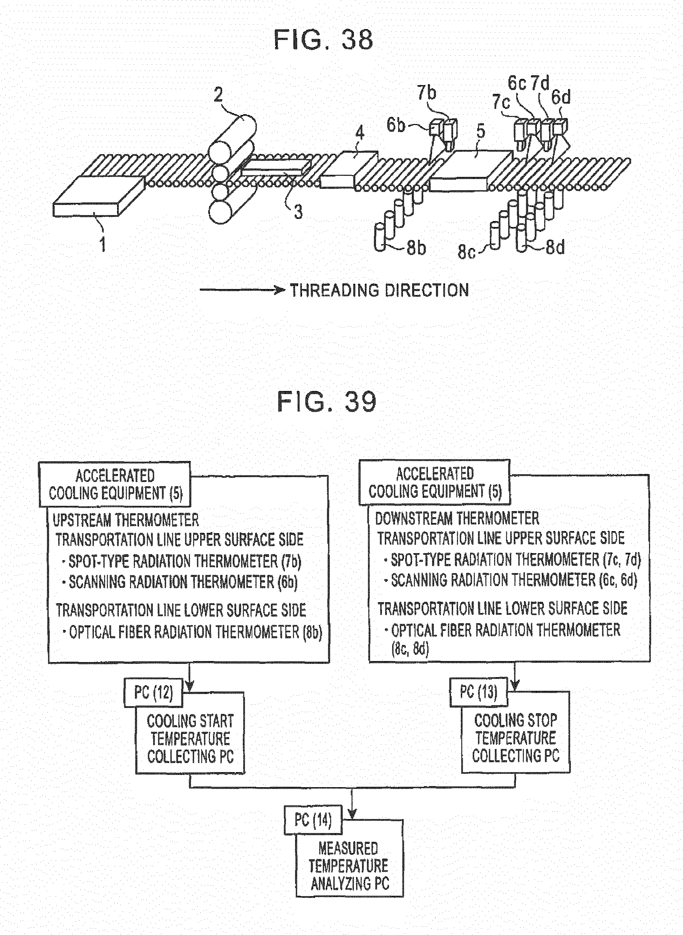

Fig. 38 illustrates an embodiment of the outline of steel plate quality assurance equipment according to the present invention including the above steel plate temperature measurement means, and Fig. 39 illustrates a propagation flow of temperature information according to the present invention.

A steel plate manufacturing line includes the heating furnace 1, finishing mill 2, CR cooling shower 4, and accelerated cooling equipment 5, and Fig. 38 illustrates a state in which the steel plate 3 is positioned between the finishing mill 2 and the CR cooling shower 4.

7b, 7c, and 7d denote spot type radiation thermometers, 6b, 6c, and 6d denote scanning radiation thermometers, 7b and 6b are installed on the upstream side of the accelerated cooling equipment, 6b measures a temperature distribution in the width direction and in the length direction of the upper surface of a steel plate immediately after accelerated cooling, 7b measures a temperature distribution in the length direction, and the data thereof is transmitted to the cooling start temperature collecting PC 12. 7c, 7d, 6c, and 6d are installed on the downstream side of the accelerated cooling equipment, 7c and 6c are high-temperature thermometers, 6c and 6d are low-temperature thermometers, 6c and 6d measure a temperature distribution in the width direction and in the length direction of the upper surface of a steel plate immediately after accelerated cooling, 7c and 7d measure a temperature distribution in the length direction, and the data thereof is transmitted to the cooling stop temperature collecting PC 13. 7c and 6c are preferably used for the temperature management of an accelerated cooling material, and 7d and 6d are preferably used for the temperature management of a direct quenching material.

8b, 8c, and 8d denote optical fiber radiation thermometers, 8b measures a temperature distribution in the width direction and in the length direction of the lower surface of a steel plate immediately before accelerated cooling, and the data thereof is transmitted to the cooling start temperature collecting PC 12. 8c and 8d are installed on the downstream side of the accelerated cooling equipment, 8c is a high-temperature thermometer, 8d is a low-temperature thermometer, both measure a temperature distribution in the width direction and in the length direction of the lower surface of the steel plate immediately after accelerated cooling, and the data thereof is transmitted to the cooling stop temperature collecting PC 13. 8c is preferably used for the temperature management of an accelerated cooling material, and 8d is preferably used for the temperature management of a direct quenching material.

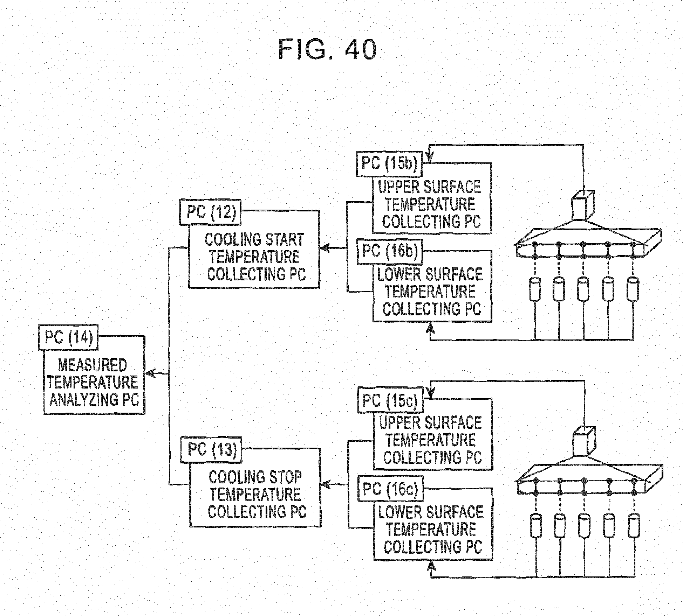

Next, a propagation flow wherein the steel plate temperature information measured at each thermometer is transmitted to each PC will be described with reference to Fig. 39 and Fig. 40. 12 denotes a cooling start temperature collecting PC, 13 denotes a cooling stop temperature collecting PC, and 14 denotes a temperature experience analyzing PC.

The temperature information of the upper surface of the steel plate measured at the spot type radiation thermometer 7b and the scanning radiation thermometer 6b installed on the upstream side of the accelerated cooling equipment 5, and the temperature information of the lower surface of the steel plate measured at the optical fiber radiation thermometer 8b are input to the cooling start temperature collecting PC 12 via the temperature collecting PC 15b of the upper surface of the steel plate, and the temperature collecting PC 16b of the lower surface of the steel plate, and are transmitted to the temperature experience analyzing PC 14, where steel plate temperature management before starting accelerated cooling, and management of the temperature distribution in the width direction and in the length direction of the steel plate are performed.

The temperature information of the upper surface of the steel plate measured at the spot type radiation thermometers 7c and 7d and the scanning radiation thermometers 6c and 6d installed on the downstream side of the accelerated cooling equipment 5, and the temperature information of the lower surface of the steel plate measured at the optical fiber radiation thermometer 8c and 8d are input to the cooling stop temperature collecting PC 13 via the temperature collecting PC 15c of the upper surface of the steel plate, and the temperature collecting PC 16c of the lower surface of the steel plate, and are transmitted to the temperature experience analyzing PC 14, where accelerated cooling stop temperature management, and management of the temperature distribution in the width direction and in the length direction of the steel plate are performed.

With regard to the cooling start temperature collecting PC 12 and the cooling stop temperature collecting PC 13, such illustrated in Fig. 40, the cooling start temperature collecting PC 12 is made up of the temperature collecting PC 15b of the upper surface of the steel plate, and the temperature collecting PC 16b of the lower surface of the steel plate, the cooling stop temperature collecting PC 13 is made up of the temperature collecting PC 15c of the upper surface of the steel plate, and the temperature collecting PC 16c of the lower surface of the steel plate, and each of the temperature of the upper surface of the steel plate, and the temperature of the lower surface of the steel plate is input to the temperature experience analyzing PC 14 via the cooling start temperature collecting PC 12 and the cooling stop temperature collecting PC 13.

With the actual equipment production, the operating control temperature (cooling start temperature and cooling stop temperature) range, and the temperature measurement experience input to the temperature experience analyzing PC 14 are compared, and quality determination is carried out, whereby the quality of the whole area of a steel plate can be assured.

Note that the temperature experience analyzing PC 14 recognizes the whole of temperature on the downstream side of the accelerated cooling equipment, determines the quality from a particular threshold value, temperature allowable range, a calculation model of mechanical property, and so forth, and outputs the information of a trimmed portion whereby desired quality can be secured from a large plate.

Also, the temperature of the upper and lower surfaces of slab at the heating furnace of the following plate and thereafter is adjusted from the temperature difference experience of the upper and lower surfaces, the water flow rate of the accelerated cooling equipment is controlled in the width direction and in the longitudinal direction from the temperature distribution in the width direction and in the longitudinal direction of a steel plate, whereby steel plate defective shape can be reduced.

According to the present invention, advantages have been obtained such that the reject ratio of a material test decreases around 30% as compared to that according to the related art, curvature deformation correction time is reduced around 20%, the defective shape of a steel plate is suppressed around 10%, and so forth.

(Twelfth Embodiment)

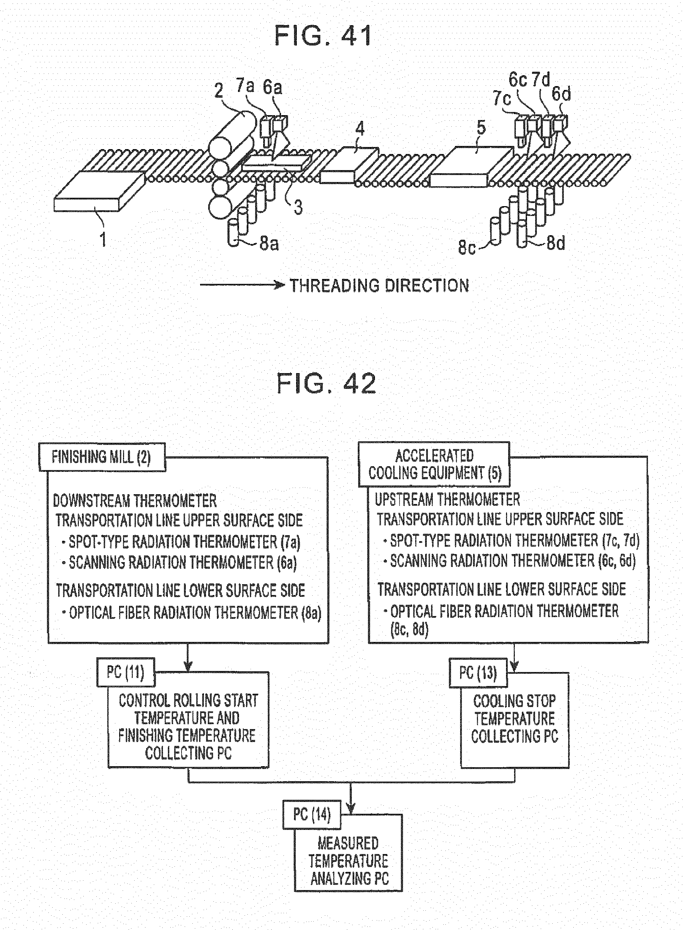

Fig. 41 illustrates an embodiment of the outline of steel plate quality assurance equipment according to the present invention including the above steel plate temperature measurement means, and Fig. 42 illustrates a propagation flow of temperature information according to the present invention.

A steel plate manufacturing line includes the heating furnace 1, finishing mill 2, CR cooling shower 4, and accelerated cooling equipment 5, and Fig. 41 illustrates a state in which the steel plate 3 is positioned between the finishing mill 2 and the CR cooling shower 4.

7a, 7c, and 7d denote spot type radiation thermometers, 6a, 6c, and 6d denote scanning radiation thermometers, 7a measures a temperature distribution in the length direction of the upper surface of a steel plate immediately after finishing rolling, and such as illustrated in Fig. 42, the data thereof is transmitted to the controlled rolling start temperature + finishing temperature collecting PC 11. 7c, 7d, 6c, and 6d are installed on the downstream side of the accelerated cooling equipment, 7c and 6c are high-temperature thermometers, 7d and 6d are low-temperature thermometers, 6c and 6d measure a temperature distribution in the width direction and in the length direction of the upper surface of the steel plate immediately accelerated cooling, 7c and 7d measure a temperature distribution in the length direction, and the data thereof is transmitted to the cooling stop temperature collecting PC 13. 7c and 6c are preferably used for the temperature management of an accelerated cooling material, and 7d and 6d are preferably used for the temperature management of a direct quenching material.

8a, 8c, and 8d denote optical fiber radiation thermometers, 8a measures a temperature distribution in the width direction and in the length direction of the lower surface of a steel plate immediately after finishing rolling, and the data thereof is transmitted to the controlled rolling start temperature + finishing temperature collecting PC 11. 8c and 8d are installed on the downstream side of the accelerated cooling equipment, 8c is a high-temperature thermometer, 8d is a low-temperature thermometer, both measure a temperature distribution in the width direction and in the length direction of the lower surface of the steel plate immediately after accelerated cooling, and the data thereof is transmitted to the cooling stop temperature collecting PC 13. 8c is preferably used for the temperature management of an accelerated cooling material, and 8d is preferably used for the temperature management of a direct quenching material.

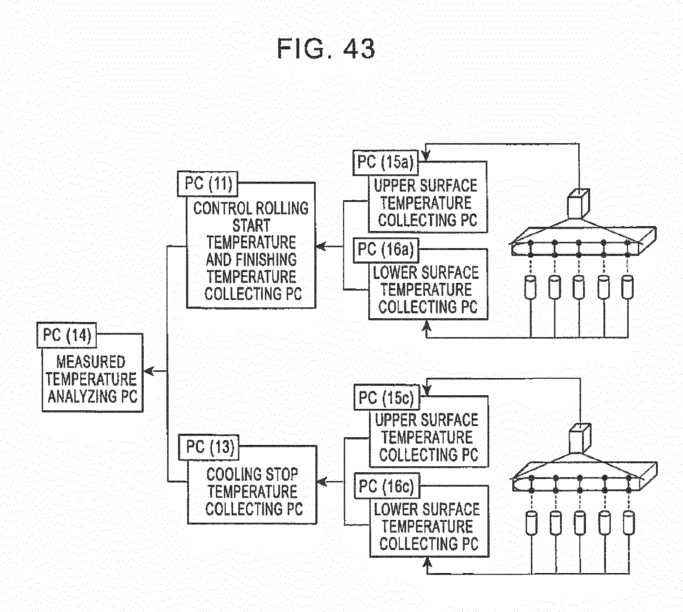

Next, a propagation flow wherein the steel plate temperature information measured at each thermometer is transmitted to each PC will be described with reference to Fig. 42 and Fig. 43. 11 denotes a controlled rolling start temperature + finishing temperature collecting PC, 13 denotes a cooling stop temperature collecting PC, and 14 denotes a temperature experience analyzing PC.

The temperature information of the upper surface of the steel plate measured at the spot type radiation thermometer 7a and the scanning radiation thermometer 6a installed on the downstream side of the finishing mill, and the temperature information of the lower surface of the steel plate measured at the optical fiber radiation thermometer 8a are transmitted to the controlled rolling start temperature + finishing temperature collecting PC 11 via the temperature collecting PC 15a of the upper surface of the steel plate, and the temperature collecting PC 16a of the lower surface of the steel plate, where rolling temperature management such as controlled rolling start temperature, rolling end temperature, and so forth, and management of the temperature distribution in the width direction and in the length direction of the steel plate are performed.

The temperature information of the upper surface of the steel plate measured at the spot type radiation thermometers 7c and 7d and the scanning radiation thermometers 6c and 6d installed on the downstream side of the accelerated cooling equipment 5, and the temperature information of the lower surface of the steel plate measured at the optical fiber radiation thermometer 8c and 8d are transmitted to the cooling stop temperature collecting PC 13 via the temperature collecting PC 15c of the upper surface of the steel plate, and the temperature collecting PC 16c of the lower surface of the steel plate, where accelerated cooling stop temperature management, and management of the temperature distribution in the length direction of the steel plate are performed.

With regard to the controlled rolling start temperature + finishing temperature collecting PC 11 and the cooling stop temperature collecting PC 13, such illustrated in Fig. 3, the controlled rolling start temperature + finishing temperature collecting PC 11 is made up of the temperature collecting PC 15a of the upper surface of the steel plate, and the temperature collecting PC 16a of the lower surface of the steel plate, the cooling stop temperature collecting PC 13 is made up of the temperature collecting PC 15c of the upper surface of the steel plate, and the temperature collecting PC 16c of the lower surface of the steel plate, and the steel plate temperature collected at each of the temperature collecting PCs of the upper and lower surfaces is input to the temperature experience analyzing PC 14 via the controlled rolling start temperature + finishing temperature collecting PC 11 and the cooling stop temperature collecting PC 13.

With the actual equipment production, the operating control temperature (controlled rolling start temperature + finishing temperature and cooling stop temperature) range, and the temperature measurement experience input to the temperature experience analyzing PC 14 are compared, and quality determination is carried out, whereby the quality of the whole area of a steel plate can be assured.

Note that the temperature experience analyzing PC 14 recognizes the whole of temperature on the downstream side of the finishing mill, and on the downstream side of the accelerated cooling equipment, determines the quality from a particular threshold value, temperature allowable range, a calculation model of mechanical property, and so forth, and outputs the information of a trimmed portion whereby desired quality can be secured from a large plate.

Also, the temperature of the upper and lower surfaces of slab at the heating furnace of the following plate and thereafter is adjusted from the temperature difference experience of the upper and lower surfaces, the water flow rate of the accelerated cooling equipment is controlled in the width direction and in the longitudinal direction from the temperature distribution in the width direction and in the longitudinal direction of a steel plate, whereby steel plate defective shape can be reduced.

According to the present invention, advantages have been obtained such that the reject ratio of a material test decreases around 30% as compared to that according to the related art, curvature deformation correction time is reduced around 20%, the defective shape of a steel plate is suppressed around 10%, and so forth.

(Thirteenth Embodiment)

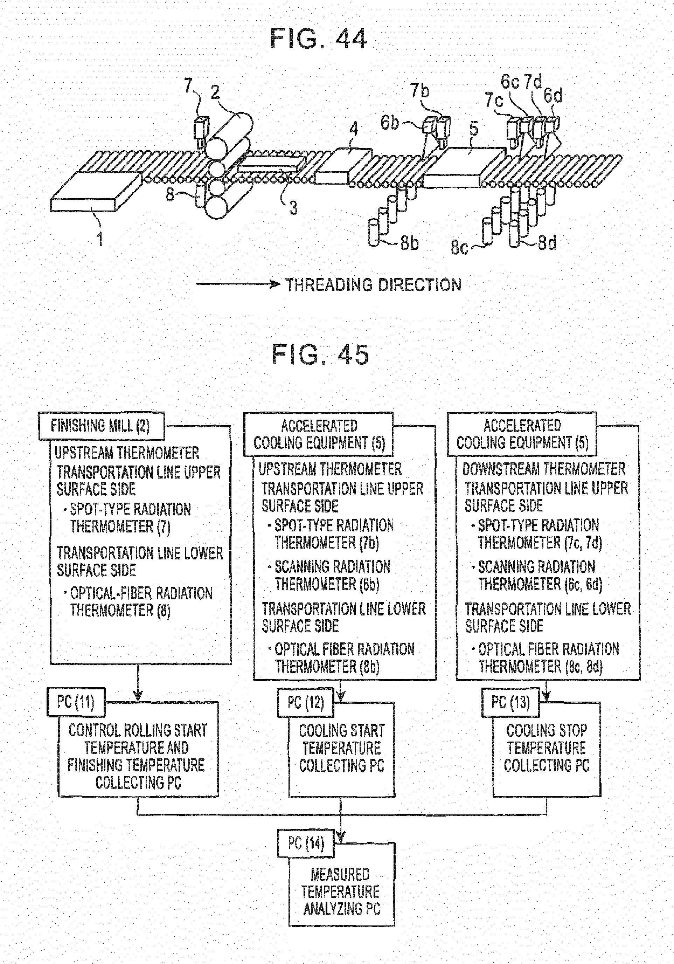

Fig. 44 illustrates an embodiment of the outline of steel plate quality assurance equipment according to the present invention including the above steel plate temperature measurement means, and Fig. 45 illustrates a propagation flow of temperature information according to the present invention.

A steel plate manufacturing line includes the heating furnace 1, finishing mill 2, CR cooling shower 4, and accelerated cooling equipment 5, and Fig. 44 illustrates a state in which the steel plate 3 is positioned between the finishing mill 2 and the CR cooling shower 4.

7, 7b, 7c, and 7d denote spot type radiation thermometers, 6b, 6c, and 6d denote scanning radiation thermometers, 7a and 8 are installed just approximate to the finishing mill, and measure rolling end temperature during rolling, and the data thereof is transmitted to the controlled rolling start temperature + finishing temperature collecting PC 11. 7b and 6b are installed on the upstream side of the accelerated cooling equipment, 6b measures a temperature distribution in the width direction and in the length direction of the upper surface of a steel plate immediately before accelerated cooling, 7b measures a temperature distribution in the length direction, and the data thereof is transmitted to the cooling start temperature collecting PC 12. 7c, 7d, 6c, and 6d are installed on the downstream side of the accelerated cooling equipment, 7c and 6c are high-temperature thermometers, 7d and 6d are low-temperature thermometers, 6c and 6d measure a temperature distribution in the width direction and in the length direction of the upper surface of the steel plate immediately after accelerated cooling, 7c and 7d measure a temperature in the length direction, and the data thereof is transmitted to the cooling stop temperature PC13. 7c and 6c are preferably used for the temperature management of an accelerated cooling material, and 7d and 6d are preferably used for the temperature management of a direct quenching material.

8, 8b through 8d denote optical fiber radiation thermometers, 8b measures a temperature distribution in the width direction and in the length direction of the lower surface of a steel plate immediately before accelerated cooling, and the data thereof is transmitted to the cooling start temperature collecting PC 12. 8c and 8d are installed on the downstream side of the accelerated cooling equipment, 8c is a high-temperature thermometer, 8d is a low-temperature thermometer, both measure a temperature distribution in the width direction and in the length direction of the lower surface of the steel plate immediately after accelerated cooling, and the data thereof is transmitted to the cooling stop temperature collecting PC 13. 8c is used for the temperature management of an accelerated cooling material, and 8d is used for the temperature management of a direct quenching material.

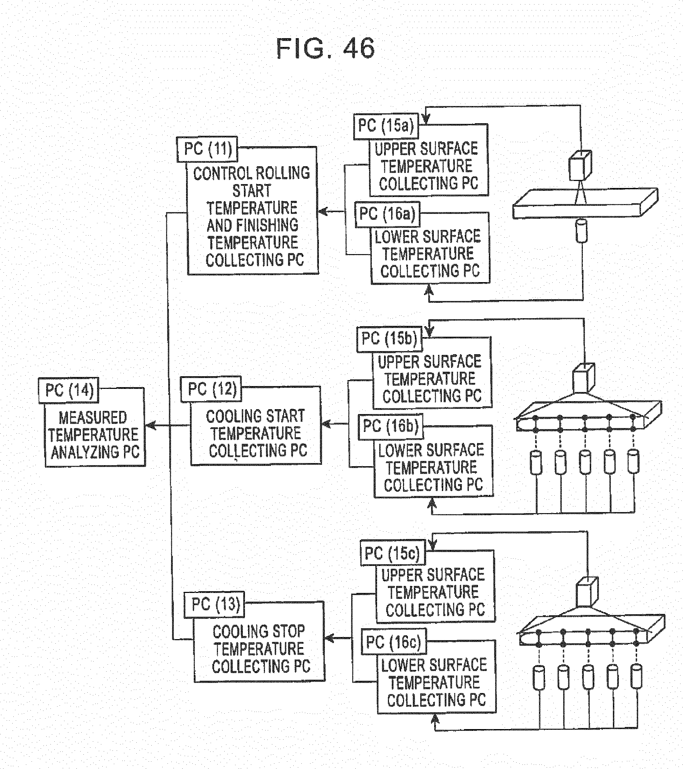

Next, a propagation flow wherein the steel plate temperature information measured at each thermometer is transmitted to each PC will be described with reference to Fig. 45 and Fig. 46. 11 denotes a controlled rolling start temperature + finishing temperature collecting PC, 12 denotes a cooling start temperature collecting PC, 13 denotes a cooling stop temperature collecting PC, and 14 denotes a temperature experience analyzing PC.

The temperature information of the upper surface of the steel plate measured at the spot type radiation thermometer 7 and the optical fiber radiation thermometer 8 installed on the upstream side of the finishing mill is transmitted to the controlled rolling start temperature + finishing temperature collecting PC 11 via the temperature collecting PC 15a of the upper surface of the steel plate, and the temperature collecting PC 16a of the lower surface of the steel plate, where rolling temperature management such as controlled rolling start temperature, rolling finishing temperature, and so forth, and management of the temperature distribution in the width direction and in the length direction of the steel plate are performed.

The temperature information of the upper surface of the steel plate measured at the spot type radiation thermometer 7b and the scanning radiation thermometer 6b installed on the upstream side of the accelerated cooling equipment 5, and the temperature information of the lower surface of the steel plate measured at the optical fiber radiation thermometer 8b are transmitted to the cooling start temperature collecting PC 12 via the temperature collecting PC 15b of the upper surface of the steel plate, and the temperature collecting PC 16b of the lower surface of the steel plate, where steel plate temperature management before accelerated cooling, and management of the temperature distribution in the length direction of the steel plate are performed.

The temperature information of the upper surface of the steel plate measured at the spot type radiation thermometers 7c and 7d, and the scanning radiation thermometers 6c and 6d installed on the downstream side of the accelerated cooling equipment 5, and the temperature information of the lower surface of the steel plate measured at the optical fiber radiation thermometers 8c and 8d are transmitted to the cooling stop temperature collecting PC 13 via the temperature collecting PC 15c of the upper surface of the steel plate, and the temperature collecting PC 16c of the lower surface of the steel plate, where accelerated cooling stop temperature management, and management of the temperature distribution in the length direction of the steel plate are performed.

With regard to the controlled rolling start temperature + finishing temperature collecting PC 11, the cooling start temperature collecting PC 12, and the cooling stop temperature collecting PC 13, such illustrated in Fig. 46, the controlled rolling start temperature + finishing temperature collecting PC 11 is made up of the temperature collecting PC 15a of the upper surface of the steel plate, and the temperature collecting PC 15a of the lower surface of the steel plate, the cooling start temperature collecting PC 12 is made up of the temperature collecting PC 15b of the upper surface of the steel plate, and the temperature collecting PC 16b of the lower surface of the steel plate, the cooling stop temperature collecting PC 13 is made up of the temperature collecting PC 15c of the upper surface of the steel plate, and the temperature collecting PC 16c of the lower surface of the steel plate, and the steel plate temperature collected at each of the temperature collecting PCs of the upper and lower surfaces is input to the temperature experience analyzing PC 14 via the controlled rolling start temperature + finishing temperature collecting PC 11, the cooling start temperature collecting PC 12, and the cooling stop temperature collecting PC 13.

With the actual equipment production, the operating control temperature (controlled rolling start temperature + finishing temperature, cooling start temperature, and cooling stop temperature) range, and the temperature measurement experience input to the temperature experience analyzing PC 14 are compared, and quality determination is carried out, whereby the quality of the whole area of a steel plate can be assured. Note that the temperature experience analyzing PC 14 recognizes the whole of temperature on the downstream side of the finishing mill, and on the downstream side of the accelerated cooling equipment, determines the quality from a particular threshold value, temperature allowable range, a calculation model of mechanical property, and so forth, and outputs the information of a trimmed portion whereby desired quality can be secured from a large plate.

Also, the temperature of the upper and lower surfaces of slab at the heating furnace of the following plate and thereafter is adjusted from the temperature difference experience of the upper and lower surfaces, the water flow rate of the accelerated cooling equipment is controlled in the width direction and in the longitudinal direction from the temperature distribution in the width direction and in the longitudinal direction of a steel plate, whereby steel plate defective shape can be reduced.

According to the present invention, advantages have been obtained such that the reject ratio of a material test decreases around 30% as compared to that according to the related art, curvature deformation correction time is reduced around 20%, the defective shape of a steel plate is suppressed around 10%, and so forth.

(Fourteenth Embodiment)

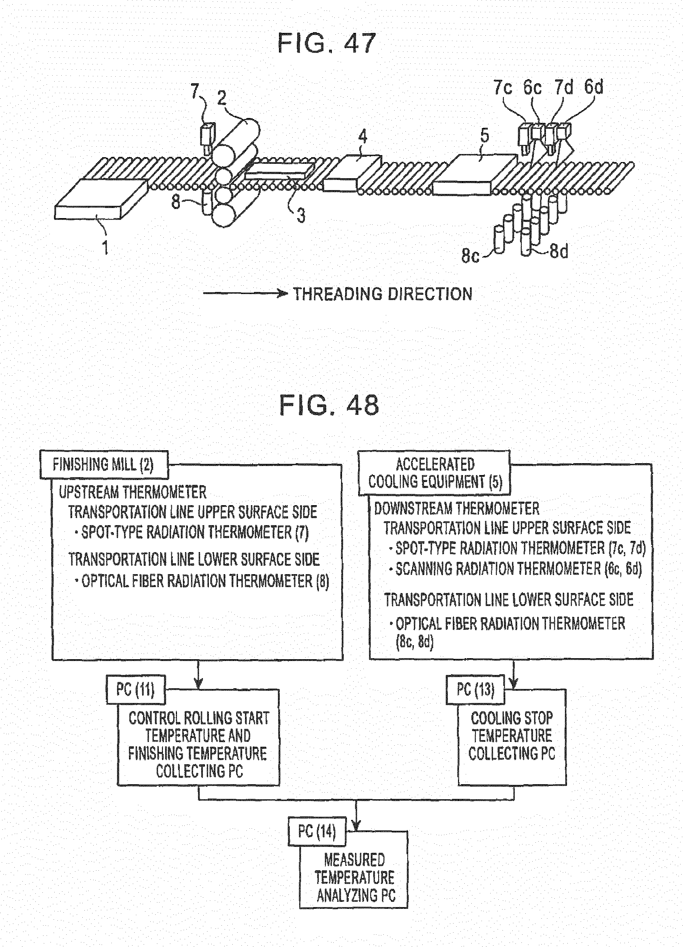

Fig. 47 illustrates an embodiment of the outline of steel plate quality assurance equipment according to the present invention including the above steel plate temperature measurement means, and Fig. 48 illustrates a propagation flow of temperature information according to the present invention.

A steel plate manufacturing line includes the heating furnace 1, finishing mill 2, CR cooling shower 4, and accelerated cooling equipment 5, and Fig. 47 illustrates a state in which the steel plate 3 is positioned between the finishing mill 2 and the CR cooling shower 4.

7, 7c, and 7d denote spot type radiation thermometers, 6c and 6d denote scanning radiation thermometers, 7 is installed just approximate to the finishing mill, and measures controlled rolling start temperature during rolling, and the data thereof is transmitted to the controlled rolling start temperature + finishing temperature collecting PC 11. 7c, 7d, 6c, and 6d are installed on the downstream side of the accelerated cooling equipment, 7c and 6c are high-temperature thermometers, 7d and 6d are low-temperature thermometers, 6c and 6d measure a temperature distribution in the width direction and in the length direction of the upper surface of the steel plate immediately after accelerated cooling, 7c and 7d measure a temperature in the length direction, and the data thereof is transmitted to the cooling stop temperature PC13. 7c and 6c are used for the temperature management of an accelerated cooling material, and 7d and 6d are used for the temperature management of a direct quenching material.

8, 8c, and 8d denote optical fiber radiation thermometers, 8 measures temperature in the length direction of the lower surface of a steel plate of the finishing mill, and the data thereof is transmitted to the controlled rolling start temperature + finishing temperature collecting PC 11. 8c and 8d are installed on the downstream side of the accelerated cooling equipment, 8c is a high-temperature thermometer, 8d is a low-temperature thermometer, both measure a temperature distribution in the width direction and in the length direction of the lower surface of the steel plate immediately after accelerated cooling, and the data thereof is transmitted to the cooling stop temperature collecting PC 13. 8c is used for the temperature management of an accelerated cooling material, and 8d is used for the temperature management of a direct quenching material.

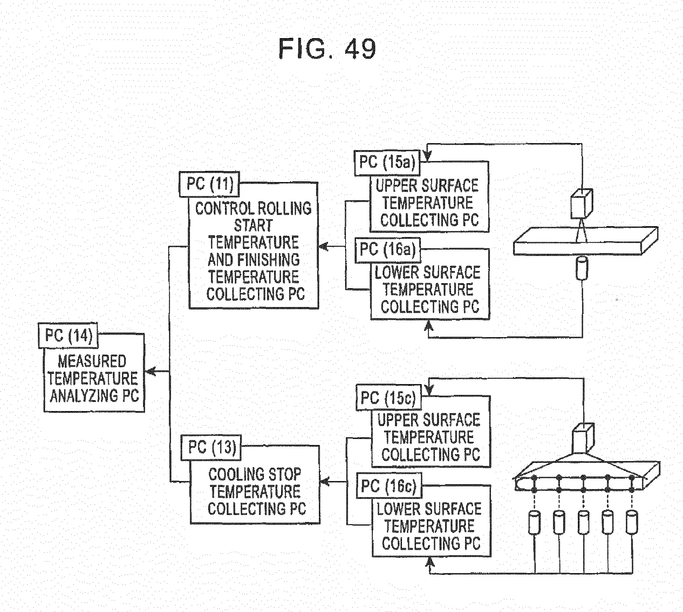

Next, a propagation flow wherein the steel plate temperature information measured at each thermometer is transmitted to each PC will be described with reference to Fig. 48 and Fig. 49. 11 denotes a controlled rolling start temperature + finishing temperature collecting PC, 13 denotes a cooling stop temperature collecting PC, and 14 denotes a temperature experience analyzing PC.

The temperature information of the upper surface of the steel plate measured at the spot type radiation thermometer 7 installed on the upstream side of the finishing mill is transmitted to the controlled rolling start temperature + finishing temperature collecting PC 11 via the temperature collecting PC 15a of the upper surface of the steel plate, and the temperature collecting PC 16a of the lower surface of the steel plate, where rolling temperature management such as controlled rolling start temperature, rolling finishing temperature, and so forth, and management of the temperature distribution in the length direction of the steel plate are performed.

The temperature information of the upper surface of the steel plate measured at the spot type radiation thermometers 7c and 7d, and the scanning radiation thermometers 6c and 6d installed on the downstream side of the accelerated cooling equipment 5, and the temperature information of the lower surface of the steel plate measured at the optical fiber radiation thermometers 8c and 8d are transmitted to the cooling stop temperature collecting PC 13 via the temperature collecting PC 15c of the upper surface of the steel plate, and the temperature collecting PC 16c of the lower surface of the steel plate, where accelerated cooling stop temperature management, and management of the temperature distribution in the width direction and in the length direction of the steel plate are performed.

Each of the controlled rolling start temperature + finishing temperature collecting PC 11, and the cooling stop temperature collecting PC 13, such illustrated in Fig. 49, the controlled rolling start temperature + finishing temperature collecting PC 11 is made up of the temperature collecting PCs 15a and 15c of the upper surface of the steel plate, and the temperature collecting PCs 16a and 16c of the lower surface of the steel plate, and each of the temperature of the upper surface of the steel plate, and the temperature of the lower surface of the steel plate is input to the temperature experience analyzing PC 14.

With the actual equipment production, the operating control temperature (controlled rolling start temperature + finishing temperature, and cooling stop temperature) range, and the temperature measurement experience input to the temperature experience analyzing PC 14 are compared, and quality determination is carried out, whereby the quality of the whole area of a steel plate can be assured. Note that the temperature experience analyzing PC 14 recognizes the whole of temperature on the upstream side of the finishing mill, and on the downstream side of the accelerated cooling equipment, determines the quality from a particular threshold value, temperature allowable range, a calculation model of mechanical property, and so forth, and outputs the information of a trimmed portion whereby desired quality can be secured from a large plate.

Also, the temperature of the upper and lower surfaces of slab at the heating furnace of the following plate and thereafter is adjusted from the temperature difference experience of the upper and lower surfaces, the water flow rate of the accelerated cooling equipment is controlled in the width direction and in the longitudinal direction from the temperature distribution in the width direction and in the longitudinal direction of a steel plate, whereby steel plate defective shape can be reduced.

According to the present Invention, advantages have been obtained such that the reject ratio of a material test decreases around 30% as compared to that according to the related art, curvature deformation correction time is reduced around 20%, the defective shape of a steel plate is suppressed around 10%, and so forth.

(Fifteenth Embodiment)

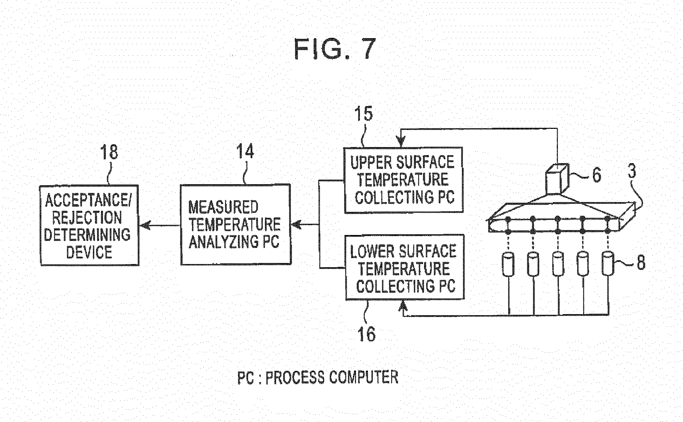

Fig. 6 is a diagram for describing the outline of a whole equipment example for applying the present invention. Fig. 7 is a diagram illustrating a portion of the configuration of an acceptance/rejection determining device from temperature collection. In Fig. 6, 1 denotes a heating furnace, 2 denotes a finishing mill, 3 denotes a steel plate, 5 denotes cooling equipment, 6a, 6b, 6c, and 6d denote scanning radiation thermometers, 7, 7a, 7b, 7c, and 7d denote spot type radiation thermometers, 8, 8a, 8b, 8c, and 8d denote optical fiber radiation thermometers, 11 denotes a controlled rolling start temperature collecting PC, 13 denotes a cooling stop temperature collecting PC, 15 denotes a temperature collecting PC of the upper surface of a steel plate, 16 denotes a temperature collecting PC of the lower surface of a steel plate, 14 denotes a temperature experience analyzing PC, and 18 denotes an acceptance/rejection determining device. A steel plate manufacturing line includes the heating furnace 1, finishing mill 2, and accelerated cooling equipment 5, and Fig. 6 illustrates a state in which the steel plate 3 is positioned on the downstream side of the finishing mill 2 (downstream side).

For example, the temperature measured at the steel plate temperature measurement means made up of a scanning radiation thermometer 6a and an optical fiber radiation thermometer 8a disposed on the downstream side of the finishing mill is input to the controlled rolling start temperature + finishing temperature collecting PC 11. Also, the temperature measured at the temperature measurement means made up of a scanning radiation thermometer 6c and an optical fiber radiation thermometer 8c disposed on the downstream side of the cooling equipment 5 is input to the cooling stop temperature collecting device 10.

The temperature collecting means are made up of the controlled rolling start temperature + finishing temperature collecting PC 11, and the cooling stop temperature collecting PC 13, each of which is made up of the temperature collecting PC 15 of the upper surface of a steel plate, and the temperature collecting PC 16 of the lower surface of the steel plate, each of the temperature of the upper surface of the steel plate, and the temperature of the lower surface of the steel plate is input to the temperature experience analyzing PC 14 that is temperature analyzing means (see Fig. 7). The temperature experience analyzing PC 14 calculates the temperature of the whole area of the upper and lower surfaces of the steel plate from the experience temperature input to the finishing temperature collecting PC 11 and the cooling stop temperature collecting PC 13.

With the manufacturing line, it is difficult due to occurrence of cooling water, falling of a foreign object or the like, water vapor, or the like to measure the temperature distribution of the whole area particularly on the lower surface side of the steel plate of the transportation line. Therefore, with the present Invention, as temperature measurement means, a scanning radiation thermometer capable of measuring a temperature distribution in the width direction is disposed on the upper surface (steel plate upper surface) side of the steel plate of the transportation line having a relatively good environment, but two or more (e.g., five) optical fiber radiation thermometers are disposed on the lower surface (steel plate lower surface) of the transportation line having a poor environment. With regard to the steel plate lower surface, the temperature distribution of the whole area cannot be measured, and accordingly, with the temperature calculating PC 13 of the whole area, the temperature distribution of the whole surface on the steel plate lower surface side is obtained by calculation from the temperature distribution measurement value of the whole area on the steel plate upper surface side, and the temperature measurement values of two or more points on the steel plate lower surface side.

Subsequently, the acceptance/rejection determining device 18 compares the calculated temperature of the whole area of the steel plate upper and lower surfaces, and the operating control temperature (steel plate finishing temperate, cooling stop temperature) to perform acceptance/rejection determination regarding whether or not the calculated temperature is include in a range.

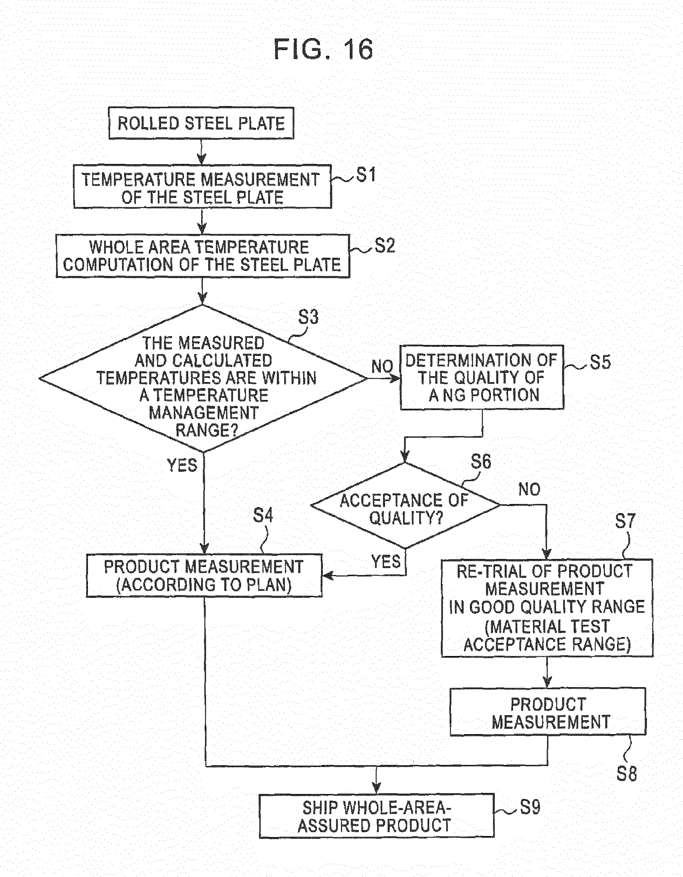

Fig. 16 is a flowchart illustrating a processing procedure example of a steel plate quality determining method according to the present invention. First, after the temperature distribution of the upper and lower surfaces of a rolled steel plate is measured by the temperature measurement means (the upper surface side of the steel plate is measured by a scanning radiation thermometer, the lower surface side of the steel plate is measured by an optical fiber radiation thermometer), and is input to the temperature collecting PC (finishing temperature collecting PC or cooling temperature collecting PC) (S1).

In S1, the temperature of the whole area has been measured regarding the steel plate upper surface side, but the temperature of the whole area has not been measured, and accordingly, the temperature of the whole area on the steel plate lower surface side is calculated by the temperature analyzing means (temperature experience analyzing PC) (S2). Subsequently, the (later-described) calculated temperature of the whole area of the steel plated upper and lower surface sides are compared with the operating control temperature (steel plate finishing temperature, cooling stop temperature) to perform acceptance/rejection determination regarding whether or not the calculated temperature is included in an allowable temperature range (S3).

Subsequently, if the calculated temperature is included in an allowable temperature range at all of the locations thereof (Yes in S3), product measurement is performed (S4), and in the event of out of range (No in S3), quality determination of this out-of-range region is performed (S5). With regard to the quality determination of this out-of-range region, quality determination is performed using past experience data indicating relationship between test results by the past quality test device, and steel plate manufacturing conditions including other than the temperature measurement value. In the event that there is a location of which the quality has not been passed in S6, in order to avoid the rejected portion, the blank layout size is corrected so as to perform product measurement within a good quality range (S7), and product measurement is performed (S8).

Also, in the event that the quality has been passed in S6, product measurement is performed with the blank layout size according to plan (S4). Thus, a whole-area-quality-assured product may be shipped (S9). Also, the shape may be improved across the whole area of the shape.

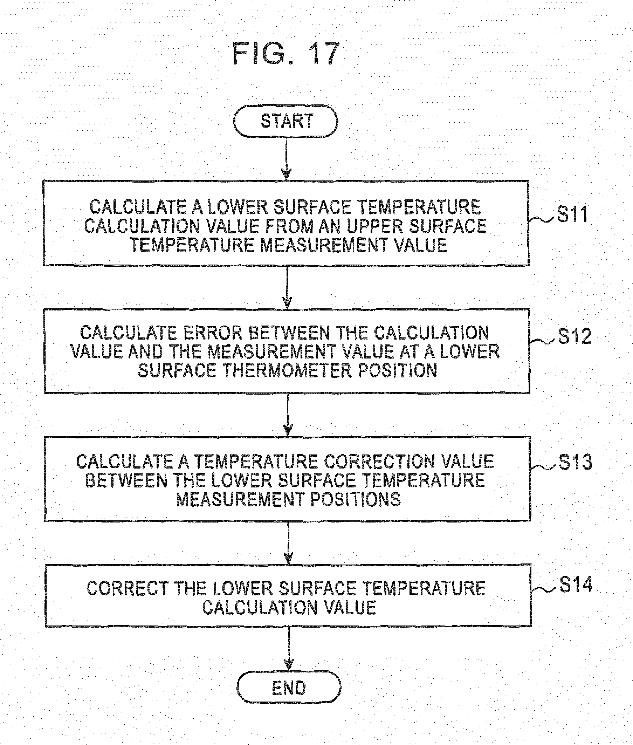

Fig. 17 is a flowchart illustrating a processing procedure example of the temperature calculation of the whole area of the steel plate lower surface indicated in S2 in Fig. 16. Description will be made in the following in accordance with the drawing. Description will be made regarding an example in the event that the temperature on the steel plate upper surface side is measured at a scanning temperature thermometer, and the temperature on the steel plate lower surface side is measured in the width direction regarding five points.

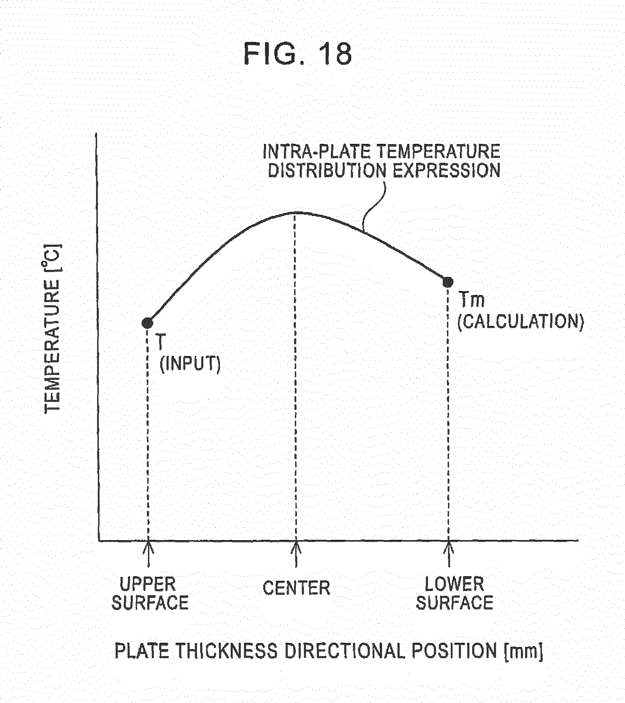

First, an intra-plate temperature distribution expression is used to calculate a temperature calculation value $Tm$ on the lower surface of a steel plate from a temperature measurement value $T$ on the steel plate upper surface side (S11). Fig. 18 is a diagram for describing a calculation method of a temperature calculation value on the lower surface of the steel plate. Here, the intra-plate temperature distribution expression is an expression for providing an intra-plate temperature distribution in the plate thickness direction, and accordingly, a solution method expression of a theoretical heat transfer expression, or a regression expression of measured temperature should be employed. The temperature measurement value on the upper surface side of the steel plate, and the plate thickness are input to this temperature distribution expression to calculate the temperature of a position on the lower surface side of the steel plate corresponding to a position where temperature has been measured on the upper surface side of the steel plate (the positions in the longitudinal direction and in the width direction are the same as those on the upper surface side of the steel plate).

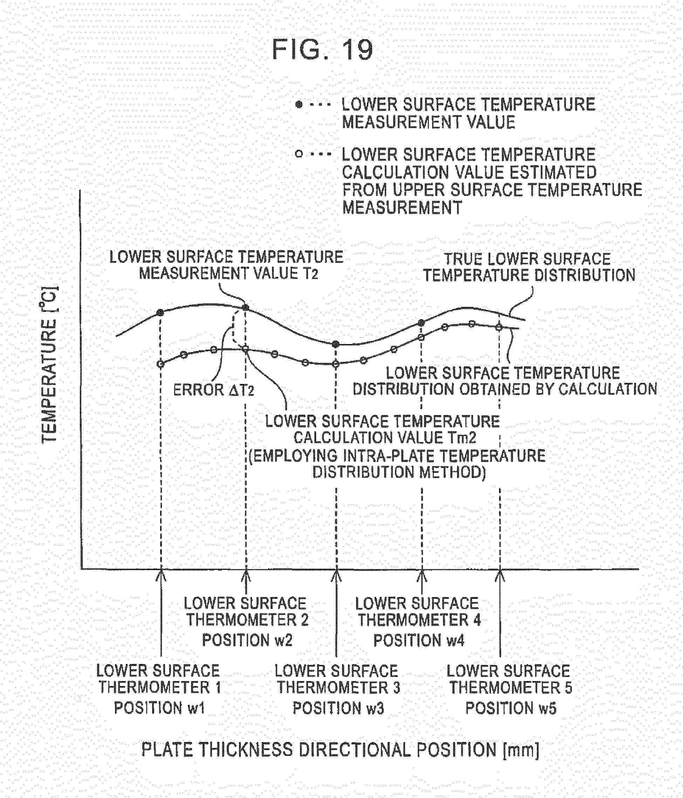

Next, the error of the temperature measurement value on the lower surface side of the steel plate calculated in S11 is obtained (S12). Fig. 19 is a diagram illustrating positional relationship between the temperature measurement value on the lower surface of the steel plate in the plate width direction, and the temperature calculated value. The temperature calculation value on the lower surface side of the steel plate is calculated from a measured value on the upper surface side of the steel plate measured by a scanning radiation thermometer, the calculation values of a great number of positions (e.g., several millimeter interval) may be obtained (representative points alone are displayed in Fig. 19). Among of these, error as to the temperature measurement value is obtained regarding a temperature calculation value of which the position is matched with a temperature measurement value on the lower surface side of the steel measured by an optical fiber radiation thermometer (five points in the width direction). Subsequently, this error becomes the temperature correction value of the temperature calculation value at this position. Note that the temperature measurement positions on the upper surface side of the steel plate and on the lower surface side of the steel plate are preferably closed as much as possible.

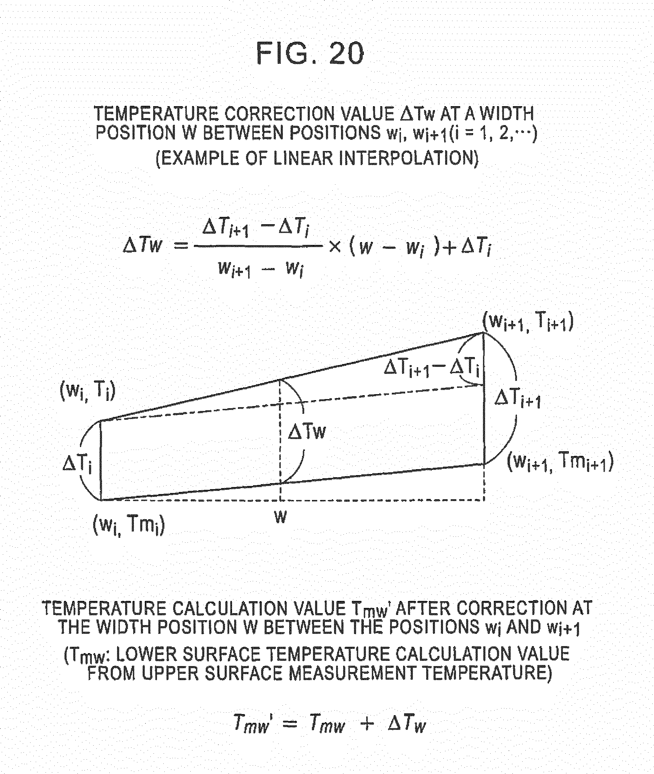

Next, the correction value of a temperature calculation value at other than a temperature measurement position on the lower surface side of the steel plate is obtained from the error (correction value) obtained in S12 (S13). Fig. 20 is a diagram illustrating a procedure example for calculating the correction values of temperature calculation values between adjacent temperature measurement positions $w_l$, $w_{l+1}$ (i = 1, 2, ...) on the lower surface side of the steel plate. Here, a temperature collection value $\Delta Tw$ at a width position w is calculated from error at positions $w_l$, $w_{l+1}$ by being interpolated through linear interpolation according to the width direction w, and specifically is calculated by the following Expression (1).

[Math. 1]

$$\Delta Tw = \frac{\Delta T_{l+1} - \Delta T_l}{w_{l+1} - w_l} \times (w - w_l) + \Delta T_l \quad \cdots \cdots \quad (1)$$

However, w: width position where the temperature calculation value is obtained, $Tm_l$: temperature calculation value at the width position $w_l$, $Tm_{l+1}$: temperature calculation valued at the width position $w_{l+1}$, Ti: temperature measurement value at the width position $w_l$ on the lower surface side of the steel plate, $T_{l+1}$: temperature measurement value at the width position $w_{l+1}$ on the lower surface side of the steel plate, $\Delta T$: error at the width position $w_l$ on the lower surface side of the steel plate, $\Delta T_{l+1}$: error at the width position $w_{l+1}$ on the lower surface side of the steel plate

Note that description has been made regarding an example wherein interpolation is performed by linear interpolation using two points, but various interpolation methods may be employed such that error change amount is obtained by linear interpolation.

Next, the correction value $\Delta Tw$ obtained in S13 is used to perform correction of the temperature calculation value on the lower surface of the steel plate by the following Expression (2), thereby obtaining the temperature distribution on the lower surface of the steel plate. At this time, with regard to the measurement position of an optical fiber radiation thermometer, error in S12 becomes a correction value.

[Math. 2]

$$Tmw' = Tmw + \Delta Tw \quad \ldots (2)$$

However, Tmw': temperature calculation value after correction at the width position w, Tmw: temperature calculation value before correction at the width position w

(Sixteenth Embodiment)

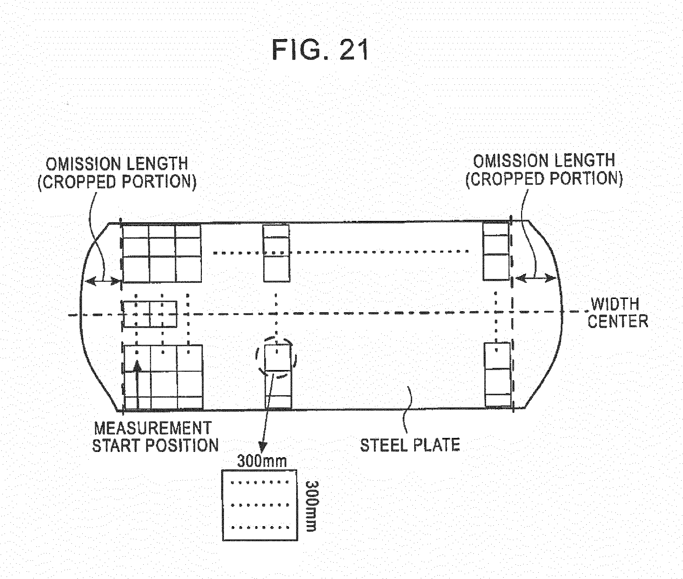

The present embodiment differs from the first embodiment in that, with the calculation processing, the whole area of the steel plate is delimited by mesh to be divided into two or more regions, and points other than that are the same, and accordingly, different points will be described with reference to Figs. 21, 15, and 22.

Fig. 21 is a diagram for describing how to cut mesh on a steel plate, and represents a scene in which the center in the width direction of the steel plate is matched with the center of the mesh, and is divided by mesh of 300 × 300 mm (width × length) for example. The size of the mesh may be set in accordance with a measurement object and conditions as appropriate (e.g., 200 through 1000 mm or the like). Management is made with a temperature representative value within the mesh thus determined. Here, the temperature representative value is temperature representing the mesh, and for example, one of the maximum temperature, the minimum temperature, mean temperature, and so forth except for apparent abnormal values is employed. Hereafter, the maximum temperature will be described as an example. Here, employing the maximum temperature as representative temperature is preferable in that data including the measurement error (temperature specification lower than the true value) of a radiation thermometer due to influence of water spread or water vapor on the upper surface of the steel plate can be removed. Hereafter, the maximum temperature will be described as an example. Note that both edge portions in the width direction (unsteady portion) and omission length (cropped portion) are usually taken as out of an object range.

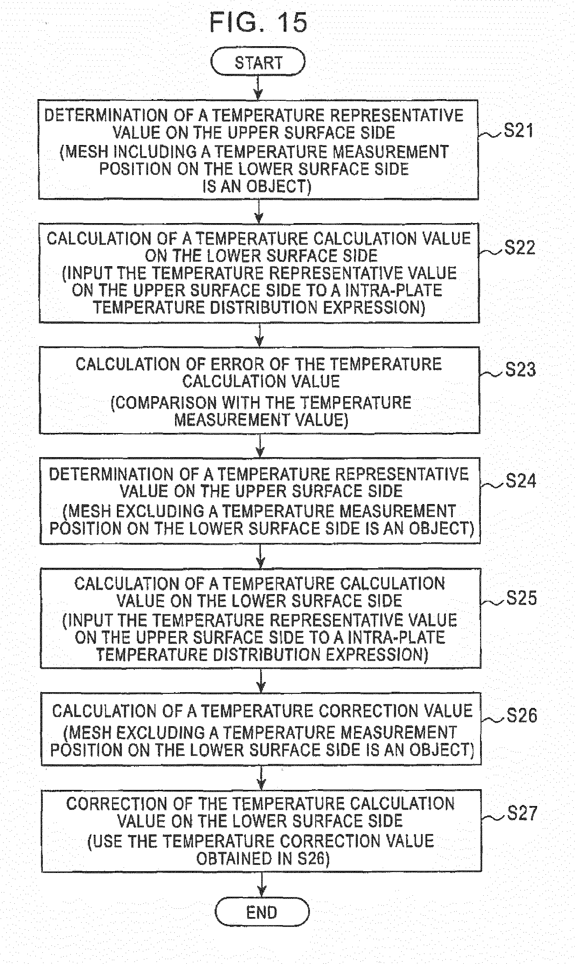

Such as illustrated in Fig. 21, description will be made regarding a flowchart illustrating a procedure for measuring or calculating temperature of the whole area of the upper and lower surfaces of the steel plate, which is a region divided from the mesh such as illustrated in Fig. 21, with reference to Fig. 15.

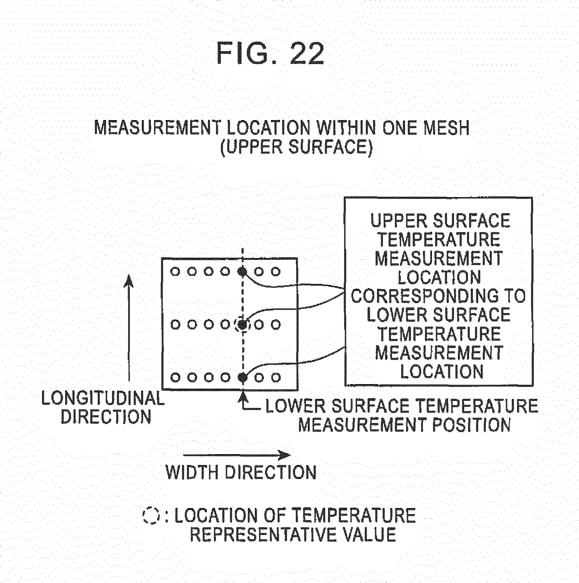

First, determination of a temperature representative value on the upper surface side of the steel plate is performed with the mesh including temperature measurement positions on the lower surface side of the steel plate as an object (S21). Fig. 22 is a diagram for describing how to determine the temperature representative value on the upper surface side of the steel plate within the mesh including the temperature measurement positions of the lower surface of the steel plate. Temperature measurement points on the upper surface side of the steel plate are represented with a white circle mark or black circle mark Of the mesh including the temperature measurement positions of the lower surface of the steel plate, black circle marks (three points) of these, are positions to be matched with the temperature measurement positions of the lower surface of the steel plate, and the temperature measurement values matched with the temperature measurement positions of the lower surface of the steel plate are temperature representative value candidates. Subsequently, the maximum temperature of these three points is taken as the temperature representative value. In the drawing, the location of the temperature representative value is represented with a black circle mark surrounded with a dashed line circle mark (the middle of the three points). Note that in the event that mean temperature is taken as the temperature representative value, addition average is obtained from the temperature of a black circle mark excluding an abnormal value.

Next, the temperature calculation value of the lower surface of the steel plate is calculated from the temperature representative value on the upper surface side of the steel plate obtained in S21 (S22). A procedure for calculating the temperature calculation value on the lower surface side of the steel plate from the temperature representative value on the upper surface side of the steel plate may be obtained in the same procedure by replacing the temperature measurement value on the upper surface side of the steel plate according to the first embodiment with the temperature value.

Next, error of the temperature calculation value on the lower surface side of the steel plate calculated in S22 as to the temperature measurement value is obtained (S23). This error is also the temperature correction value of the temperature calculation value of the mesh. The above processing from S21 to S23 is performed with the mesh including all of the thermometer positions of the lower surface of the steel plate (five meshes in the event that the temperature of the lower surface has been measured regarding five points).

Next, processing is performed with a mesh excluding the temperature measurement positions of the lower surface of the steel plate as an object. In the same way as with S21, determination of the temperature representative value of the upper surface of the steel plate is performed (S24). The temperature representative value within a mesh (e.g., the maximum temperature excluding an apparent abnormal value) is determined. Further, in the same way as with S22, calculation of the temperature calculation value of the lower surface of the steel plate is performed using an intra-plate temperature distribution method (S25).

Next, the correction value of the temperature calculation value of the lower surface of the steel plate is calculated (S26). The calculation procedure of a correction value mentioned here is the same as with S13 of the fifteenth embodiment. Error between the temperature measured value on the lower surface side of the steel plate obtained in S23, and the calculation value, i.e., based on the correction value on the position thereof, the correction value of the temperature calculation value of a mesh excluding the thermometers of the lower surface of the steel plate, positioned between meshes including the thermometer positions of the lower surface of the steel plate, is calculated by linear interpolation or curve interpolation or the like from a relative position relation of meshes.

Thus obtained correction value is used to correct the temperature calculation value of the lower surface of the steel plate calculated in S25, thereby determining the temperature of the mesh thereof (S27). In the event that the above processing has been performed regarding all of the meshes not corresponding to the temperature measurement positions of the lower surface of the steel plate, the processing regarding all the widths ends.

Subsequently, next, the next mesh in the longitudinal direction is sequentially subjected to the processing in S21 through S27, and in the event that the processing has been completed regarding all the set meshes, calculation of the temperature of the whole area of the upper and lower surfaced of the steel plate ends.

According to the present invention described above, with a quality design, alloying elements to be added may be reduced by reducing the margin cost of material property, and consequently, manufacturing cost may be reduced. Also, the target temperature range may be extended, and accordingly, a material having strict quality specifications can be manufactured at accelerated cooling process after rolling.

Also, the temperature of the whole area is subjected to acceptance/rejection determination, whereby outflow of a quality rejected portion can be prevented. Further, cooling water flow rate at cooling equipment is adjusted based on the temperature measurement experience of a quality rejected material, whereby quality rejected materials can be reduced (quality rejected ratio is reduced from 0.11% to 0.08%).

**Claims**

1.  Steel plate quality assurance equipment comprising, together with a steel plate manufacturing line including a finishing mill (2), and accelerated cooling equipment (5) installed on the downstream side of the finishing mill as to the advancing direction of the steel plate manufacturing line:

    temperature measurement means (6, 7, 8) configured to measure steel plate temperature; and

measured temperature analyzing means (14) configured to analyze the measured steel plate temperature; **characterized in that**
a scanning radiation thermometer (6) and a spot type radiation thermometer (7) each of which is made up of a plurality of high-temperature thermometers and low-temperature thermometers are disposed on the downstream side in the advancing direction of the steel plate manufacturing line of said accelerated cooling equipment (5).

2. The steel plate quality assurance equipment according to Claim 1, wherein a spot type radiation thermometer (7) and a scanning radiation thermometer (6) installed on the downstream side in the advancing direction of the steel plate manufacturing line of said accelerated cooling equipment (5) are each made up of a plurality of high-temperature thermometers, which measure a temperature range between 200 °C and 700 °C, and low-temperature thermometers, which measure a temperature range between 50 °C and 300 °C.

3. Steel plate quality assurance equipment comprising, together with a steel plate manufacturing line including a finishing mill (2) and accelerated cooling equipment (5) disposed above a transportation line on the downstream side of said finishing mill as to the advancing direction of the steel plate manufacturing line:

   temperature measurement means (6, 7, 8) configured to measure steel plate temperature at least on the upstream side or downstream side of said finishing mill (2), and at least on the upstream side or downstream side of said accelerated cooling equipment (5); and
   measured temperature analyzing means (14) configured to analyze the steel plate temperature measured by said temperature measurement means (6, 7, 8); **characterized in that**
   said temperature measurement means (6, 7, 8) includes a plurality of optical fiber radiation thermometers (8a, 8b, 8c, 8d) installed at least on the upstream side or downstream side of said finishing mill (2), and at least on the upstream side or downstream side of said accelerated cooling equipment (5), and installed at least on the lower surface side of said transportation line in the line width direction with an arbitrary interval;
   and **in that** said measured temperature analyzing means (14) obtains steel plate temperature from the temperatures measured at said temperature measurement means (6, 7, 8).

4. The steel plate quality assurance equipment according to any one of Claims 1 through 3, wherein, with said temperature measurement means (6, 7, 8), as to the advancing direction of the steel plate manufacturing line, a spot type radiation thermometer (7) is disposed on the upstream side of said finishing mill (2), a spot type radiation thermometer (7) and a scanning radiation thermometer (6) are disposed on the downstream side of said finishing mill (2), and on the upstream side and downstream side of said accelerated cooling equipment (5) above the transportation line of said steel plate manufacturing line, a spot-type optical fiber thermometer (8) is disposed below said transportation line at a position where the spot type radiation thermometer (7) and scanning radiation thermometer (6) face sandwiching said transportation line, a plurality of said spot-type optical fiber thermometers (8) disposed at a position facing said scanning radiation thermometer (6) are disposed in the scanning direction of said scanning radiation thermometer (6) with an appropriate interval, and said measured temperature analyzing means (14) is configured to obtain a temperature distribution of the whole of a steel plate (3) from temperatures measured at said temperature measurement means (6, 7, 8).

5. The steel plate quality assurance equipment according to Claim 1 or 2, wherein as to the advancing direction of the steel plate manufacturing line, said temperature measurement means (6, 7) is made up of a spot type radiation thermometer (7) installed above the upper surface side of a steel plate (3) of the steel plate manufacturing line, and installed on the upstream side of the finishing mill (2), and a spot type radiation thermometer (7) and a scanning radiation thermometer (6) installed on the downstream side of the finishing mill (2), and the upstream side and downstream side of the accelerated cooling equipment (5), and said measured temperature analyzing means (14) is made up of means for obtaining a temperature distribution of the whole of the steel plate (3) from steel plate temperatures measured by each of said temperature measurement means (6, 7).

6. The steel plate quality assurance equipment according to Claim 1 or 2, wherein said temperature measurement means (6, 7, 8) includes a plurality of optical fiber radiation thermometers (8) installed on the lower surface side of a transportation line of said steel plate manufacturing line on the downstream side of said finishing mill (2), and the upstream side and downstream side of said accelerated cooling equipment (5) in the line width direction with an arbitrary interval, and said measured temperature analyzing means (14) is made up of means for obtaining a temperature distribution of the whole of a steel plate (3) from steel plate temperatures measured by said plurality of optical fiber radiation thermometers (8).

7. The steel plate quality assurance equipment according to any one of Claims 1 through 3, wherein said temperature measurement means (6, 7, 8) is made up of a spot type radiation thermometer (7) and a scanning radiation thermometer (6) installed at respective positions on the downstream side of the finishing mill (2) and on the upstream side and downstream side of the accelerated cooling equipment (5) above the upper surface side of a steel plate (3) of the steel plate manufacturing line, an optical fiber radiation thermometer (8) installed on the lower surface side of the steel plate (3) of the steel plate manufacturing line at a position corresponding to the spot type radiation thermometer (7) on the upper surface side of said steel plate (3), and a plurality of optical fiber radiation thermometers (8) installed at a position corresponding to said scanning radiation thermometer (6) in the line width direction with an arbitrary interval, and said measured temperature analyzing means (14) is made up of means for obtaining a temperature distribution of the whole of the steel plate (3) from steel plate temperatures measured by each of said temperature measurement means (6, 7, 8).

8. The steel plate quality assurance equipment according to any one of Claims 1 through 3, wherein said temperature measurement means (6, 7, 8) is made up of a spot type radiation thermometer (7) installed on the upstream side of the finishing mill (2) above the upper surface side of a steel plate (3) of the steel plate manufacturing line, a spot type radiation thermometer (7) and a scanning radiation thermometer (6) installed at respective positions on the downstream side of the finishing mill (2) and the downstream side of the accelerated cooling equipment (5), an optical fiber radiation thermometer (8) installed at respective positions on the lower side of the steel plate (3) of said steel plate manufacturing line, corresponding to the spot type radiation thermometer (7) on the upper surface side of said steel plate (3), and a plurality of optical fiber radiation thermometers (8) installed on the lower surface side of the steel plate (3) of the steel plate manufacturing line at respective positions corresponding to said scanning radiation thermometer (6) in the line width direction with an arbitrary interval, and said measured temperature analyzing means (14) is made up of means for obtaining a temperature distribution of the whole of the steel plate (3) from steel plate temperatures measured by each of said temperature measurement means (6, 7, 8).

9. The steel plate quality assurance equipment according to Claim 1 or 2, wherein said temperature measurement means (6, 7, 8) is made up of a spot type radiation thermometer (7) and a scanning radiation thermometer (6) installed on the downstream side of said accelerated cooling equipment (5) above the upper surface side of a steel plate (3) of the steel plate manufacturing line, an optical fiber radiation thermometer (8) installed on the lower surface side of the steel plate (3) of said steel plate manufacturing line at a position corresponding to the spot type radiation thermometer (7) on the upper surface side of said steel plate (3), and a plurality of optical fiber radiation thermometers (8) installed at positions corresponding to said scanning radiation thermometer (6) in the line width direction with an arbitrary interval, and said measured temperature analyzing means (14) is made up of means for obtaining a temperature distribution of the whole of the steel plate (3) from steel plate temperatures measured by each of said temperature measurement means (6, 7, 8).

10. The steel plate quality assurance equipment according to Claim 1 or 2, wherein said temperature measurement means (6, 7, 8) is made up of a spot type radiation thermometer (7) and a scanning radiation thermometer (6) installed at respective positions on the upstream side and downstream side of said accelerated cooling equipment (5) above the upper surface side of a steel plate (3) of the steel plate manufacturing line, an optical fiber radiation thermometer (8) installed at a position corresponding to the spot type radiation thermometer (7) on the upper surface side of said steel plate (3), on the lower surface side of the steel plate of said steel plate manufacturing line, and a plurality of optical fiber radiation thermometers (8) installed at a position corresponding to said scanning radiation thermometer (6) in the line width direction with an arbitrary interval, and said measured temperature analyzing means (14) is made up of means for obtaining a temperature distribution of the whole of the steel plate (3) from steel plate temperatures measured by each of said temperature measurement means (6, 7, 8).

11. The steel plate quality assurance equipment according to any one of Claims 1 through 3, wherein said temperature measurement means (6, 7, 8) is made up of a spot type radiation thermometer (7) and a scanning radiation thermometer (6) installed at respective positions on the downstream side of the finishing mill (2), and on the downstream side of the accelerated cooling equipment (5) above the upper surface side of a steel plate (3) of the steel plate manufacturing line, an optical fiber radiation thermometer (8) installed on the lower surface side of the steel plate (3) of said steel plate manufacturing line at a position corresponding to a spot type radiation thermometer (7) on the upper surface side of said steel plate (3), and a plurality of optical fiber radiation thermometers (8) installed at a position corresponding to said scanning radiation thermometer (6) in the line width direction with an arbitrary interval, and said measured temperature analyzing means (14) is made up of means for obtaining a temperature distribution of the whole of the steel plate (3) from steel plate temperatures measured by each of said temperature measurement means (6, 7, 8).

**12.** The steel plate quality assurance equipment according to any one of Claims 1 through 3, wherein said temperature measurement means is made up of a spot type radiation thermometer (7) installed on the upstream side of the finishing mill (2), above the upper surface side of a steel plate (3) of the steel plate manufacturing line, a spot type radiation thermometer (7) and a scanning radiation thermometer (6) installed at respective positions on the upstream side and downstream side of the accelerated cooling equipment (5), an optical fiber radiation thermometer (8) installed on the lower surface side of the steel plate (3) of said steel plate manufacturing line at a position corresponding to the spot type radiation thermometer (7) on the upstream side of said finishing mill (2) and on the upstream side and downstream side of said accelerated cooling equipment (5), and a plurality of optical fiber radiation thermometers (8) installed at a position corresponding to said scanning radiation thermometer (6) in the line width direction with an arbitrary interval, and said measured temperature analyzing means (14) is made up of means for obtaining a temperature distribution of the whole of the steel plate (3) from steel plate temperatures measured by each of said temperature measurement means (6, 7, 8) .

**13.** The steel plate quality assurance equipment according to any one of Claims 1 through 3, wherein said temperature measurement means (6, 7, 8) is made up of a spot type radiation thermometer (7) installed on the upstream side of the finishing mill (2), above the upper surface side of a steel plate (3) of the steel plate manufacturing line, a spot type radiation thermometer (7) and a scanning radiation thermometer (6) installed on the downstream side of the accelerated cooling equipment (5), an optical fiber radiation thermometer (8) installed on the lower surface side of the steel plate (3) of said steel plate manufacturing line at a position corresponding to a spot type radiation thermometer (7) on the upstream side of said finishing mill (2) and on the downstream side of said accelerated cooling equipment (5), and a plurality of optical fiber radiation thermometers (8) installed on a position corresponding to said scanning radiation thermometer (6) in the line width direction with an arbitrary interval, and said measured temperature analyzing means (14) is made up of means for obtaining a temperature distribution of the whole of the steel plate (3) from steel plate temperatures measured by each of said temperature measurement means (6, 7, 8).

**14.** The steel plate quality assurance equipment according to any one of Claims 1 through 13, said measured temperature analyzing means (14) comprising:

first temperature measurement means configured to measure a surface temperature distribution of one surface side of the upper surface of a steel plate (3), and the lower surface of the steel plate;
second temperature measurement means configured to measure surface temperature of measurement points of which the number of measurement points is smaller than measurement points to be measured by said first temperature measurement means, on a surface different from a surface to be measured by said first temperature measurement means; and
means configured to calculate the surface temperature of a measurement location of said second temperature measurement means from measurement temperature by said first temperature measurement means, to obtain calculation error from the difference between the calculated temperature and the temperature measured by said second temperature measurement means, and to calculate surface temperature other than the measurement locations of said second temperature measurement means using this calculation error.

**15.** A steel plate manufacturing method employing the steel plate quality assurance equipment according to any one of the Claims 1 through 13, wherein, with manufacturing of a following steel plate (3), the running condition of at least one of a heating furnace (1), a finishing mill (2), and accelerated cooling equipment (5) is controlled to prevent defective shape based on a steel plate temperature distribution measured by the steel plate quality assurance equipment.

**16.** The steel plate manufacturing method according to Claim 15, wherein in order to prevent defective shape, in the event of a heating furnace (1), temperature of upper and lower surface of a steel plate (3) and/or gas flow rate of upper and lower surface of the steel plate within the heating furnace (1) is controlled, and in the event of a finishing mill (2), peripheral-speed of upper and lower surface of the steel plate (3) and/or descaling water flow rate of upper and lower surfaces of the steel plate is controlled, and in the event of cooling equipment (5), at least one of water flow rate in the plate width direction, plate length direction or water flow rate of upper and lower surfaces of the steel plate (3) is controlled.

**Patentansprüche**

**1.** Stahlplatten-Qualitätssicherungssystem, das zusammen mit einer Stahlplatten-Fertigungslinie, die eine Fertigungsstraße (2) und Ausrüstung zur beschleunigten Kühlung (5) umfasst, welche auf der nachgelagerten Seite der Fertigungsstraße bezüglich der Vorschubrichtung der Fertigungslinie installiert ist, umfasst:

Temperaturmessmittel (6, 7, 8), die zum Messen der Stahlplattentemperatur ausgelegt sind; und

Analysemittel (14) für die gemessene Temperatur, die zum Analysieren der gemessenen Stahlplattentemperatur ausgelegt sind; **dadurch gekennzeichnet, dass**

ein Abtast-Strahlungsthermometer (6) und ein Punktstrahlungsthermometer (7), die jeweils aus einer Vielzahl von Hochtemperaturthermometern und Tieftemperaturthermometern bestehen, auf der nachgelagerten Seite in der Vorschubrichtung der Stahlplatten-Fertigungslinie der Ausrüstung (5) zur beschleunigten Kühlung angeordnet sind.

2. Stahlplatten-Qualitätssicherungssystem nach Anspruch 1, wobei ein Punktstrahlungsthermometer (7) und ein Abtast-Strahlungsthermometer (6), die auf der nachgelagerten Seite in der Vorschubrichtung der Stahlplatten-Fertigungslinie der Ausrüstung (5) zur beschleunigten Kühlung installiert sind, jeweils aus einer Vielzahl von Hochtemperaturthermometern bestehen, die einen Temperaturbereich zwischen 200 °C und 700 °C messen, und aus Tieftemperaturthermometern bestehen, welche einen Temperaturbereich zwischen 50 °C und 300 °C messen.

3. Stahlplatten-Qualitätssicherungssystem, das zusammen mit einer Stahlplatten-Fertigungslinie, die eine Fertigungsstraße (2) und Ausrüstung zur beschleunigten Kühlung (5) umfasst, welche oberhalb einer Transportlinie auf der nachgelagerten Seite der Fertigungsstraße in der Vorschubrichtung der Stahlplatten-Fertigungslinie angeordnet ist, umfasst:

Temperaturmessmittel (6, 7, 8), die zum Messen der Stahlplattentemperatur zumindest auf der Zufuhrseite oder der nachgelagerten Seite der Fertigungsstraße (2) und mindestens auf der Zufuhrseite oder der nachgelagerten Seite der Ausrüstung (5) zur beschleunigten Kühlung ausgelegt sind; und

Analysemittel (14) für die gemessene Temperatur, die zum Analysieren der Stahlplattentemperatur ausgelegt sind, welche durch die genannten Mittel (6, 7, 8) zur Temperaturmessung gemessen wird; **dadurch gekennzeichnet, dass**

die Temperaturmessmittel (6, 7, 8) eine Vielzahl von Lichtleiter-Strahlungsthermometern (8a, 8b, 8c, 8d) umfassen, die zumindest auf der Zufuhrseite oder der nachgelagerten Seite der Fertigungsstraße (2) installiert sind, und zumindest auf der Zufuhrseite oder der nachgelagerten Seite der Ausrüstung (5) zur beschleunigten Kühlung und zumindest auf der Unterseite der Transportlinie in der Linienbreitenrichtung in einem beliebigen Intervall installiert sind;

und dadurch, dass die Analysemittel (14) für die gemessene Temperatur die Stahlplattentemperatur aus den Temperaturen gewinnen, die an den Temperaturmessmitteln (6, 7, 8) gemessen werden.

4. Stahlplatten-Qualitätssicherungsausrüstung nach einem der Ansprüche 1 bis 3, wobei mit den Temperaturmessmitteln (6, 7, 8), in Bezug auf die Vorschubrichtung der Stahlplatten-Fertigungslinie, ein Punktstrahlungsthermometer (7) auf der Zufuhrseite der Fertigungsstraße (2) angeordnet ist, ein Punktstrahlungsthermometer (7) und ein Abtast-Strahlungsthermometer (6) sind auf der nachgelagerten Seite der Fertigungsstraße (2) angeordnet, und auf der Zufuhrseite und der nachgelagerten Seite der Ausrüstung (5) zur beschleunigten Kühlung oberhalb der Transportlinie der Stahlplatten-Fertigungslinie ist ein Lichtleiter-Punktstrahlungsthermometer (8) unterhalb der Transportlinie an einer Stelle angeordnet, wo das Punktstrahlungsthermometer (7) und das Abtast-Strahlungsthermometer (6) gegenüber dem Zusammenführen der Transportlinie liegen, eine Vielzahl von Punkt-Lichtleiterthermometern (8), die an einer Stelle angeordnet sind, die dem Abtast-Strahlungsthermometer (6) gegenüberliegen, in der Abtastrichtung des Abtast-Strahlungsthermometers (6) in einem geeigneten Intervall angeordnet sind, und die Analysemittel (14) für die gemessene Temperatur sind dafür ausgelegt, eine Temperaturverteilung der ganzen Stahlplatte (3) aus den Temperaturen zu gewinnen, die an den Temperaturmessmitteln (6, 7, 8) gemessen werden.

5. Stahlplatten-Qualitätssicherungsausrüstung nach Anspruch 1 oder 2, wobei bezüglich der Vorschubrichtung der Stahlplatten-Fertigungslinie die Temperaturmessmittel (6, 7) aus einem Punktstrahlungsthermometer (7) bestehen, das oberhalb der Oberseite einer Stahlplatte (3) der Stahlplatten-Fertigungslinie installiert ist, und das auf der Zufuhrseite der Fertigungsstraße (2) installiert ist, und aus einem Punktstrahlungsthermometer (7) und einem Abtast-Strahlungsthermometer (6) bestehen, die auf der nachgelagerten Seite der Fertigungsstraße (2) und auf der Zufuhrseite und der nachgelagerten Seite der Ausrüstung (5) zur beschleunigten Kühlung installiert sind, die Analysemittel (14) für die gemessene Temperatur bestehen aus Mitteln zum Gewinnen einer Temperaturverteilung der ganzen Stahlplatte (3) aus den Temperaturen der Stahlplatte, die von jedem der Temperaturmessmittel (6, 7) gemessen werden.

6. Stahlplatten-Qualitätssicherungsausrüstung nach Anspruch 1 oder 2, wobei die Temperaturmessmittel (6, 7, 8) eine Vielzahl von Lichtleiter-Strahlungsthermometern (8) umfassen, die auf der Unterseite einer Transportlinie der Stahlplatten-Fertigungslinie auf der nachgelagerten Seite der Fertigungsstraße (2) angeordnet sind, und auf der Zufuhrseite und der nachgelagerten Seite der Ausrüstung (5) zur beschleunigten Kühlung in Linienbreitenrichtung in einem beliebigen Intervall, und die Analysemittel (14) für die gemessene Temperatur bestehen aus Mitteln zum Gewinnen einer Temperaturverteilung der ganzen Stahlplatte (3) aus den Stahlplattentemperaturen, die von der Vielzahl von Lichtleiter-Strahlungsthermometern (8) gemessen werden.

7. Stahlplatten-Qualitätssicherungsausrüstung nach einem der Ansprüche 1 bis 3, wobei die Temperaturmessmittel (6, 7, 8) aus einem Punktstrahlungsthermometer (7) und einem Abtast-Strahlungsthermometer (6) bestehen, die an entsprechenden Positionen auf der nachgelagerten Seite der Fertigungsstraße (2) und auf der Zufuhrseite und der nachgelagerten Seite der Ausrüstung (5) zur beschleunigten Kühlung oberhalb der Oberseite einer Stahlplatte (3) der Stahlplatten-Fertigungslinie installiert sind, einem Lichtleiter-Strahlungsthermometer (8), das auf der Unterseite der Stahlplatte (3) der Stahlplatten-Fertigungslinie an einer Position installiert ist, die dem Punktstrahlungsthermometer (7) auf der Oberseite der Stahlplatte (3) entspricht, und einer Vielzahl von Lichtleiter-Strahlungsthermometern (8), die an einer Position installiert sind, die dem Abtast-Strahlungsthermometer (6) in Linienbreitenrichtung in einem beliebigen Intervall entspricht, und die Analysemittel (14) für die gemessene Temperatur bestehen aus Mitteln zum Gewinnen einer Temperaturverteilung der ganzen Stahlplatte (3) aus den Stahlplattentemperaturen, die von jedem der Temperaturmessmittel (6, 7, 8) gemessen werden.

8. Stahlplatten-Qualitätssicherungsausrüstung nach einem der Ansprüche 1 bis 3, wobei die Temperaturmessmittel (6, 7, 8) aus einem Punktstrahlungsthermometer (7), das auf der Zufuhrseite der Fertigungsstraße (2) oberhalb der Oberseite einer Stahlplatte (3) der Stahlplatten-Fertigungslinie installiert ist, einem Punktstrahlungsthermometer (7) und einem Abtast-Strahlungsthermometer (6) bestehen, die an entsprechenden Positionen auf der nachgelagerten Seite der Fertigungsstraße (2) und auf der nachgelagerten Seite der Ausrüstung (5) zur beschleunigten Kühlung installiert sind, einem Lichtleiter-Strahlungsthermometer (8), das an entsprechenden Positionen auf der Unterseite der Stahlplatte (3) der Stahlplatten-Fertigungslinie installiert ist, die dem Punktstrahlungsthermometer (7) auf der Oberseite der Stahlplatte (3) entspricht, und einer Vielzahl von Lichtleiter-Strahlungsthermometern (8), die auf der Unterseite der Stahlplatte (3) der Stahlplatten-Fertigungslinie an entsprechenden Position installiert sind, die dem Abtast-Strahlungsthermometer (6) in Linienbreitenrichtung in einem beliebigen Intervall entsprechen, und die Analysemittel (14) für die gemessene Temperatur bestehen aus Mitteln zum Gewinnen einer Temperaturverteilung der ganzen Stahlplatte (3) aus den Stahlplattentemperaturen, die von jedem der Temperaturmessmittel (6, 7, 8) gemessen werden.

9. Stahlplatten-Qualitätssicherungsausrüstung nach einem der Ansprüche 1 oder 2, wobei die Temperaturmessmittel (6, 7, 8) aus einem Punktstrahlungsthermometer (7) und einem Abtast-Strahlungsthermometer (6) bestehen, die auf der nachgelagerten Seite der Ausrüstung (5) zur beschleunigten Kühlung oberhalb der Oberseite einer Stahlplatte (3) der Stahlplatten-Fertigungslinie installiert sind, einem Lichtleiter-Strahlungsthermometer (8), das auf der Unterseite der Stahlplatte (3) der Stahlplatten-Fertigungslinie an einer Position installiert ist, die dem Punktstrahlungsthermometer (7) auf der Oberseite der Stahlplatte (3) entspricht, und einer Vielzahl von Lichtleiter-Strahlungsthermometern (8) bestehen, die an Positionen installiert sind, die dem Abtast-Strahlungsthermometer (6) in Linienbreitenrichtung in einem beliebigen Intervall entsprechen, und wobei die Analysemittel (14) für die gemessene Temperatur aus Mitteln zum Gewinnen einer Temperaturverteilung der ganzen Stahlplatte (3) aus den Stahlplattentemperaturen bestehen, die von jedem der Temperaturmessmittel (6, 7, 8) gemessen werden.

10. Stahlplatten-Qualitätssicherungsausrüstung nach einem der Ansprüche 1 oder 2, wobei die Temperaturmessmittel (6, 7, 8) aus einem Punktstrahlungsthermometer (7) und einem Abtast-Strahlungsthermometer (6) bestehen, die an entsprechenden Positionen auf der Zufuhrseite und der nachgelagerten Seite der Ausrüstung (5) zur beschleunigten Kühlung oberhalb der Oberseite einer Stahlplatte (3) der Stahlplatten-Fertigungslinie installiert sind, einem Lichtleiter-Strahlungsthermometer (8), das an einer Position installiert ist, die dem Punktstrahlungsthermometer (7) auf der Oberseite der Stahlplatte (3) entspricht, auf der Unterseite der Stahlplatte der Stahlplatten-Fertigungslinie und einer Vielzahl von Lichtleiter-Strahlungsthermometern (8), die an einer Position installiert sind, die dem Abtast-Strahlungsthermometer (6) in Linienbreitenrichtung in einem beliebigen Intervall entspricht, und wobei die Analysemittel (14) für die gemessene Temperatur aus Mitteln zum Gewinnen einer Temperaturverteilung der ganzen Stahlplatte (3) aus den Stahlplattentemperaturen bestehen, die von jedem der Temperaturmessmittel (6, 7, 8) gemessen werden.

11. Stahlplatten-Qualitätssicherungsausrüstung nach einem der Ansprüche 1 bis 3, wobei die Temperaturmessmittel (6, 7, 8) aus einem Punktstrahlungsthermometer (7) und einem Abtast-Strahlungsthermometer (6) bestehen, die an entsprechenden Positionen auf der nachgelagerten Seite der Fertigungsstraße (2) und auf der nachgelagerten Seite der Ausrüstung (5) zur beschleunigten Kühlung oberhalb der Oberseite einer Stahlplatte (3) der Stahlplatten-Fertigungslinie installiert sind, einem Lichtleiter-Strahlungsthermometer (8), das auf der Unterseite der Stahlplatte (3) der Stahlplatten-Fertigungslinie an einer Position installiert ist, die einem Punktstrahlungsthermometer (7) auf der Oberseite der Stahlplatte (3) entspricht, und einer Vielzahl von Lichtleiter-Strahlungsthermometern (8), die an einer Position installiert sind, die dem Abtast-Strahlungsthermometer (6) in Linienbreitenrichtung in einem beliebigen Intervall entspricht, und die Analysemittel (14) für die gemessene Temperatur bestehen aus Mitteln zum Gewinnen einer Temperaturverteilung der ganzen Stahlplatte (3) aus den Stahlplattentemperaturen, die von jedem der Temperaturmessmittel (6, 7, 8) gemessen werden.

12. Stahlplatten-Qualitätssicherungsausrüstung nach einem der Ansprüche 1 bis 3, wobei die Temperaturmessmittel aus einem Punktstrahlungsthermometer (7), das auf der Zufuhrseite der Fertigungsstraße (2) installiert ist, oberhalb der Oberseite einer Stahlplatte (3) der Stahlplatten-Fertigungslinie, einem Punktstrahlungsthermometer (7) und einem Abtast-Strahlungsthermometer (6) bestehen, die an entsprechenden Positionen auf der Zufuhrseite und der nachgelagerten Seite der Ausrüstung (5) für beschleunigte Kühlung installiert sind, einem Lichtleiter-Strahlungsthermometer (8), das auf der Unterseite der Stahlplatte (3) der Stahlplatten-Fertigungslinie an einer Position installiert ist, die dem Punktstrahlungsthermometer (7) auf der Zufuhrseite der Fertigungsstraße (2) entspricht, und auf der Zufuhrseite und der nachgelagerten Seite der Ausrüstung (5) zur beschleunigten Kühlung und einer Vielzahl von Lichtleiter-Strahlungsthermometern (8), die an einer Position installiert sind, die dem Abtast-Strahlungsthermometer (6) in Linienbreitenrichtung in einem beliebigen Intervall entspricht, und die Analysemittel (14) für die gemessene Temperatur bestehen aus Mitteln zum Gewinnen einer Temperaturverteilung der ganzen Stahlplatte (3) aus den Stahlplattentemperaturen, die von jedem der Temperaturmessmittel (6, 7, 8) gemessen werden.

13. Stahlplatten-Qualitätssicherungsausrüstung nach einem der Ansprüche 1 bis 3, wobei die Temperaturmessmittel (6, 7, 8) aus einem Punktstrahlungsthermometer (7), das auf der Zufuhrseite der Fertigungsstraße (2) installiert ist, oberhalb der Oberseite einer Stahlplatte (3) der Stahlplatten-Fertigungslinie, einem Punktstrahlungsthermometer (7) und einem Abtast-Strahlungsthermometer (6) bestehen, die auf der nachgelagerten Seite der Ausrüstung (5) zur beschleunigten Kühlung installiert sind, einem Lichtleiter-Strahlungsthermometer (8), das auf der Unterseite der Stahlplatte (3) der Stahlplatten-Fertigungslinie an einer Position installiert ist, die einem Punktstrahlungsthermometer (7) auf der Zufuhrseite der Fertigungsstraße (2) entspricht, und auf der nachgelagerten Seite der Ausrüstung (5) zur beschleunigten Kühlung, und einer Vielzahl von Lichtleiter-Strahlungsthermometern (8), die an einer Position installiert sind, die dem Abtast-Strahlungsthermometer (6) in Linienbreitenrichtung in einem beliebigen Intervall entspricht, und die Analysemittel (14) für die gemessene Temperatur bestehen aus Mitteln zum Gewinnen einer Temperaturverteilung der ganzen Stahlplatte (3) aus den Stahlplattentemperaturen, die von jedem der Temperaturmessmittel (6, 7, 8) gemessen werden.

14. Stahlplatten-Qualitätssicherungsausrüstung nach einem der Ansprüche 1 bis 13, wobei die Analysemittel (14) für die gemessene Temperatur umfassen:

ein erstes Temperaturmessmittel, das zum Messen einer Oberflächentemperaturverteilung von einer Oberflächenseite der Oberseite einer Stahlplatte (3) und der Unterseite der Stahlplatte ausgelegt ist;
ein zweites Temperaturmessmittel, das zum Messen der Oberflächentemperatur von Messpunkten ausgelegt ist, deren Zahl der Messpunkte kleiner als die Messpunkte ist, die vom ersten Temperaturmessmittel gemessen werden soll, auf einer Fläche, die sich von der Fläche unterscheidet, die vom ersten Temperaturmessmittel gemessen werden soll; und
Mittel, die zum Berechnen der Oberflächentemperatur einer Messstelle des zweiten Temperaturmessmittels aus der Messtemperatur ausgelegt ist, die vom ersten Temperaturmessmittel gemessen wird, um den Berechnungsfehler aus der Differenz zwischen der berechneten Temperatur und der Temperatur zu gewinnen, die vom zweiten Temperaturmessmittel gemessen wird, und um die Oberflächentemperatur an anderen Stellen, als den Messstellen des zweiten Temperaturmessmittels, unter Verwendung dieses Berechnungsfehlers zu berechnen.

15. Stahlplatten-Herstellungsverfahren, das die Stahlplatten-Qualitätssicherungsausrüstung nach einem der Ansprüche 1 bis 13 einsetzt, wobei bei der Herstellung einer folgenden Stahlplatte (3) der Betriebszustand von mindestens einem Element aus einem Heizofen (1), einer Fertigungsstraße (2) und einer Ausrüstung (5) zum beschleunigten Kühlen so gesteuert wird, dass eine fehlerhafte Form auf der Basis einer Stahlplatten-Temperaturverteilung verhindert wird, die durch die Stahlplatten-Qualitätssicherungsausrüstung gemessen wird.

**16.** Stahlplatten-Herstellungsverfahren nach Anspruch 15, wobei zum Verhindern einer fehlerhaften Form im Fall eines Heizofens (1) die Temperatur der Oberseite und Unterseite einer Stahlplatte (3) und/oder die Gasdurchflussmenge der Ober- und Unterseite der Stahlplatte innerhalb des Heizofens (1) gesteuert wird, und im Fall einer Fertigungsstraße (2) wird die periphere Geschwindigkeit der Ober- und Unterseite der Stahlplatte (3) und/oder der Entkalkungswasserdurchsatz der Ober- und Unterseiten der Stahlplatte gesteuert, und im Fall der Kühlausrüstung (5) wird mindestens eine Größe aus Wasserdurchflussrate in der Plattenbreitenrichtung, Plattenlängsrichtung oder die Wasserdurchflussrate der Ober- und Unterseiten der Stahlplatte (3) gesteuert.

**Revendications**

**1.** Equipement d'assurance qualité de plaque d'acier comprenant, conjointement avec une chaîne de fabrication de plaques d'acier incluant un train finisseur (2), et un équipement de refroidissement accéléré (5) installé sur le côté aval du train finisseur en fonction du sens d'avancement de la chaîne de fabrication de plaques d'acier :

des moyens de mesure de température (6, 7, 8) conçus pour mesurer une température de plaque d'acier ; et des moyens d'analyse de température mesurée (14) conçus pour analyser la température de plaque d'acier mesurée ; **caractérisé en ce que** un thermomètre à rayonnement par balayage (6) et un thermomètre à rayonnement ponctuel (7), chacun étant composé d'une pluralité de thermomètres haute température et de thermomètres basse température, sont disposés sur le côté aval dans le sens d'avancement de la chaîne de fabrication de plaques d'acier dudit équipement de refroidissement accéléré (5).

**2.** Equipement d'assurance qualité de plaque d'acier selon la revendication 1, dans lequel un thermomètre à rayonnement ponctuel (7) et un thermomètre à rayonnement par balayage (6) installés sur le côté aval dans le sens d'avancement de la chaîne de fabrication de plaques d'aciers dudit équipement de refroidissement accéléré (5) sont chacun composés d'une pluralité de thermomètres haute température, lesquels mesurent une plage de températures comprise entre 200° C et 700° C, et de thermomètres basse température, lesquels mesurent une plage de températures comprise entre 50° C et 300° C.

**3.** Equipement d'assurance qualité de plaque d'acier comprenant, conjointement avec une chaîne de fabrication de plaques d'aciers incluant un train finisseur (2), et un équipement de refroidissement accéléré (5) disposé au-dessus d'une chaîne de transport sur le côté aval dudit train finisseur en fonction du sens d'avancement de la chaîne de fabrication de plaques d'acier :

des moyens de mesure de température (6, 7, 8) conçus pour mesurer une température de plaque d'acier au moins sur le côté amont ou le côté aval dudit train finisseur (2), et au moins sur le côté amont ou le côté aval dudit équipement de refroidissement accéléré (5) ; et des moyens d'analyse de température mesurée (14) conçus pour analyser la température de plaque d'acier mesurée par lesdits moyens de mesure de température (6, 7, 8) ; **caractérisé en ce que** lesdits moyens de mesure de température (6, 7, 8) incluent une pluralité de thermomètres à rayonnement par fibre optique (8a, 8b, 8c, 8d) installés au moins sur le côté amont ou le côté aval dudit train finisseur (2), et au moins sur le côté amont ou le côté aval dudit équipement de refroidissement accéléré (5), et installés au moins sur le côté de surface inférieure de ladite chaîne de transport dans le sens de la largeur de la chaîne avec un intervalle arbitraire ; et **en ce que** lesdits moyens d'analyse de température mesurée (14) obtiennent une température de plaque d'acier à partir des températures mesurées au niveau desdits moyens de mesure de température (6, 7, 8).

**4.** Equipement d'assurance qualité de plaque d'acier selon l'une quelconque des revendications 1 à 3, dans lequel, avec lesdits moyens de mesure de température (6, 7, 8), en fonction du sens d'avancement de la chaîne de fabrication de plaques d'acier, un thermomètre à rayonnement ponctuel (7) est disposé sur le côté amont dudit train finisseur (2), un thermomètre à rayonnement ponctuel (7) et un thermomètre à rayonnement par balayage (6) sont disposés sur le côté aval dudit train finisseur (2), et sur le côté amont et le côté aval dudit équipement de refroidissement accéléré (5) au-dessus de la chaîne de transport de ladite chaîne de fabrication de plaques d'acier, un thermomètre à fibre optique ponctuel (8) est disposé en dessous de ladite chaîne de transport au niveau d'une position où le thermomètre à rayonnement ponctuel (7) et le thermomètre à rayonnement par balayage (6) se font face en prenant en sandwich ladite chaîne de transport, une pluralité desdits thermomètre à fibre optique ponctuels (8) disposés au niveau d'une position faisant face audit thermomètre à rayonnement par balayage (6) sont disposés dans le sens de balayage dudit thermomètre à rayonnement par balayage (6) avec un intervalle approprié, et lesdits moyens d'analyse de température mesurée (14) sont conçus pour obtenir une répartition de température de l'ensemble d'une plaque d'acier (3) à partir de températures mesurées au niveau desdits moyens de mesure de température (6, 7, 8).

5. Equipement d'assurance qualité de plaque d'acier selon la revendication 1 ou 2, dans lequel en fonction du sens d'avancement de la chaîne de fabrication de plaques d'acier, lesdits moyens de mesure de température (6, 7) sont composés d'un thermomètre à rayonnement ponctuel (7) installé au-dessus du côté de surface supérieure d'une plaque d'acier (3) de la chaîne de fabrication de plaques d'aciers, et installé sur le côté amont du train finisseur (2), et d'un thermomètre à rayonnement ponctuel (7) et d'un thermomètre à rayonnement par balayage (6) installés sur le côté aval du train finisseur (2), et le côté amont et le côté aval de l'équipement de refroidissement accéléré (5), et lesdits moyens d'analyse de température mesurée (14) sont composés de moyens d'obtention d'une répartition de température de l'ensemble de la plaque d'acier (3) à partir de températures de plaque d'acier mesurées par chacun desdits moyens de mesure de température (6, 7).

6. Equipement d'assurance qualité de plaque d'acier selon la revendication 1 ou 2, dans lequel lesdits moyens de mesure de température (6, 7, 8) incluent une pluralité de thermomètres à rayonnement par fibre optique (8) installés sur le côté de surface inférieure d'une chaîne de transport de ladite chaîne de fabrication de plaques d'acier sur le côté aval dudit train finisseur (2), et le côté amont et le côté aval dudit équipement de refroidissement accéléré (5) dans le sens de la largeur de la chaîne avec un intervalle arbitraire, et lesdits moyens d'analyse de température mesurée (14) sont composés de moyens d'obtention d'une répartition de température de l'ensemble d'une plaque d'acier (3) à partir de températures de plaque d'acier mesurées par ladite pluralité de thermomètres à rayonnement par fibre optique (8).

7. Equipement d'assurance qualité de plaque d'acier selon l'une quelconque des revendication 1 à 3, dans lequel lesdits moyens de mesure de température (6, 7, 8) sont composés d'un thermomètre à rayonnement ponctuel (7) et d'un thermomètre à rayonnement par balayage (6) installés au niveau de positions respectives sur le côté aval du train finisseur (2) et sur le côté amont et le côté aval de l'équipement de refroidissement accéléré (5) au-dessus du côté de surface supérieure d'une plaque d'acier (3) de la chaîne de fabrication de plaques d'acier, d'un thermomètre à rayonnement par fibre optique (8) installé sur le côté de surface inférieure de la plaque d'acier (3) de la chaîne de fabrication de plaques d'acier au niveau d'une position correspondant au thermomètre à rayonnement ponctuel (7) sur le côté de surface supérieure de ladite plaque d'acier (3), et d'une pluralité de thermomètres à rayonnement par fibre optique (8) installés au niveau d'une position correspondant audit thermomètre à rayonnement par balayage (6) dans le sens de la largeur de la chaîne avec un intervalle arbitraire, et lesdits moyens d'analyse de température mesurée (14) sont composés de moyens d'obtention d'une répartition de température de l'ensemble de la plaque d'acier (3) à partir de températures de plaque d'acier mesurées par chacun desdits moyens de mesure de température (6, 7, 8).

8. Equipement d'assurance qualité de plaque d'acier selon l'une quelconque des revendications 1 à 3, dans lequel lesdits moyens de mesure de température (6, 7, 8) sont composés d'un thermomètre à rayonnement ponctuel (7) installé sur le côté amont du train finisseur (2) au-dessus du côté de surface supérieure d'une plaque d'acier (3) de la chaîne de fabrication de plaques d'acier, d'un thermomètre à rayonnement ponctuel (7) et d'un thermomètre à rayonnement par balayage (6) installés au niveau de positions respectives sur le côté aval du train finisseur (2) et le côté aval de l'équipement de refroidissement accéléré (5), d'un thermomètre à rayonnement par fibre optique (8) installé au niveau de positions respectives sur le côté inférieur de la plaque d'acier (3) de ladite chaîne de fabrication de plaques d'acier, correspondant au thermomètre à rayonnement ponctuel (7) sur le côté de surface supérieure de ladite plaque d'acier (3), et d'une pluralité de thermomètres à rayonnement par fibre optique (8) installés sur le côté de surface inférieure de la plaque d'acier (3) de la chaîne de fabrication de plaques d'acier au niveau de positions respectives correspondant audit thermomètre à rayonnement par balayage (6) dans le sens de la largeur de la chaîne avec un intervalle arbitraire, et lesdits moyens d'analyse de température mesurée (14) sont composés de moyens d'obtention d'une répartition de température de l'ensemble de la plaque d'acier (3) à partir de températures de plaque d'acier mesurées par chacun desdits moyens de mesure de température (6, 7, 8).

9. Equipement d'assurance qualité de plaque d'acier selon la revendication 1 ou 2, dans lequel lesdits moyens de mesure de température (6, 7, 8) sont composés d'un thermomètre à rayonnement ponctuel (7) et d'un thermomètre à rayonnement par balayage (6) installés sur le côté aval dudit équipement de refroidissement accéléré (5) au-dessus du côté de surface supérieure d'une plaque d'acier (3) de la chaîne de fabrication de plaques d'acier, d'un thermomètre à rayonnement par fibre optique (8) installé sur le côté de surface inférieure de la plaque d'acier (3) de ladite chaîne de fabrication de plaques d'acier au niveau d'une position correspondant au thermomètre à rayonnement ponctuel (7) sur le côté de surface supérieure de ladite plaque d'acier (3), et d'une pluralité de thermomètres à rayonnement par fibre optique (8) installés au niveau de positions correspondant audit thermomètre à rayonnement par balayage (6) dans le sens de la largeur de la chaîne avec un intervalle arbitraire, et lesdits moyens d'analyse de température mesurée (14) sont composés de moyens d'obtention d'une répartition de température de l'ensemble de la plaque d'acier (3) à partir de températures de plaque d'acier mesurées par chacun desdits moyens de mesure de température (6, 7, 8).

10. Equipement d'assurance qualité de plaque d'acier selon la revendication 1 ou 2, dans lequel lesdits moyens de mesure de température (6, 7, 8) sont composés d'un thermomètre à rayonnement ponctuel (7) et d'un thermomètre à rayonnement par balayage (6) installés au niveau de positions respectives sur le côté amont et le côté aval dudit équipement de refroidissement accéléré (5) au-dessus du côté de surface supérieure d'une plaque d'acier (3) de la chaîne de fabrication de plaques d'acier, d'un thermomètre à rayonnement par fibre optique (8) installé au niveau d'une position correspondant au thermomètre à rayonnement ponctuel (7) sur le côté de surface supérieure de ladite plaque d'acier (3), sur le côté de surface inférieure de la plaque d'acier de ladite chaîne de fabrication de plaques d'acier, et d'une pluralité de thermomètres à rayonnement par fibre optique (8) installés au niveau d'une position correspondant audit thermomètre à rayonnement par balayage (6) dans le sens de la largeur de la chaîne avec un intervalle arbitraire, et lesdits moyens d'analyse de température mesurée (14) sont composés de moyens d'obtention d'une répartition de température de l'ensemble de la plaque d'acier (3) à partir de températures de plaque d'acier mesurées par chacun desdits moyens de mesure de température (6, 7, 8).

11. Equipement d'assurance qualité de plaque d'acier selon l'une quelconque des revendications 1 à 3, dans lequel lesdits moyens de mesure de température (6, 7, 8) sont composés d'un thermomètre à rayonnement ponctuel (7) et d'un thermomètre à rayonnement par balayage (6) installés au niveau de positions respectives sur le côté aval du train finisseur (2), et sur le côté aval de l'équipement de refroidissement accéléré (5) au-dessus du côté de surface supérieure d'une plaque d'acier (3) de la chaîne de fabrication de plaques d'acier, d'un thermomètre à rayonnement par fibre optique (8) installé sur le côté de surface inférieure de la plaque d'acier (3) de ladite chaîne de fabrication de plaques d'acier au niveau d'une position correspondant à un thermomètre à rayonnement ponctuel (7) sur le côté de surface supérieure de ladite plaque d'acier (3), et d'une pluralité de thermomètres à rayonnement par fibre optique (8) installés au niveau d'une position correspondant audit thermomètre à rayonnement par balayage (6) dans le sens de la largeur de la chaîne avec un intervalle arbitraire, et lesdits moyens d'analyse de température mesurée (14) sont composés de moyens d'obtention d'une répartition de température de l'ensemble de la plaque d'acier (3) à partir de températures de plaque d'acier mesurées par chacun desdits moyens de mesure de température (6, 7, 8).

12. Equipement d'assurance qualité de plaque d'acier selon l'une quelconque des revendications 1 à 3, dans lequel lesdits moyens de mesure de température sont composés d'un thermomètre à rayonnement ponctuel (7) installé sur le côté amont du train finisseur (2), au-dessus du côté de surface supérieure d'une plaque d'acier (3) de la chaîne de fabrication de plaques d'acier, d'un thermomètre à rayonnement ponctuel (7) et d'un thermomètre à rayonnement par balayage (6) installés au niveau de positions respectives sur le côté amont et le côté aval de l'équipement de refroidissement accéléré (5), d'un thermomètre à rayonnement par fibre optique (8) installé sur le côté de surface inférieure de la plaque d'acier (3) de ladite chaîne de fabrication de plaques d'acier au niveau d'une position correspondant au thermomètre à rayonnement ponctuel (7) sur le côté amont dudit train finisseur (2) et sur le côté amont et le côté aval dudit équipement de refroidissement accéléré (5), et d'une pluralité de thermomètres à rayonnement par fibre optique (8) installés au niveau d'une position correspondant audit thermomètre à rayonnement par balayage (6) dans le sens de la largeur de la chaîne avec un intervalle arbitraire, et lesdits moyens d'analyse de température mesurée (14) sont composés de moyens d'obtention d'une répartition de température de l'ensemble de la plaque d'acier (3) à partir de températures de plaque d'acier mesurées par chacun desdits moyens de mesure de température (6, 7, 8).

13. Equipement d'assurance qualité de plaque d'acier selon l'une quelconque des revendications 1 à 3, dans lequel lesdits moyens de mesure de température (6, 7, 8) sont composés d'un thermomètre à rayonnement ponctuel (7) installé sur le côté amont du train finisseur (2), au-dessus du côté de surface supérieure d'une plaque d'acier (3) de la chaîne de fabrication de plaques d'acier, d'un thermomètre à rayonnement ponctuel (7) et d'un thermomètre à rayonnement par balayage (6) installés sur le côté aval de l'équipement de refroidissement accéléré (5), d'un thermomètre à rayonnement par fibre optique (8) installé sur le côté de surface inférieure de la plaque d'acier (3) de ladite chaîne de fabrication de plaques d'acier au niveau d'une position correspondant à un thermomètre à rayonnement ponctuel (7) sur le côté amont dudit train finisseur (2) et sur le côté aval dudit équipement de refroidissement accéléré (5), et d'une pluralité de thermomètres à rayonnement par fibre optique (8) installés sur une position correspondant audit thermomètre à rayonnement par balayage (6) dans le sens de la largeur de la chaîne avec un intervalle arbitraire, et lesdits moyens d'analyse de température mesurée (14) sont composés de moyens d'obtention d'une répartition de température de l'ensemble de la plaque d'acier (3) à partir de températures de plaque d'acier mesurées par chacun desdits moyens de mesure de température (6, 7, 8).

14. Equipement d'assurance qualité de plaque d'acier selon l'une quelconque des revendications 1 à 13, lesdits moyens d'analyse de température mesurée (14) comprenant :

des premiers moyens de mesure de température conçus pour mesurer une répartition de température de surface d'un côté de surface de la surface supérieure d'une plaque d'acier (3), et de la surface inférieure de la plaque d'acier ;
des seconds moyens de mesure de température conçus pour mesurer une température de surface de points de mesure, le nombre de points de mesure étant inférieur à celui des points de mesure devant être mesurés par lesdits premiers moyens de mesure de température, sur une surface différente d'une surface devant être mesurée par lesdits premiers moyens de mesure de température ; et
des moyens conçus pour calculer la température de surface d'un emplacement de mesure desdits seconds moyens de mesure de température à partir d'une température de mesure par lesdits moyens de mesure de température, pour obtenir une erreur de calcul à partir de la différence entre la température calculée et la température mesurée par lesdits seconds moyens de mesure de température, et pour calculer une température de surface autre que celle des emplacements de mesure desdits seconds moyens de mesure de température à l'aide de cette erreur de calcul.

15. Procédé de fabrication de plaque d'acier utilisant l'équipement d'assurance qualité de plaque d'acier selon l'une quelconque des revendications 1 à 13, dans lequel, avec la fabrication d'une plaque d'acier (3) suivante, l'état de fonctionnement d'au moins l'un d'un four de réchauffage (1), d'un train finisseur (2), et de l'équipement de refroidissement accéléré (5) est contrôlé pour éviter une forme défectueuse sur la base d'une répartition de température de plaque d'acier mesurée par l'équipement d'assurance qualité de plaque d'acier.

16. Procédé de fabrication de plaque d'acier selon la revendication 15, dans lequel afin d'éviter une forme défectueuse, dans le cas d'un four de réchauffage (1), une température de la surface supérieure et inférieure d'une plaque d'acier (3) et/ou un débit de gaz de surface supérieure et inférieure de la plaque d'acier à l'intérieur du four de réchauffage (1) est/sont contrôlé(e)s, et dans le cas d'un train finisseur (2), une vitesse périphérique de la surface supérieure et inférieure de la plaque d'acier (3) et/ou un détartrage de débit d'eau de surfaces supérieure et inférieure de la plaque d'acier est/sont contrôlé(e)s, et dans le cas de l'équipement de refroidissement (5), au moins l'un d'un débit d'eau dans le sens de la largeur de plaque, le sens de la longueur de plaque ou d'un débit d'eau de surfaces supérieure et inférieure de la plaque d'acier (3) est contrôlé.

# FIG. 1

ROLLED STEEL PLATE

S1 — WHOLE AREA QUALITY ASSURANCE OBJECT?

— NO → CURRENT TEMPERATURE MANAGEMENT → (PRODUCT SHIPMENT)

S2 — YES ↓

WHOLE AREA TEMPERATURE MEASUREMENT OF ROLLED STEEL PLATE

→ MANUFACTURING DATA STORAGE (MEASURED TEMPERATURE CHEMICAL COMPOSITION, ETC.)

⇒ DB-TYPE MATERIAL PREDICTION MODEL
- CHEMICAL COMPOSITION
- ROLLING RESULT
- MEASURED TEMPERATURE

QUALITY EVALUATION

⇐ QUALITY STORAGE

S3 — IS MEASURED TEMPERATURE WITHIN TEMPERATURE MANAGEMENT RANGE?

— NO → DETERMINATION OF THE QUALITY OF A NG PORTION — S5

S6 — ACCEPTANCE OF QUALITY?

— NO → RE-TRIAL OF PRODUCT MEASUREMENT IN GOOD QUALITY RANGE (MATERIAL TEST ACCEPTANCE RANGE) — S7

YES ↓

S4 — PRODUCT MEASUREMENT (ACCORDING TO PLAN)

YES → PRODUCT MEASUREMENT — S8

SHIP WHOLE-QUALITY-ASSURED PRODUCT — S9

EP 3 248 702 B1

EP 3 248 702 B1

# FIG. 2

S11 — WHOLE AREA TEMPERATURE MEASUREMENT OF ROLLED STEEL PLATE

↓

S12 — CREATE A LARGE PLATE ROLLING TEMPERATURE MAP

(SHEARING RESULT)

↓

S13 — ALLOCATE A TEST MATERIAL AND A PRODUCT POSITION

↓

S14 — DISPLAY A NG PORTION BY TEMPERATURE JUDGMENT USING A THICK FRAME

↓

S15 — DISPLAY MESH REPRESENTATIVE TEMPERATURE OF NG PORTION BY TEMPERATURE JUDGMENT

↓

S16 — DISPLAY TEMPERATURE MEASUREMENT SCREEN

# FIG. 3

# FIG. 4

S21 — WHOLE AREA TEMPERATURE MEASUREMENT OF ROLLED STEEL PLATE

↓

S22 — CREATE A LARGE PLATE ROLLING TEMPERATURE MAP

↓ — (SHEARING RESULT)

S23 — ALLOCATE A TEST MATERIAL AND A PRODUCT POSITION

↓

S24 — DISPLAY A TEMPERATURE JUDGMENT NG PORTION USING A THICK FRAME

↓

S25 — SUSPEND WHEN NG PORTION EXISTED IN THE SMALL PLATE

↓

S26 — ACCEPTANCE OF TEST MATERIAL OF DB-TYPE CALCULATION MODEL OF MECHANICAL PROPERTY

— NO → NG PROCESSING

YES ↓

SUSPENSION RELEASE

# FIG. 5

# FIG. 6

PC : PROCESS COMPUTER

# FIG. 7

PC : PROCESS COMPUTER

# FIG. 8

MEASUREMENT AND ANALYSIS OF THE UPPER SURFACE WHOLE AREA TEMPERATURE OR/AND LOWER SURFACE WHOLE AREA TEMPERATURE OF STEEL PLATE (S1)

CREATION OF STEEL PLATE (LARGE PLATE) TEMPERATURE MAP
(THE FOLLOWING IS SELECTED AND CREATED AS NECESSARY)
 • UPPER SURFACE WHOLE AREA TEMPERATURE MAP
 • LOWER SURFACE WHOLE AREA TEMPERATURE MAP
 • TEMPERATURE MAP OF PARTICULAR POSITIONS IN THE PLATE-THICKNESS DIRECTION (S2)

ALLOCATION OF A PRODUCT POSITION AND A TEST MATERIAL COLLECTION POSITION (S3)

DISPLAY A REGION DEVIATING FROM THE UPPER AND LOWER LIMITS IN AN ALLOWABLE TEMPERATURE RANGE DETERMINED FROM TEMPERATURE THRESHOLD VALUES USING A THICK FRAME (S4)

(CHANGE OF MATERIAL COLLECTION POSITIONS FOR BEING DIVERTED TO ANOTHER PRODUCT) (S5)

PRODUCT MATERIAL COLLECTION WITHIN TEMPERATURE THRESHOLD VALUES (ALLOWABLE TEMPERATURE RANGE) (S6)

# FIG. 9

| | |
|---|---|
| MEASUREMENT AND ANALYSIS OF THE UPPER SURFACE WHOLE AREA TEMPERATURE OR/AND LOWER SURFACE WHOLE AREA TEMPERATURE OF STEEL PLATE | (S1) |

↓

| | |
|---|---|
| CREATION OF STEEL PLATE (LARGE PLATE) TEMPERATURE MAP (THE FOLLOWING IS SELECTED AND CREATED AS NECESSARY) • UPPER SURFACE WHOLE AREA TEMPERATURE MAP • LOWER SURFACE WHOLE AREA TEMPERATURE MAP • TEMPERATURE MAP OF PARTICULAR POSITIONS IN THE PLATE-THICKNESS DIRECTION | (S2) |

↓

| | |
|---|---|
| ALLOCATION OF A PRODUCT POSITION AND A TEST MATERIAL COLLECTION POSITION | (S3) |

↓

| | |
|---|---|
| DISPLAY A REGION DEVIATING FROM A TEMPERATURE HISTORY ALLOWABLE RANGE | (S4) |

↓

| | |
|---|---|
| (CHANGE OF MATERIAL COLLECTION POSITIONS FOR BEING DIVERTED TO ANOTHER PRODUCT) | (S5) |

↓

| | |
|---|---|
| PRODUCT MATERIAL COLLECTION WITHIN THE TEMPERATURE HISTORY ALLOWABLE RANGE | (S6) |

# FIG. 10

| MEASUREMENT AND ANALYSIS OF THE UPPER SURFACE WHOLE AREA TEMPERATURE OR/AND LOWER SURFACE WHOLE AREA TEMPERATURE OF STEEL PLATE | (S1) |

| CREATION OF STEEL PLATE (LARGE PLATE) TEMPERATURE MAP (THE FOLLOWING IS SELECTED AND CREATED AS NECESSARY) • UPPER SURFACE WHOLE AREA TEMPERATURE MAP • LOWER SURFACE WHOLE AREA TEMPERATURE MAP • TEMPERATURE MAP OF PARTICULAR POSITIONS IN THE PLATE-THICKNESS DIRECTION | (S2) |

| ALLOCATION OF A PRODUCT POSITION AND A TEST MATERIAL COLLECTION POSITION | (S3) |

FIRST DETERMINATION

| DISPLAY A REGION DEVIATING FROM TEMPERATURE THRESHOLD VALUES* USING A THICK FRAME | (S7) |

SECOND DETERMINATION

| DETERMINATION IS MADE WITH A TEMPERATURE HISTORY ALLOWABLE RANGE OF WHICH AT LEAST A PART OF THE ALLOWABLE RANGE IS WIDER THAN THE TEMPERATURE THRESHOLD VALUES*, AND CHANGE MATERIAL COLLECTION POSITIONS FOR BEING DIVERTED TO ANOTHER PRODUCT | (S8) |

| PRODUCT MATERIAL COLLECTION WITHIN THE TEMPERATURE THRESHOLD VALUE (FIRST DETERMINATION) AND WITHIN A TEMPERATURE HISTORY ALLOWABLE RANGE (SECOND DETERMINATION) | (S9) |

*INDIVIDUAL TEMPERATURE THRESHOLD VALUES TO BE SELECTED FROM EACH OF THERMOMETER INSTALLED POSITIONS

# FIG. 11

| MEASUREMENT AND ANALYSIS OF THE UPPER SURFACE WHOLE AREA TEMPERATURE OR/AND LOWER SURFACE WHOLE AREA TEMPERATURE OF STEEL PLATE | (S1) |

| CREATION OF STEEL PLATE (LARGE PLATE) TEMPERATURE MAP (THE FOLLOWING IS SELECTED AND CREATED AS NECESSARY) • UPPER SURFACE WHOLE AREA TEMPERATURE MAP • LOWER SURFACE WHOLE AREA TEMPERATURE MAP • TEMPERATURE MAP OF PARTICULAR POSITIONS IN THE PLATE-THICKNESS DIRECTION | (S2) |

| ALLOCATION OF A PRODUCT POSITION AND A TEST MATERIAL COLLECTION POSITION | (S3) |

FIRST DETERMINATION

| DISPLAY A REGION DEVIATING FROM A TEMPERATURE HISTORY ALLOWABLE RANGE USING A THICK FRAME | (S10) |

SECOND DETERMINATION

| DETERMINATION IS MADE WITH TEMPERATURE THRESHOLD VALUES* OF WHICH AT LEAST A PART OF THE ALLOWABLE RANGE IS WIDER THAN THE TEMPERATURE HISTORY ALLOWABLE RANGE, AND CHANGE MATERIAL COLLECTION POSITIONS FOR BEING DIVERTED TO ANOTHER PRODUCT | (S11) |

| PRODUCT MATERIAL COLLECTION WITHIN THE TEMPERATURE HISTORY ALLOWABLE RANGE (FIRST DETERMINATION) AND WITHIN THE TEMPERATURE THRESHOLD VALUES* (SECOND DETERMINATION) | (S12) |

*INDIVIDUAL TEMPERATURE THRESHOLD TO BE SELECTED FROM EACH OF THERMOMETER INSTALLED POSITIONS

50

# FIG. 12

MEASUREMENT AND ANALYSIS OF THE UPPER
SURFACE WHOLE AREA TEMPERATURE
OR/AND LOWER SURFACE WHOLE AREA
TEMPERATURE OF STEEL PLATE
(S1)

CREATION OF STEEL PLATE (LARGE PLATE)
TEMPERATURE MAP
(THE FOLLOWING IS SELECTED AND CREATED AS
NECESSARY)
• UPPER SURFACE WHOLE AREA
  TEMPERATURE MAP
• LOWER SURFACE WHOLE AREA
  TEMPERATURE MAP
• TEMPERATURE MAP OF PARTICULAR POSITIONS
  IN THE PLATE-THICKNESS DIRECTION
(S2)

ALLOCATION OF A PRODUCT POSITION AND
A TEST MATERIAL COLLECTION POSITION
(S3)

DISPLAY A REGION DEVIATING FROM AN ALLOWABLE
TEMPERATURE RANGE DETERMINED BY
A CALCULATION MODEL OF MECHANICAL
PROPERTY USING A THICK FRAME
(S4)

(CHANGE OF MATERIAL COLLECTION POSITIONS
FOR BEING DIVERTED TO ANOTHER PRODUCT)
(S5)

PRODUCT MATERIAL COLLECTION WITHIN
AN ALLOWABLE TEMPERATURE RANGE
(S6)

# FIG. 13

| | MEASUREMENT AND ANALYSIS OF THE UPPER SURFACE WHOLE AREA TEMPERATURE OR/AND LOWER SURFACE WHOLE AREA TEMPERATURE OF STEEL PLATE | (S1) |

| | CREATION OF STEEL PLATE (LARGE PLATE) TEMPERATURE MAP (THE FOLLOWING IS SELECTED AND CREATED AS NECESSARY) • UPPER SURFACE WHOLE AREA TEMPERATURE MAP • LOWER SURFACE WHOLE AREA TEMPERATURE MAP • TEMPERATURE MAP OF PARTICULAR POSITIONS IN THE PLATE-THICKNESS DIRECTION | (S2) |

| | ALLOCATION OF A PRODUCT POSITION AND A TEST MATERIAL COLLECTION POSITION | (S3) |

| FIRST DETERMINATION | DISPLAY A REGION DEVIATING FROM AN ALLOWABLE TEMPERATURE RANGE DETERMINED WITH TEMPERATURE THRESHOLD VALUES USING A THICK FRAME | (S7) |

| SECOND DETERMINATION | DETERMINATION IS MADE BY THE ABOVE TEMPERATURE MAPS AND A CALCULATION MODEL OF MECHANICAL PROPERTY WHETHER OR NOT THE TEMPERATURE IS WITHIN AN ALLOWABLE TEMPERATURE RANGE OF WHICH AT LEAST A PART OF THE ALLOWABLE RANGE IS WIDER THAN THE TEMPERATURE THRESHOLD VALUES, AND CHANGE MATERIAL COLLECTION POSITIONS FOR BEING DIVERTED TO ANOTHER PRODUCT | (S8) |

| | PRODUCT MATERIAL COLLECTION WITHIN THE ALLOWABLE TEMPERATURE RANGE | (S9) |

# FIG. 14

| | |
|---|---|
| MEASUREMENT AND ANALYSIS OF THE UPPER SURFACE WHOLE AREA TEMPERATURE OR/AND LOWER SURFACE WHOLE AREA TEMPERATURE OF STEEL PLATE | (S1) |

| | |
|---|---|
| CREATION OF STEEL PLATE (LARGE PLATE) TEMPERATURE MAP (THE FOLLOWING IS SELECTED AND CREATED AS NECESSARY) • UPPER SURFACE WHOLE AREA TEMPERATURE MAP • LOWER SURFACE WHOLE AREA TEMPERATURE MAP • TEMPERATURE MAP OF PARTICULAR POSITIONS IN THE PLATE-THICKNESS DIRECTION | (S2) |

| | |
|---|---|
| ALLOCATION OF A PRODUCT POSITION AND A TEST MATERIAL COLLECTION POSITION | (S3) |

FIRST DETERMINATION

| | |
|---|---|
| DISPLAY A REGION DEVIATING FROM AN ALLOWABLE TEMPERATURE RANGE DETERMINED WITH A CALCULATION MODEL OF MECHANICAL PROPERTY FROM THE ABOVE TEMPERATURE MAP USING A THICK FRAME | (S10) |

SECOND DETERMINATION

| | |
|---|---|
| DETERMINATION IS MADE WITH TEMPERATURE THRESHOLD VALUES WHETHER OR NOT THE TEMPERATURE IS WITHIN AN ALLOWABLE TEMPERATURE RANGE OF WHICH AT LEAST A PART OF THE ALLOWABLE RANGE IS WIDER THAN THE TEMPERATURE ALLOWABLE RANGE DETERMINED BY A CALCULATION MODEL OF MECHANICAL PROPERTY, AND CHANGE MATERIAL COLLECTION POSITIONS FOR BEING DIVERTED TO ANOTHER PRODUCT | (S11) |

| | |
|---|---|
| PRODUCT MATERIAL COLLECTION WITHIN THE ALLOWABLE TEMPERATURE RANGE | (S12) |

# FIG. 15

START

DETERMINATION OF A TEMPERATURE REPRESENTATIVE
VALUE ON THE UPPER SURFACE SIDE
(MESH INCLUDING A TEMPERATURE MEASUREMENT
POSITION ON THE LOWER SURFACE SIDE
IS AN OBJECT) — S21

CALCULATION OF A TEMPERATURE CALCULATION VALUE
ON THE LOWER SURFACE SIDE
(INPUT THE TEMPERATURE REPRESENTATIVE VALUE
ON THE UPPER SURFACE SIDE TO A INTRA-PLATE
TEMPERATURE DISTRIBUTION EXPRESSION) — S22

CALCULATION OF ERROR OF THE TEMPERATURE
CALCULATION VALUE
(COMPARISON WITH THE TEMPERATURE
MEASUREMENT VALUE) — S23

DETERMINATION OF A TEMPERATURE REPRESENTATIVE
VALUE ON THE UPPER SURFACE SIDE
(MESH EXCLUDING A TEMPERATURE MEASUREMENT
POSITION ON THE LOWER SURFACE SIDE IS AN OBJECT) — S24

CALCULATION OF A TEMPERATURE CALCULATION
VALUE ON THE LOWER SURFACE SIDE
(INPUT THE TEMPERATURE REPRESENTATIVE VALUE
ON THE UPPER SURFACE SIDE TO A INTRA-PLATE
TEMPERATURE DISTRIBUTION EXPRESSION) — S25

CALCULATION OF A TEMPERATURE CORRECTION VALUE
(MESH EXCLUDING A TEMPERATURE MEASUREMENT
POSITION ON THE LOWER SURFACE SIDE IS AN OBJECT) — S26

CORRECTION OF THE TEMPERATURE CALCULATION
VALUE ON THE LOWER SURFACE SIDE
(USE THE TEMPERATURE CORRECTION VALUE
OBTAINED IN S26) — S27

END

# FIG. 16

```
┌─────────────────────┐
│  ROLLED STEEL PLATE │
└─────────────────────┘
          │
          ▼
┌─────────────────────────┐
│ TEMPERATURE MEASUREMENT │──── S1
│    OF THE STEEL PLATE   │
└─────────────────────────┘
          │
          ▼
┌──────────────────────────────┐
│   WHOLE AREA TEMPERATURE      │──── S2
│ COMPUTATION OF THE STEEL PLATE│
└──────────────────────────────┘
          │
          ▼
```

S3

THE MEASURED AND CALCULATED TEMPERATURES ARE WITHIN A TEMPERATURE MANAGEMENT RANGE?

NO → DETERMINATION OF THE QUALITY OF A NG PORTION ──── S5

YES

S4 PRODUCT MEASUREMENT (ACCORDING TO PLAN)

S6 ACCEPTANCE OF QUALITY?

NO

YES

S7 RE-TRIAL OF PRODUCT MEASUREMENT IN GOOD QUALITY RANGE (MATERIAL TEST ACCEPTANCE RANGE)

PRODUCT MEASUREMENT ──── S8

SHIP WHOLE-AREA-ASSURED PRODUCT ──── S9

# FIG. 17

START

↓

CALCULATE A LOWER SURFACE TEMPERATURE
CALCULATION VALUE FROM AN UPPER SURFACE
TEMPERATURE MEASUREMENT VALUE — S11

↓

CALCULATE ERROR BETWEEN THE CALCULATION
VALUE AND THE MEASUREMENT VALUE AT A LOWER
SURFACE THERMOMETER POSITION — S12

↓

CALCULATE A TEMPERATURE CORRECTION VALUE
BETWEEN THE LOWER SURFACE TEMPERATURE
MEASUREMENT POSITIONS — S13

↓

CORRECT THE LOWER SURFACE TEMPERATURE
CALCULATION VALUE — S14

↓

END

# FIG. 18

# FIG. 19

● ··· LOWER SURFACE TEMPERATURE
MEASUREMENT VALUE

○ ··· LOWER SURFACE TEMPERATURE
CALCULATION VALUE ESTIMATED
FROM UPPER SURFACE TEMPERATURE
MEASUREMENT

# FIG. 20

TEMPERATURE CORRECTION VALUE $\Delta Tw$ AT A WIDTH POSITION W BETWEEN POSITIONS $w_i$, $w_{i+1}$ ($i = 1, 2, \cdots$)
(EXAMPLE OF LINEAR INTERPOLATION)

$$\Delta Tw = \frac{\Delta T_{i+1} - \Delta T_i}{w_{i+1} - w_i} \times (w - w_i) + \Delta T_i$$

TEMPERATURE CALCULATION VALUE $T_{mw}'$ AFTER CORRECTION AT THE WIDTH POSITION W BETWEEN THE POSITIONS $w_i$ AND $w_{i+1}$

($T_{mw}$: LOWER SURFACE TEMPERATURE CALCULATION VALUE FROM UPPER SURFACE MEASUREMENT TEMPERATURE)

$$T_{mw}' = T_{mw} + \Delta Tw$$

# FIG. 21

# FIG. 22

MEASUREMENT LOCATION WITHIN ONE MESH
(UPPER SURFACE)

LONGITUDINAL DIRECTION

WIDTH DIRECTION

UPPER SURFACE TEMPERATURE MEASUREMENT LOCATION CORRESPONDING TO LOWER SURFACE TEMPERATURE MEASUREMENT LOCATION

LOWER SURFACE TEMPERATURE MEASUREMENT POSITION

◯ : LOCATION OF TEMPERATURE REPRESENTATIVE VALUE

# FIG. 23

| CONTROL ROLLING START TEMPERATURE AND FINISHING TEMPERATURE COLLECTING PC | COOLING START TEMPERATURE COLLECTING PC | COOLING STOP TEMPERATURE COLLECTING PC |
|---|---|---|
| 11 | 12 | 13 |

14 — MEASURED TEMPERATURE ANALYZING PC

17 — DEFECTIVE SHAPE PREVENTION

# FIG. 24

MEASURED DATA BY STRAIN INDICATOR

· HEATING FURNACE TEMPERATURE CONTROL

· COOLING EQUIPMENT FLOW CONTROL

· ROLLING ROLL PERIPHERAL-SPEED CONTROL OF UPPER AND LOWER SURFACE OF STEEL PLATE

DEFECTIVE SHAPE PREVENTION — 17

14a

MEASURED TEMPERATURE ANALYZING PC

15

UPPER SURFACE TEMPERATURE COLLECTING PC

LOWER SURFACE TEMPERATURE COLLECTING PC

16

EP 3 248 702 B1

# FIG. 25

→ THREADING DIRECTION

# FIG. 26

| FINISHING MILL (2) | ACCELERATED COOLING EQUIPMENT (5) | ACCELERATED COOLING EQUIPMENT (5) |
|---|---|---|
| UPSTREAM THERMOMETER<br>・SPOT-TYPE RADIATION THERMOMETER (7)<br><br>DOWNSTREAM THERMOMETER<br>・SPOT-TYPE RADIATION THERMOMETER (7a)<br>・SCANNING RADIATION THERMOMETER (6a) | UPSTREAM THERMOMETER<br>・SPOT-TYPE RADIATION THERMOMETER (7b)<br>・SCANNING RADIATION THERMOMETER (6b) | DOWNSTREAM THERMOMETER<br>・SPOT-TYPE RADIATION THERMOMETER (7c, 7d)<br>・SCANNING RADIATION THERMOMETER (6c, 6d) |

PC (11)
CONTROL ROLLING START TEMPERATURE AND FINISHING TEMPERATURE COLLECTING PC

PC (12)
COOLING START TEMPERATURE COLLECTING PC

PC (13)
COOLING STOP TEMPERATURE COLLECTING PC

PC (14)
MEASURED TEMPERATURE ANALYZING PC

# FIG. 27

THREADING DIRECTION

# FIG. 28

| FINISHING MILL (2) | ACCELERATED COOLING EQUIPMENT (5) | ACCELERATED COOLING EQUIPMENT (5) |
|---|---|---|
| DOWNSTREAM THERMOMETER (TRANSPORTATION LINE LOWER SURFACE SIDE) · OPTICAL FIBER RADIATION THERMOMETER (8a) | UPSTREAM THERMOMETER (TRANSPORTATION LINE LOWER SURFACE SIDE) · OPTICAL FIBER RADIATION THERMOMETER (8b) | DOWNSTREAM THERMOMETER (TRANSPORTATION LINE LOWER SURFACE SIDE) · OPTICAL FIBER RADIATION THERMOMETER (8c, 8d) |

PC (11)
CONTROL ROLLING START TEMPERATURE AND FINISHING TEMPERATURE COLLECTING PC

PC (12)
COOLING START TEMPERATURE COLLECTING PC

PC (13)
COOLING STOP TEMPERATURE COLLECTING PC

PC (14)
MEASURED TEMPERATURE ANALYZING PC

# FIG. 29

THREADING DIRECTION

# FIG. 30

| FINISHING MILL (2) | ACCELERATED COOLING EQUIPMENT (5) | ACCELERATED COOLING EQUIPMENT (5) |
|---|---|---|
| DOWNSTREAM THERMOMETER TRANSPORTATION LINE UPPER SURFACE SIDE<br>• SPOT-TYPE RADIATION THERMOMETER (7a)<br>• SCANNING RADIATION THERMOMETER (6a)<br>TRANSPORTATION LINE LOWER SURFACE SIDE<br>• OPTICAL FIBER RADIATION THERMOMETER (8a) | UPSTREAM THERMOMETER TRANSPORTATION LINE UPPER SURFACE SIDE<br>• SPOT-TYPE RADIATION THERMOMETER (7b)<br>• SCANNING RADIATION THERMOMETER (6b)<br>TRANSPORTATION LINE LOWER SURFACE SIDE<br>• OPTICAL FIBER RADIATION THERMOMETER (8b) | DOWNSTREAM THERMOMETER TRANSPORTATION LINE UPPER SURFACE SIDE<br>• SPOT-TYPE RADIATION THERMOMETER (7c, 7d)<br>• SCANNING RADIATION THERMOMETER (6c, 6d)<br>TRANSPORTATION LINE LOWER SURFACE SIDE<br>• OPTICAL FIBER RADIATION THERMOMETER (8c, 8d) |

PC (11)

CONTROL ROLLING START TEMPERATURE AND FINISHING TEMPERATURE COLLECTING PC

PC (12)

COOLING START TEMPERATURE COLLECTING PC

PC (13)

COOLING STOP TEMPERATURE COLLECTING PC

PC (14)

MEASURED TEMPERATURE ANALYZING PC

# FIG. 31

# FIG. 32

→ THREADING DIRECTION

# FIG. 33

| FINISHING MILL (2) | ACCELERATED COOLING EQUIPMENT (5) |
|---|---|
| UPSTREAM THERMOMETER<br>  TRANSPORTATION LINE UPPER SURFACE SIDE<br>    ・SPOT-TYPE RADIATION THERMOMETER (7)<br><br>  TRANSPORTATION LINE LOWER SURFACE SIDE<br>    ・OPTICAL FIBER RADIATION THERMOMETER (8)<br><br>DOWNSTREAM THERMOMETER<br>  TRANSPORTATION LINE UPPER SURFACE SIDE<br>    ・SPOT-TYPE RADIATION THERMOMETER (7a)<br>    ・SCANNING RADIATION THERMOMETER (6a)<br><br>  TRANSPORTATION LINE LOWER SURFACE SIDE<br>    ・OPTICAL FIBER RADIATION THERMOMETER (8a) | DOWNSTREAM THERMOMETER<br>  TRANSPORTATION LINE UPPER SURFACE SIDE<br>    ・SPOT-TYPE RADIATION THERMOMETER (7c, 7d)<br>    ・SCANNING RADIATION THERMOMETER (6c, 6d)<br><br>  TRANSPORTATION LINE LOWER SURFACE SIDE<br>    ・OPTICAL FIBER RADIATION THERMOMETER (8c, 8d) |

PC (11)

CONTROL ROLLING START TEMPERATURE AND FINISHING TEMPERATURE COLLECTING PC

PC (13)

COOLING STOP TEMPERATURE COLLECTING PC

PC (14)

MEASURED TEMPERATURE ANALYZING PC

FIG. 34

# FIG. 35

THREADING DIRECTION

# FIG. 36

# FIG. 37

# FIG. 38

THREADING DIRECTION

# FIG. 39

| ACCELERATED COOLING EQUIPMENT (5) |
| --- |
| UPSTREAM THERMOMETER |
| TRANSPORTATION LINE UPPER SURFACE SIDE |
| · SPOT-TYPE RADIATION THERMOMETER (7b) |
| · SCANNING RADIATION THERMOMETER (6b) |
| TRANSPORTATION LINE LOWER SURFACE SIDE |
| · OPTICAL FIBER RADIATION THERMOMETER (8b) |

| ACCELERATED COOLING EQUIPMENT (5) |
| --- |
| DOWNSTREAM THERMOMETER |
| TRANSPORTATION LINE UPPER SURFACE SIDE |
| · SPOT-TYPE RADIATION THERMOMETER (7c, 7d) |
| · SCANNING RADIATION THERMOMETER (6c, 6d) |
| TRANSPORTATION LINE LOWER SURFACE SIDE |
| · OPTICAL FIBER RADIATION THERMOMETER (8c, 8d) |

PC (12)

COOLING START TEMPERATURE COLLECTING PC

PC (13)

COOLING STOP TEMPERATURE COLLECTING PC

PC (14)

MEASURED TEMPERATURE ANALYZING PC

# FIG. 40

PC (15b)

UPPER SURFACE
TEMPERATURE
COLLECTING PC

PC (12)

COOLING START
TEMPERATURE
COLLECTING PC

PC (16b)

LOWER SURFACE
TEMPERATURE
COLLECTING PC

PC (14)

MEASURED
TEMPERATURE
ANALYZING PC

PC (15c)

UPPER SURFACE
TEMPERATURE
COLLECTING PC

PC (13)

COOLING STOP
TEMPERATURE
COLLECTING PC

PC (16c)

LOWER SURFACE
TEMPERATURE
COLLECTING PC

# FIG. 41

⟶ THREADING DIRECTION

# FIG. 42

| FINISHING MILL (2) |
| --- |
| DOWNSTREAM THERMOMETER |
| TRANSPORTATION LINE UPPER SURFACE SIDE |
| · SPOT-TYPE RADIATION THERMOMETER (7a) |
| · SCANNING RADIATION THERMOMETER (6a) |
| TRANSPORTATION LINE LOWER SURFACE SIDE |
| · OPTICAL FIBER RADIATION THERMOMETER (8a) |

| ACCELERATED COOLING EQUIPMENT (5) |
| --- |
| UPSTREAM THERMOMETER |
| TRANSPORTATION LINE UPPER SURFACE SIDE |
| · SPOT-TYPE RADIATION THERMOMETER (7c, 7d) |
| · SCANNING RADIATION THERMOMETER (6c, 6d) |
| TRANSPORTATION LINE LOWER SURFACE SIDE |
| · OPTICAL FIBER RADIATION THERMOMETER (8c, 8d) |

PC (11)
CONTROL ROLLING START TEMPERATURE AND FINISHING TEMPERATURE COLLECTING PC

PC (13)
COOLING STOP TEMPERATURE COLLECTING PC

PC (14)
MEASURED TEMPERATURE ANALYZING PC

# FIG. 43

# FIG. 44

⟶ THREADING DIRECTION

# FIG. 45

# FIG. 46

# FIG. 47

THREADING DIRECTION

# FIG. 48

| FINISHING MILL (2) | ACCELERATED COOLING EQUIPMENT (5) |
|---|---|
| UPSTREAM THERMOMETER<br>  TRANSPORTATION LINE UPPER SURFACE SIDE<br>   · SPOT-TYPE RADIATION THERMOMETER (7)<br><br>  TRANSPORTATION LINE LOWER SURFACE SIDE<br>   · OPTICAL FIBER RADIATION THERMOMETER (8) | DOWNSTREAM THERMOMETER<br>  TRANSPORTATION LINE UPPER SURFACE SIDE<br>   · SPOT-TYPE RADIATION THERMOMETER (7c, 7d)<br>   · SCANNING RADIATION THERMOMETER (6c, 6d)<br><br>  TRANSPORTATION LINE LOWER SURFACE SIDE<br>   · OPTICAL FIBER RADIATION THERMOMETER<br>    (8c, 8d) |

PC (11)

CONTROL ROLLING START
TEMPERATURE AND
FINISHING TEMPERATURE
COLLECTING PC

PC (13)

COOLING STOP
TEMPERATURE
COLLECTING PC

PC (14)

MEASURED
TEMPERATURE
ANALYZING PC

77

# FIG. 49

PC (11)
CONTROL ROLLING START TEMPERATURE AND FINISHING TEMPERATURE COLLECTING PC

PC (14)
MEASURED TEMPERATURE ANALYZING PC

PC (13)
COOLING STOP TEMPERATURE COLLECTING PC

PC (15a)
UPPER SURFACE TEMPERATURE COLLECTING PC

PC (16a)
LOWER SURFACE TEMPERATURE COLLECTING PC

PC (15c)
UPPER SURFACE TEMPERATURE COLLECTING PC

PC (16c)
LOWER SURFACE TEMPERATURE COLLECTING PC

**EP 3 248 702 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7041303 B
- JP 10005868 A
- JP 2001300627 A
- JP 52117857 A
- JP H02179827 A